# EUROPEAN PATENT APPLICATION

(11) **EP 1 614 730 A1**
(43) Date of publication of application: **11.01.2006**
(21) Application number: 05105519.2
(22) Date of filing: 22.06.2005
(51) Int. Cl.: C09D 11/10

(54) **Photocurable ink-jet ink, ink-jet image forming method and ink-jet recording apparatus using the same**

(30) Priority: 28.06.2004 JP 2004189440; 30.09.2004 JP 2004286699; 17.03.2005 JP 2005077419
(71) Applicant: Konica Minolta Medical & Graphic, Inc., Tokyo 163-0512 (JP)
(72) Inventor: Ishikawa, Wataru, 192-8505, Tokyo (JP); Watanabe, Shinya, 192-8505, Tokyo (JP)
(74) Representative: Gille Hrabal Struck Neidlein Prop Roos

(57) **Abstract**

A photocurable composition containing a photopolymerizable compound, a photoinitiator, a compound selected from the group consisting of a deodorizer, a perfume and an antioxidant.

## Description

This application is based on Japanese Patent Application Nos. 2004-189440, 2004-286699 and 2005-077419, each of which was respectively filed on June 28, 2004, September 30, 2004 and March 17, 2005 in Japanese Patent Office, the entire content of which is hereby incorporated by reference.

### TECHNICAL FIELD

The present invention relates to an actinic radiation curable composition (or called a photocurable composition) incorporating photopolymerizable compounds, an actinic radiation curable ink-jet ink, as well as an image forming method and an ink-jet recording apparatus employing the actinic radiation curable ink-jet ink.

Heretofore, curable compositions which are cured by either actinic energy beams or heat have been put to practical use as paints for plastics, paper, woodwork, and inorganic materials, adhesives, printing inks, printing circuit substrates, and electric insulators. In recent years, enhancement of weather resistance as well as improvement of adhesion property has further been demanded for theses printing inks, paints, and adhesives. Further, listed as ink-jet inks are ultraviolet radiation curable ink-jet inks which are cured by ultraviolet radiation. In recent years, ink-jet systems which employ the above ultraviolet radiation curable ink have attracted an increasing interest due to formation of relatively low unpleasant odors, rapid drying, and recording applicability to recording media which do not absorb ink. For example, Japanese Patent Publication Open to Public Inspection (hereinafter referred to as JP-A) Nos. 6-200204 and 2000-504778 disclose ultraviolet radiation curable inks. In this field, demanded are low viscosity, high strength and flexibility of formed membranes, as well as sufficient adhesion.

Further, in cases in which these inks are employed, the curing speed tends to fluctuate depending on the types of recording materials and used ambiences.

Since ink employing radically polymerizable compounds is subjected to polymerization inhibition due to oxygen, in cases in which the volume of ink droplets is small, curing tends to be inhibited. On the other hand, ink employing cationically polymerizable compounds is not subjected to polymerization inhibition due to oxygen (refer, for example, to Patent Documents 1 - 4), but problems occur in which polymerization is adversely affected by the presence of moisture (humidity) at the molecular level.

Printed matter, which is prepared employing ink which is formed by these photopolymerizable compositions, occasionally generates unpleasant odors due to the aforesaid monomers, and consequently, it has been demanded to lower such unpleasant odors. Further, when employed as a photopolymerization initiator are photolytically acid generating agents such as a salt of B(C₆F₅)₄⁻, PF₆⁻, AsH₆⁻, SbF₆⁻, or CF₃SO₃⁻ of aromatic onium compounds such as diazonium, ammonium, sulfonium, or phosphonium, unpleasant odors are occasionally generated due to decomposition products of these photolytically acid generating agents (or called as photo-acid generating agent), which are generated during irradiation of actinic radiation, whereby improvements have been demanded.

As a countermeasure against unpleasant odors from printed matter, it has been known to incorporate deodorizers (refer, for example, to Patent Document 5), but nothing is disclosed for ink-jet inks. In addition, in cases in which ink-jet printing is performed employing ultraviolet radiation curable inks, it has been newly discovered that when flexibility is provided by varying the types of monomers or their ratio, or by adding plasticizers, unpleasant odors markedly increase.

Further, ultraviolet radiation curable inks result in problems in which during storage, polymerization causes an increase in the viscosity of the ink. Specifically, a slight increase in viscosity of ink-jet inks results in a significant degradation of ink ejection. In order to improve storage stability of ultraviolet radiation curable inks, commonly employed are polymerization inhibitors. Of ultraviolet radiation curable inks, added to radical type inks are radical trapping agents such as hydroquinones, while added to cationic inks are amines to trap generated acids. Specifically, storage stability of cationic inks in a sealed vessel was improved by employing amines. However, it has been newly discovered that improved effects are minimal in vessels exhibiting a high water and air permeability. In order to overcome the above drawbacks, diligent investigation was conducted. As a result, it was newly discovered that it was possible to improve storage stability, even in vessels exhibiting a high water and air permeability, by the addition of antioxidants.
(Patent Document 1) JP-A No. 2001-220526
(Patent Document 2) JP-A No. 2002-188025
(Patent Document 3) JP-A No. 2002-317139
(Patent Document 4) JP-A No. 2003-55449
(Patent Document 5) JP-A No. 2002-212484

### SUMMARY

In view of the foregoing, the present invention was achieved. An object of the present invention is to provide a photocurable composition which generates no unpleasant odor, results in improved image abrasion resistance and folding resistance, minimizes bleeding and viscosity increase during storage, and results in a high curing speed, as well as a photocurable ink-jet ink, an image forming method, and an ink-jet recording apparatus using the same.

An aspect of the present invention is to provide a photocurable ink-jet ink containing a photopolymerizable compound, a photoinitiator, a specific compound to prevent odor of the photocurable ink-jet ink.

### BRIEF DESCRIPTION OF THE DRAWINGS

Fig. 1 is a front view of one example of the structure of the essential parts of the ink-jet recording apparatus of the present invention.
Fig. 2 is a top view of one example of the structure of the essential parts of the ink-jet recording apparatus of the present invention.

### DESCRIPTION OF THE PREFERRED EMBODIMENTS

The above-described object of the present invention was achieved by the following embodiments.
(1) An embodiment of the present invention includes a photocurable composition comprising a photopolymerizable compound, a photoinitiator, a compound selected from the group consisting of a deodorizer, a perfume and an antioxidant.
(2) Another embodiment of the present invention includes a photocurable composition, wherein the photopolymerizable compound is a radical photopolymerizable monomer.
(3) Another embodiment of the present invention includes a photocurable composition, wherein the photopolymerizable compound is an epoxy compound or a compound having an oxetane ring in the molecule.
(4) Another embodiment of the present invention includes a photocurable composition, comprising the antioxidant, wherein the photopolymerizable compound is an epoxy compound or a compound having an oxetane ring in the molecule.
(5) Another embodiment of the present invention includes a photocurable composition, wherein a content of the antioxidant is 0.01 to 1 weight% based on the total weight of the photocurable composition.
(6) Another embodiment of the present invention includes a photocurable composition, wherein the perfume is linalool or geranyl acetate.
(7) Another embodiment of the present invention includes a photocurable composition, wherein a content of linalool or geranyl acetate is 0.01 to 10 weight% based on the total weight of the photocurable composition.
(8) Another embodiment of the present invention includes a photocurable composition, wherein the oxetane ring has a substituent in the 2-position of the oxetane ring.
(9) Another embodiment of the present invention includes a photocurable composition, wherein the epoxy compound is an epoxidized fatty acid ester or an epoxidized fatty acid glyceride.
(10) Another embodiment of the present invention includes a photocurable composition, wherein the epoxy compound is an epoxidized fatty acid ester.
(11) Another embodiment of the present invention includes a photocurable composition, wherein the epoxidized fatty acid ester is represented by Formula (A): 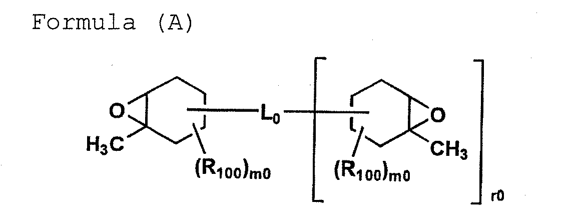 wherein R₁₀₀ is a substituent; m0 is an integer of 0 to 2; r0 is an integer of 1 to 3; and L₀ is a single bond or a linking group of 1 to 15 carbon atoms having a valence of (r0 + 1), provided that the linking group may contain an oxygen atom or a sulfur atom in a main chain of the linking group.
(12) Another embodiment of the present invention includes a photocurable composition, wherein the epoxidized fatty acid ester represented by Formula (A) is further represented by Formulas (I), (II), (III) or (III): 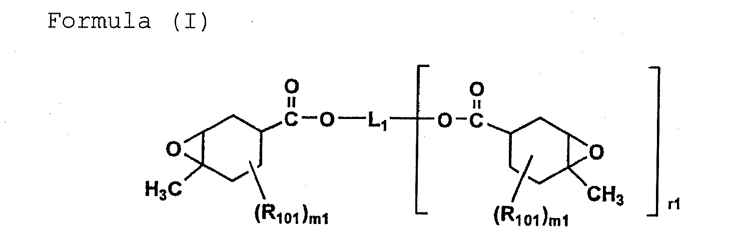 wherein R₁₀₁ is a substituent; m1 is an integer of 0 to 2; r1 is an integer of 1 to 3; and L₁ is a single bond or a linking group of 1 to 15 carbon atoms having a valence of (r1 + 1), provided that the linking group may contain an oxygen atom or a sulfur atom in a main chain of the linking group, 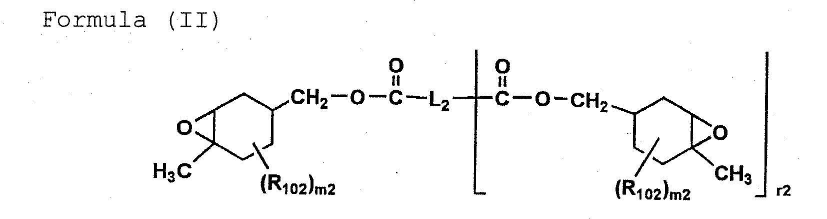 wherein R₁₀₂ is a substituent; m2 is an integer of 0 to 2; r2 is an integer of 1 to 3; and L₂ is a single bond or a linking group of 1 to 15 carbon atoms having a valence of (r2 + 1), provided that the linking group may contain an oxygen atom or a sulfur atom in a main chain of the linking group, 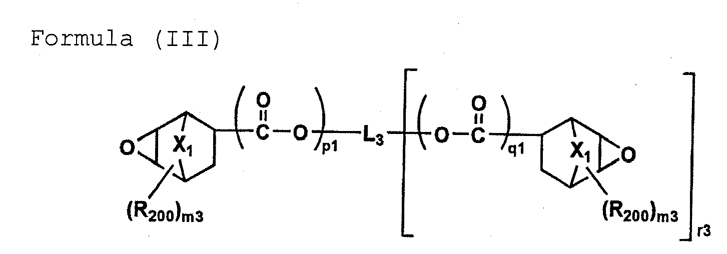 wherein R₂₀₀ is a substituent which is substituted at a position of other than α or β position of an oxirane ring of Formula (III); m3 is an integer of 0 to 2; X₁ is - (CH₂)ₙ₀ -, or - (O) ₙ₀ -, n0 is an integer of 0 or 1; p1 and q1 each is an integer of 0 or 1, with the proviso that both p1 and q1 are not 0 at the same time; r3 is an integer of 1 to 3; and L₃ is a single bond or a linking group of 1 to 15 carbon atoms having a valence of (r3 + 1), provided that the linking group may contain an oxygen atom or a sulfur atom in a main chain of the linking group, 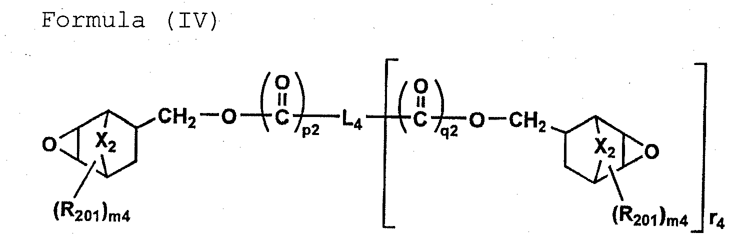 wherein R₂₀₁ is a substituent which is substituted at a position of other than α or β position of an oxirane ring of Formula (IV); m4 is an integer of 0 to 2; X₂ is - (CH₂)ₙ₁ -, or -(O)ₙ₁-, n1 is an integer of 0 or 1; p2 and q2 each is an integer of 0 or 1, with the proviso that both p2 and q2 are not 0 at the same time; r4 is an integer of 1 to 3; and L₄ is a single bond or a linking group of 1 to 15 carbon atoms having a valence of (r4 + 1), provided that the linking group may contain an oxygen atom or a sulfur atom in a main chain of the linking group.
(13) Another embodiment of the present invention includes a photocurable composition, further comprising an alicyclic ester compound having a 4 to 10 membered ring or a cyclic ether compound having a 5 or more membered ring.
(14) Another embodiment of the present invention includes a photocurable composition, wherein the antioxidant is a phenol compound.
(15) Another embodiment of the present invention includes a photocurable composition, wherein the photoinitiator is a photo-acid generating agent having an onium salt structure, and the photo-acid generating agent does not produce benzene by irradiation with active rays.
(16) Another embodiment of the present invention includes a photocurable composition, wherein the photoinitiator is a photo-acid generating agent is a sulfonium salt.
(17) Another embodiment of the present invention includes a photocurable composition, wherein the sulfonium salt is represented by Formulas (1), (2), (3) or (4): 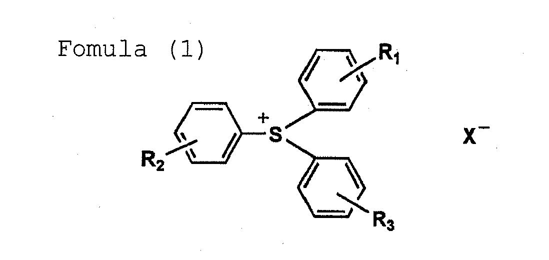 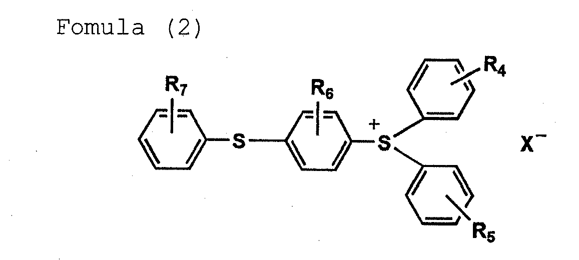 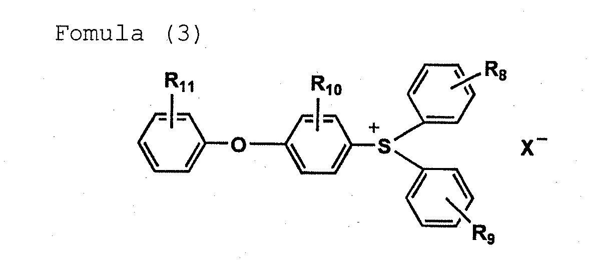 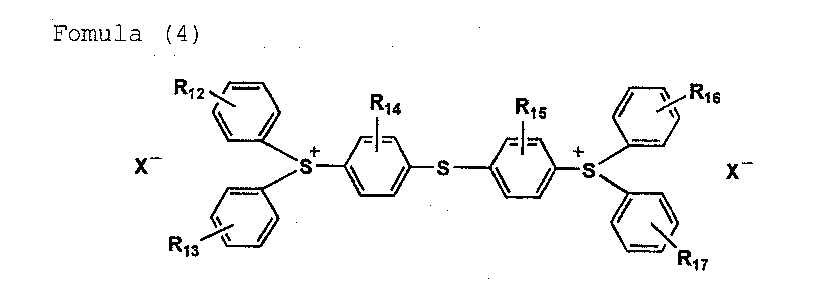 wherein R₁ to R₁₇ each is a hydrogen atom or a substituent, with the proviso that a set of R₁ to R₃, a set of R₄ to R₇, a set of R₈ to R₁₁ and a set of R₁₂ to R₁₇ each is not a hydrogen atom at the same time; and X⁻ is not a nucleophilic anion group.
(18) Another embodiment of the present invention includes a photocurable composition, wherein the sulfonium salt is selected form the group consisting of Formulas (5) to (13): 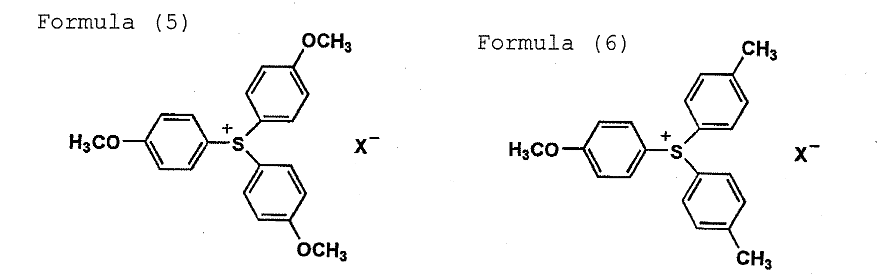 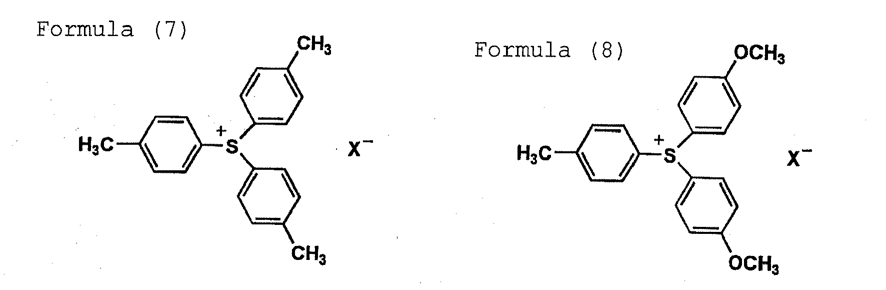 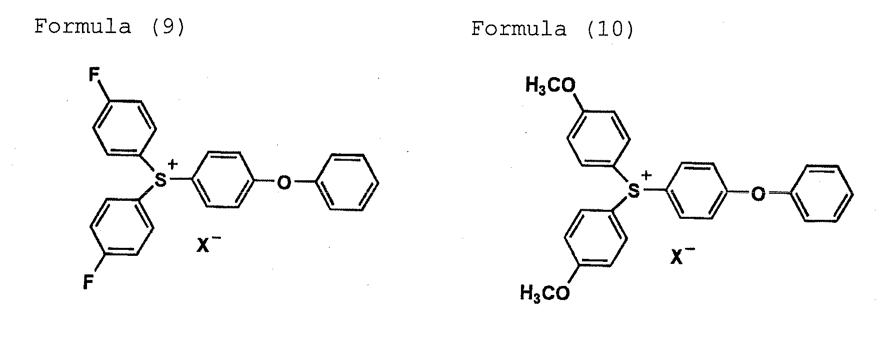 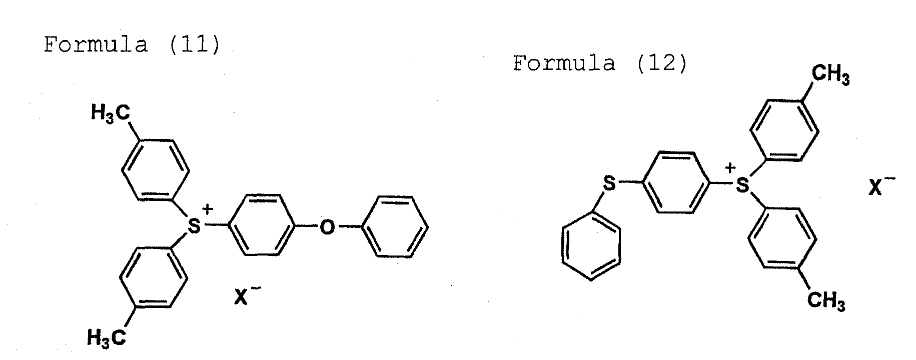 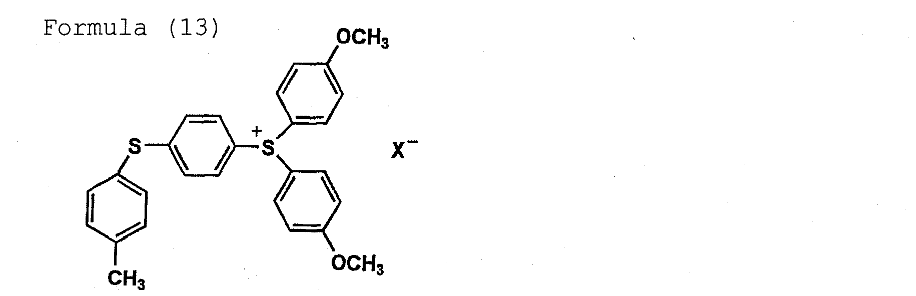 wherein X⁻ is not a nucleophilic anion group.
(19) Another embodiment of the present invention includes a photocurable composition, wherein a viscosity of the photocurable composition at 25 °C is 7 to 40 mPa·s.
(20) Another embodiment of the present invention includes an ink-jet ink comprising the above-described photocurable composition and a pigment.
(21) Another embodiment of the present invention includes a method of forming an image comprising the steps of:
   ejecting droplets of the above-described photocurable composition from a plurality of nozzles of an ink-jet recording head onto a recording sheet to form an image; and
   irradiating the formed image with actinic rays to cure the image,
   wherein the irradiating step is carried out between 0.001 and 1.0 second after the ejected droplets reach the recording sheet.
(22) Another embodiment of the present invention includes a method of forming an image,
   wherein the droplets of the photocurable composition ejected from each nozzle of the ink-jet recording head have a volume of 2 to 20 pl.
(23) Another embodiment of the present invention includes an ink-jet recording apparatus for carrying out the above-described image forming method,
   wherein the photocurable composition and the ink-jet recording head are heated at 35 to 100 °C prior to ejecting the photocurable composition from a plurality of nozzles of the ink-jet recording head.
(24) Another embodiment of the present invention includes an ink-jet recording apparatus for carrying out the above-described image forming method,

wherein the photocurable composition and the ink-jet recording head are heated at 35 to 60 °C prior to ejecting the photocurable composition from a plurality of nozzles of the ink-jet recording head.

It should be understood that no single element of any of the embodiments described herein is essential, and that it is within the contemplation of the invention that one or more elements (or method steps) of one or more embodiments of the invention as described herein may be omitted or their functionality may be combined with that of other elements as a general matter of design choice.

According to the present invention, it is possible to provide an actinic radiation curable composition which generated no unpleasant odor, results in improved image abrasion resistance and folding resistance, minimizes bleeding and viscosity increase in during storage, and results in a high curing speed, as well as an actinic radiation curable ink-jet ink, an image forming method, and an ink-jet recording apparatus using the same.

Deodorizers usable in the present invention are not particularly limited, and preferred are materials capable of eliminating unpleasant odor components containing sulfur via chemical oxidation or substitution employing chemical reactions. Specifically listed are mixtures of malic acid and glyoxal. Further, it is possible to list enzyme based deodorizers utilizing oxidation. Listed as specific examples of these deodorizers may be "BIO C" (produced by Console Corporation) and "YUKODERUSEN" (produced by YUKO Chemical Industries Co., Ltd.).

Further, deodorizers are preferably natural extract components which include extracts from plants of catechins and tannins such as catechin, epigallotechin, gallotechin, epicatechin gallate, epigallocatechin gallate, gallotannin, or ellagitannin, extracts from natural substances such as rosemary, sun flower seeds, raw coffee, tea, grape rinds, grape seeds, or apples, and those incorporating enzymes which oxidize phenolic compounds. Further preferred are polysaccharides represented by chitosan, or plant extract components represented by hinoki oil, dokudami extract, and orange essence oil. These deodorizers may be employed individually or in combinations of a plurality of these types.

The added amount of deodorizers is preferably 0.01 - 20 percent by weight. When the added amount is less than 0.01 percent by weight, sufficient effects are not obtained, while when it exceeds 20 percent by weight, a decrease in membrane strength and curing speed tend to result.

Listed as perfumes usable in the present invention are those listed below.
(1) Essential oils such as grapefruit oil, orange oil, lemon oil, lime oil, nutmeg oil, cassia oil, lavender oil, hinoki oil, fennel oil, ylang-ylang oil, chamomile oil, jasmine oil, hinoki leaf oil, lavender oil, or rosemary oil,
(2) Alcohols such as hexyl alcohol, phenylethyl alcohol (ROSE P), furfuryl alcohol, cyclotene, geraniol-linalool, linalool, 1-menthol, borneol, LAVANDULIOL, hexyl alcohol, cyclotene, maltol, eugenol, or α-phenylethanol,
(3) Aldehydes such as tetradecanal, hexadecanal, octadecanal, benzaldehyde, or furfural,
(4) Aldehydes such as ethyl acetacetate, propyl acetate, amyl acetate, linaryl acetate, benzyl acetate, dimethylbenzylcarbinyl acetate, benzyl propionate, heptanal, octanal, dodecanal, citral, lyral, cyclamen aldehyde, cyclamen aldehyde, or vanillin,
(5) Aromatic compounds such as nootkaton, ethylpyrazine, lemon-deterpene, orange-deterpene, vanillin, ethylvanillin, furfurylmercaptan, borneol, or heliotrope, and
(6) Esters such as ethyl acetate, propyl acetate, amyl acetate, linalyl acetate, benzyl acetate, dimethylbenzylcarbinyl acetate, benzyl propionate, or geranyl acetate.
   Of these, preferred are linalool and geranyl acetate
   In the present invention, it is possible to use composite perfumes, in appropriate combinations of the various types of the above perfumes, such as a banana perfume, a blueberry perfume, a vanilla perfume, a mint perfume, an apple perfume, a peach perfume, a melon perfume, a pineapple perfume, a grape perfume, a lilac perfume, or a jasmine perfume. Further, it is possible to use various types of commercially available formulated perfumes such as a vanilla perfume (VANILLA BVK-3359, produced by Takasago International Corporation), a mint perfume (MINT THP-8148, produced by T. Hasegawa Co., Ltd.), a banana perfume (BANANA T-1510, produced by Yamamoto Perfumery Co., Ltd.), a blueberry perfume (BLUEBERRY V-647, produced by Yamamoto Perfumery Co., Ltd.), or FENNEL OIL N-3707 (produced by Takasago International Corporation).

The amount of these perfumes is commonly in the range of 0.01 - 10 percent by weight with respect to the total actinic radiation curable compositions, but is more preferably in the range of 0.01 - 5 percent by weight. When the content of these perfumes is less than 0.01 percent by weight, it is not possible to smell the perfume, while the amount exceeds 10 percent by weight is not preferred since curing is adversely affected.

Listed as antioxidants usable in the present invention are phenol based antioxidants, phosphite based antioxidants, phophonite based antioxidants, sulfur based antioxidants, and hindered amine based antioxidants. In the present invention, phenol based antioxidants are not particularly limited, and examples include compounds having the following structures as a partial structure, as well as hydroquinones. 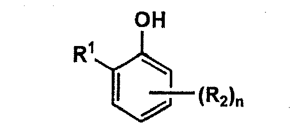
wherein R¹ represents a lower alkyl group, R² represents a hydrogen atom or a lower alkyl group, and n represents an integer of 1 or 2. Of these, it is preferable to use the compounds having the structure represented by General Formula (V) or (VI) below. 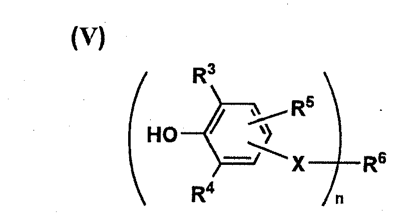
wherein R³ represents a lower alkyl group, R⁴ and R⁵ each represent a hydrogen atom or a lower alkyl group, and n represents 1 - 4. When n represents 1, X represents a simple bond or an alkylenecarbonyloxy group, and when X represent the former, R⁶ represents a hydrogen atom, an alkoxy group, or a lower alkyl group which may be substituted with a alkoxy group or an amino group, while when X represents the latter, R⁶ represents a hydrogen atom or an alkyl group. In cases in which n represent 2 - 4, X represents an alkylenecarbonyloxy group, and R⁶ represents a dihydric - tetrahydric alcohol residual group which may incorporate a heteroatom in the residual group. Further, in cases in which n represents 3, X may be an alkylene group, while R⁶ may be an isocyanuric acid residual group. 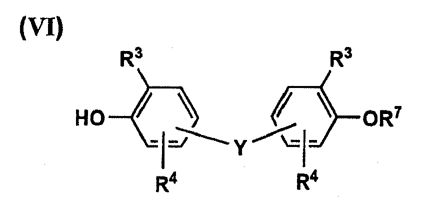
wherein each of R³ and R⁴ is defined as above, Y represents an alkylene group, or a sulfur atom, R⁷ represents a hydrogen atom, an acrylic acid residual group, or a methacrylic acid residual group.

Specific examples of phenol based antioxidants include hydroquinone, methylhydroquinone, t-butylhydroquinone, 2,6-t-butyl-4-methylphenol, octadecyl-3-(3,5-di-t-butyl-4-hydroxyphenyl)propionate, 2,2'-methylenebis(6-t-butyl-4-methylphenol), 2-t-butyl-6-(3-t-butyl-2-ydroxy-5-mehylbenzyl)-4-methylphenyl acrylate, 2-[1-(2-hydroxy-3,5-dit-pnetylphenyl)ethyl]-4,6-t-pentylphenyl acrylate, 4,4'-butylidenebis(6-t-butyl-3-methylphenol), 3,9'-bis[2-{3-(3-t-butyl-4-hydroxy-5-methylphenyl)propionyloxy}-1,1-dimethylethyl]-2,4,8,10-tertaoxaspiro[5.5]undecane, 2-(3,5-di-t-butyl-4-hydroxyanilino)4,6-bis(n-octylthio)-1,3,5-triazine, 2,2'-ethylidenebis(4,6-di-t-butylphenol), 2,2'-ethylidenebis(4-sec-butyl-6-t-butylphenol, 2,2'-thiobis(6-t-butyl-3-methylpenol), 1,1,3-tris(5-t-butyl-4-hydroxy-2-methylphenyl)butane, bis[2-t-butyl-4-methyl-6-(3-t-butyl-2-hydroxy-5-methylnenzyl)phenyl]terephthalate, tetrakis[methylene-3-(3,5-di-t-butyl-4-hydroxyphenyl)propionate]methane, 2,2'-thiodiethylenebis[3-(3,5-di-t-butyl-4-hydroxyphenyl)propionate], triethylene glycol bis[3-(3-t-butyl-4-hydroxy-5-methylphenyl)propionate], 1,6-hexanediolbis[3-(3,5-di-t-butyl-4-hydroxyphenyl)propionate], 1,3,5-tris(3,5-di-t-butyl-4-hydroxybenzyl)isocyanurate, 1,3,5-tris[2-{3-(3,5-di-butyl-4-hydroxyphenylpropionyloxy-2,6-dimethylbenzyl)isocyanurate, and 1,3,5-tris(3,5-di-butyl-4-hydroxybenzyl)-2,4,6-trimethylbenzene.

In the present invention, sulfur based antioxidants are not particularly limited, and exemplified compounds are represented by Structures 2 and 3 below.

S-(CH₂CH₂-COOR₃)₂ (Structure 2)

wherein R₃ represents an alkyl group, having preferably 12 - 18 carbon atoms.

(R⁴S-CH₂CH₂-COOCH₂)₄-C (Structure 3)

wherein R⁴ represents an alkyl group, having preferably 14 carbon atoms.

Listed as specific examples of sulfur based antioxidants are dilauryl-3,3'-thiodipropionate, dimyrystyl-3,3'-thiodipropionate, distearyl-3,3'-thiopropionate, and tetrakis(3-laurylthiopropionyloxymethyl)methane.

In the present invention, phosphite based antioxidants as well as phophonite based antioxidants are not particularly limited, and the compounds represented by Structures 4 - 9 below are exemplified.

P-(OR⁵)₃ (Structure 4)

wherein R⁵ represents an alkyl group or an aryl group which may be substituted. 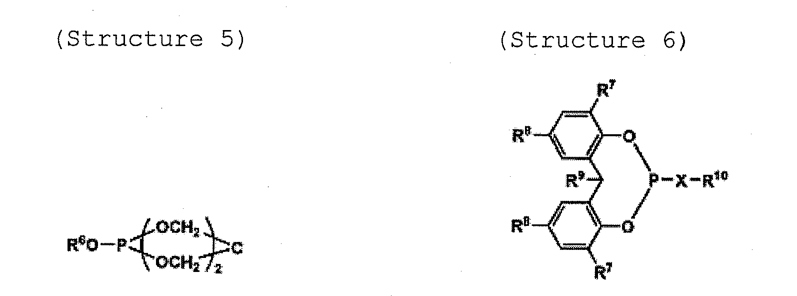
wherein R⁶ represents an alkyl group or an aryl group which may be substituted. Each of R⁷, R⁸, or R⁹ independently represents a hydrogen atom or an alkyl group having 1 - 8 carbon atoms, R¹⁰ represents a fluorine atom or an alkyl group, and X represents a single bond, as well as an oxygen atom or a nitrogen atom. 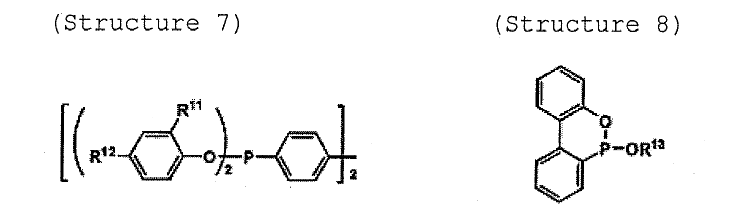
wherein each of R¹¹ and R¹² independently represents a hydrogen atom or an alkyl group, and R¹³ represents a hydrogen atom or an alkyl group. However, in cases in which R¹³ represents a hydrogen atom, 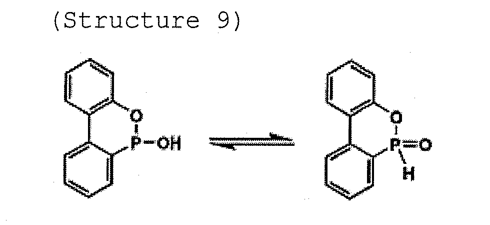 the resonance structure represented by Structure 9 exists, resulting in the formation of phosphinate compounds.

Specific examples of phosphite based and phosphonite based antioxidants include tris(nonylphenyl)phosphite, tris(2,4-di-t-butylphenyl)phosphite, tetrakis(2,4-di-t-buylphenyl)-4,4'-biphenylenephosphonite, bis(2,4-di-t-butylphenyl)pentaerythritol·diphosphite, bis(2,6-di-t-butylphenyl)pentaerythritol·diphosphite·distearyl pentaerythritol·diphosphite, phenyldiisooctylphosphite, phenyldiisodecylphosphite, phenyldi(tridecyl)phosphite, diphenylisooctylphosphite, diphenylisodecylphosphite, diphenyltridecylphosphite, 4,4'-isopropylidenebis(phenyldialkylphosphite, 2,2'-methylenebis(4,6-di-t-butylphenol)octylphosphonite, and 2,2'-ethylidenebis(4,6-dit-butylphenyl)fluorophosphonite.

In the present invention, hindered amine based antioxidants are not particularly limited, and the exemplified compounds have the following structures as a partial structure. 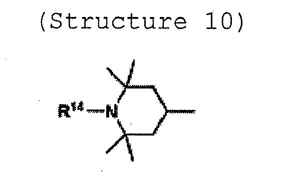
wherein R¹⁴ represents a hydrogen atom or an alkyl group, which may be substituted.

Specific examples of hindered amine based antioxidants include bis(2,2,6,6-tetramethyl-4-piperidyl)sebacate, bis(N-methyl-2,2,6,6-tetramethyl-4-piperidyl)sebacate, N,N'-bis(2,2,6,6,-tetramethyl-4-piperidyl)-1,6-hexamethylenediamine, 2-methyl-2-(2,2,6,6-tetramethyl-4-pieridyl)amino-N-(2,2,6,6-tetramethyl-4-pieridyl)propioneamide, tetrakis(2,2,6,6-tetramethyl-4-piperidyl)(1,2,3,4-butanetetracarboxylate, poly[{6-(1,1,3,3-tetramethylbutyl)imino-1,3,5-triazine-2,4-diyl}{(2,26,6-tetramethyl-4-piperidyl)imino}hexamethyl{(2,2,6,6-tetramethyl-4-piperidyl)imino}], poly[(6-morpjolino-1,3,5-triazine-2,4-diyl){2,2,6,6-tetramethyl-4-piperidyl}imino]hexamethin{(2,2,5,6-tetramethyl-4-pieridyl)imino}), condensation polymerization products of dimethyl succinate with 1-(2-hydroxyethyl)-4-hydroxy-2,2,6,6-tetramethylpiperidine, and N,N'-4,7-tetrakis[4,6-bis{N-butyl-N-(1,2,2,6,6-pentamethyl-4-piperidyl)amino}-1,3,5-triazine-2-yl]-4,7-diazadecane-1,10-diamine.

Listed as other antioxidants may, for example, be antioxidants described in JP-A Nos. 57-74192, 57-87989, and 60-72785, hydrazides described in JP-A No. 61-154989, hindered amine based antioxidants described in JP-A No. 61-146591, nitrogen-containing heterocyclic mercapto based compounds described in JP-A No. 61-177279, thioether based antioxidants described in JP-A Nos. 1-115677 and 1-36478, specifically structured hindered phenol based antioxidants described in JP-A No. 1-36480, ascorbic acids described in JP-A Nos. 7-195824 and 8-150773, zinc sulfate described in JP-A No. 7-149037, thiocyanates described in JP-A No. 7-314882, thiourea derivatives described in JP-A No. 7-314883, various types of sugars described in JP-A Nos. 7-276790 and 8-108617, phosphoric acid based antioxidants described in JP-A No. 8-118791, nitrites, sulfites, and thiosulfates described in JP-A 8-300807, as well as hydroxylamine derivatives described in JP-A No. 2000-263928. Further, employed may be polymerization condensation products of dicyandiamide with polyalkylene polyamine, described in JP-A No. 2000-263928.

It is possible to synthesize antioxidants according to the present invention employing the methods known in the art, and they are readily available on the market.

In the present invention, it is preferable that phenol based antioxidants are employed as an antioxidant. Further it is more preferable that phenol based antioxidants are used together with phosphite based antioxidants, phosphite based antioxidants, or sulfur based antioxidants. The added amount of these antioxidants is commonly 0.01 - 1 percent by weight with respect to the total ink, but is preferably 0.05 - 0.5 percent by weight. When the added amount is at most 0.05 percent by weight, it is not possible to obtain the desired effects of the present invention, while when it exceeds 5 percent by weight, curability of actinic radiation curable compositions is degraded.

Radically polymerizable compounds employed in the ink of the present invention are those having an ethylenic unsaturated bond. Any compounds are acceptable as long as they are compounds having at least one radically polymerizable unsaturated bond in the molecule. Examples include compounds in the form of monomers, oligomers, or polymers. The radically polymerizable compounds may be employed singly or in combinations of at least two types at any appropriate ratio which improves the targeted characteristics.

Listed as examples of radically polymerizable ethylenic unsaturated compounds are unsaturated carboxylic acids such as acrylic acid, methacrylic aid, itaconic acid, crotonic acid, isocrotonic acid, or maleic acid and salts thereof; esters, urethane, amides and anhydrides thereof; acrylonitrile, and styrene; as well as radically polymerizable compounds such as various unsaturated polyesters, unsaturated polyethers, unsaturated polyamides, or unsaturated urethanes.

Specific examples include acrylic acid derivatives such as 2-ethylhexyl acrylate, 2-hydroxyethyl acrylate, butoxyethyl acrylate, carbitol acrylate, cyclohexyl acrylate, tetrahydrofurfuryl acrylate, pentaerythritol triacrylate, benzyl acrylate, bis(4-acryloxypolyethoxyphenyl)propane, neopentyl glycol diacrylate, 1,6-hexanediol diacrylate, ethylene glycol diacrylate, diethylene glycol diacrylate, triethylene glycol diacrylate, tetraethylene glycol diacrylate, polyethylene glycol diacrylate, polypropylene glycol diacrylate, dipentaerythritol tetraacrylate, pentaerythritol tetraacrylate, trimethylolpropane acrylate, tetramethylolmethane tetraacrylate, oligoester acrylate, N-methylolacrylamide, diacetone acrylamide, or epoxyacrylate; methacryl derivatives such as methyl methacrylate, n-butyl methacrylate, 2-ethylhexyl methacrylate, lauryl methacrylate, allyl methacrylate, glycidyl methacrylate, benzyl methacrylate, dimethyl aminomethacrylate, 1,6-hexanediol methacrylate, ethylene glycol dimethacrylate, triethylene glycol dimethacrylate, polyethylene glycol dimethacrylate, polypropylene glycol dimethacrylate, trimethylolethane trimethacrylate, trimethylolpropane trimethacrylate, or 2,2-(bis(4-methacryloxypolyethoxyphenyl))propane; and derivatives of allyl compounds such as allyl glycidyl ether, diallyl phthalate, or triallyl trimellitate. Further, it is possible to use commercially available products, described in "Kakyozai Handbook (Crosslinking Agent Handbook), edited by Shinzo Yamashita (1981, Taisei Sha), "UV·EB Koka Handbook (Genryo Hen) (UV·EB Curing Handbook (Raw Material Part))", edited by Kiyonori Kato (1985, Kobunshi Kanko Kai), "UV·EB Koka Gijutsu no Oyo to Shijo (Application of UV·EB Curing Technology and Its Market)", edited by Rado Tekku Kenkyu Kai, page 79 (1989, CMC), and Eiichiro Takiyama, "Polyester Jushi Handbook (Polyester Resin Handbook)" (1988, Nikkan Kogyo Shinbun Sha), as well as radically polymerizable or crosslinkable monomers, oligomers, and polymers known in the prior art. The added amount of the above radically polymerizable compounds is preferably 1 - 97 percent by weight and is more preferably 30 - 95 percent by weight.

Radical polymerization initiators include triazine derivatives described in Japanese Patent Publication Nos. 59-1281 and 61-9621, and Japanese Patent Publication Open to Public Inspection (hereinafter referred to as JP-A) No. 60-60104; organic peroxides described in JP-A Nos. 59-1504 and 61-243807; diazonium compounds described in Japanese Patent Publication Nos. 43-23684, 44-6413, and 47-1604, and U.S. Patent No. 3,567,453; azide compounds described in U.S. Patent Nos. 2,848328, 2,852,379, and 2,940,853; orthoquinone diazides described in Japanese Patent Publication Nos. 36-22062, 37-13109, 38-18015, and 45-9610; various onium compounds described in Japanese Patent Publication No. 55-39162, JP-A No. 59-14023, and "Macromolecules", Volume 10, page 1307 (1977); azo compounds described in JP-A No. 59-142205; metal arene complexes described in JP-A No. 1-54440, European Patent Nos. 109,851 and 126,712, and J. Imaging Science Volume 30, page 174 (1986); (oxo)sulfonium organic boron complexes described in JP-A No. 4-56831 and Japanese Patent Application No. 4-89535; titanocenes described in JP-A No. 61-151197; transition metal complexes containing transition metals such as ruthenium described in "Coordination Chemistry Review" Volume 84, pages 85 - 277 (1988) and JP-A No. 2-182701; 2,4,5-triarylimidazole dimers and carbon tetrabromide described in JP-A No. 3-209477; as well as organic halogen compounds described in JP-A No. 59-107344. It is preferable that these polymerization initiators are incorporated in a range of 0.01 - 10 parts by weight with respect to 100 parts by weight of the compounds having a radically polymerizable ethylenic unsaturated bond.

An oxetane compound of the present invention will be described.

### (A compound having a substituent at the 2-position of the oxetane ring in the molecule)

In the present invention, an oxetane compound has preferably an oxetane ring represented by Formula (1) in the molecule. 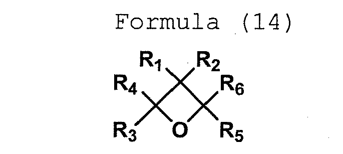 wherein, R₁ - R₆ each represents a hydrogen atom or a substituent, however, at least one of the groups represented by R3 - R6 is a substituent.

In Formula (14), R₁ - R₆ each represents a hydrogen atom, a fluorine atom or an alkyl group having 1 - 6 carbon atoms (e.g., a methyl group, an ethyl group, a propyl group or a butyl group), an fluorinated alkyl group having 1 - 6 carbon atoms, an ally group, an aryl group (e.g., a phenyl group, a naphtyl group, a furyl group or a thienyl group. These may further have a substituent.

### (An compound having an oxetane ring in the molecule)

Among compounds represented by Formula (14), a more preferable compound is represented by Formulas (15) - (18) described below.

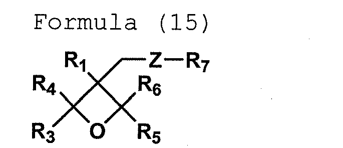

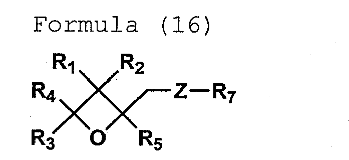

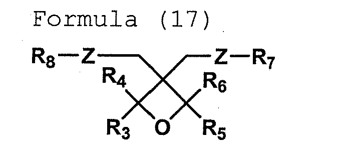

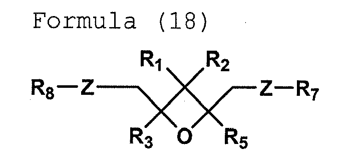

In Formula (15) to (18), R₁ - R₆ each represents a hydrogen atom or a substituent, R₇ and R₈ each represents a substituent, Z represent independently an oxygen atom or a sulfur atom, or a divalent hydrocarbon group which may have an oxygen atom or a sulfur atom in the main chain.

In Formula (15) to (18), the substituents represented by R₁ - R₆ designate the same substituent as by R₁ - R₆ in Formula (14).

R₇ and R₈ in Formula (15) to (18) each represents an alkyl group having 1 - 6 carbon atoms (e.g., a methyl group, an ethyl group, a propyl group or a butyl group), an alkenyl group having 1 - 6 carbon atoms (e.g., a 1-propenyl group, a 2-propenyl group, a 2-methyl-1-propenyl group, a 2-methyl-2-propenyl group, a 1-butenyl group, a 2-butenyl group, or a 3-butenyl group), an aryl group (e.g., a phenyl group, a benzyl group, a fluorobenzyl group, a methoxybenzyl group or a phenoxybenzyl group), an alkylcarbonyl group having 1 - 6 carbon atoms (e.g., a propylcarbonyl group, a butylcarbonyl group, or a pentylcarbonyl group), an alkoxycarbonyl group having 1- 6 carbon atoms (e.g., an ethoxycarbonyl group, a propoxycarbonyl group, or a butoxycarbonyl group), an alkylcarbamoyl group having 1 - 6 carbon atoms (e.g.,a propylcarbamoyl group or a butylpentylcarbamoyl group, or an alkoxy carbamoyl group having 1 - 6 carbon atoms (e.g., an ethoxycarbamoyl group).

Listed examples of Z in Formulas (15) to (18) are, an alkylene group (e.g. ethylene group, trimethylene group, tetramethylene group, propylene group, ethylethyelene group, pentamethyelene group, hexamethyelene group, heptamethylene group, octamethylene group, nanomethyelene group, decamethyelen group); an alkenylene group (e.g. vinylene group, propenylene group); and an alkynylene group (e.g. ethynylene group, 3-pentynylene group). The carbon atom in the aforementioned alkylene group, alkenylene group and alkynylene group may be replaced with an oxygen atom or a sulfur atom.

Among the substituents mentioned above, a preferable group for R₁ is a lower alkyl group (e.g. methyl group, ethyl group, and propyl group), a more preferable group is an ethyl group.

Preferably groups for R₇ and R₈ are, propyl group, butyl group, phenyl group or benzyl group.

Z is preferably a hydrocarbon group without containing an oxygen atom or a sulfur atom (e.g. alkylene group, alkenylene group or alkynylene group).

### (An oxetane compound having at least two oxetane groups in the molecule)

In the present invention, a compound represented by Formulas (19) and (20) described below can be used.

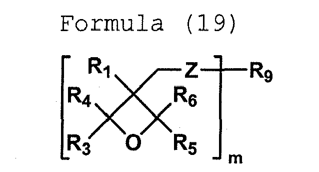

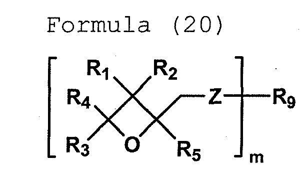

In Formulas (19) and (20), Z designates the same as Z in Formulas (15) to (18); and m represents 2, 3, or 4.

R₁ - R₆ each represents a hydrogen atom, a fluorine atom or an alkyl group having 1 - 6 carbon atoms (e.g., a methyl group, an ethyl group, a propyl group or a butyl group), an fluorinated alkyl group having 1 - 6 carbon atoms , an ally group, an aryl group, a furyl group. In Formulas (19), at least one of R₃ - R₆ is a substituent.

R₉ represents a straight or branched alkylene group having 1 - 12 carbon atoms, or a divalent group represented by Formulas (22), (23) or (24).

Examples of branched alkylene groups having 1 - 12 carbon atoms are represented by Formula (21) described below. 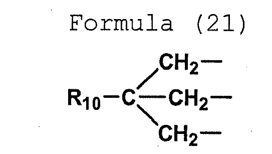 wherein R₁₀ represents a lower alkyl group (e.g., a methyl group, an ethyl group, or a propyl group).

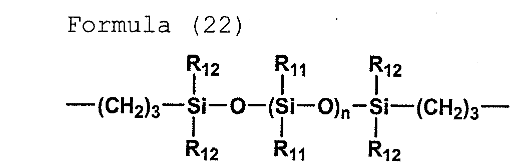

In Formula (22), n represents 0 or an integer of 1 - 2,000, R₁₂ represents an alkyl group having 1 - 10 carbon atoms or the group represented by Formula (25) described below.

R₁₁ represents an alkyl group having 1 - 10 carbon atoms (e.g., a methyl group, an ethyl group, a propyl group, a butyl group.

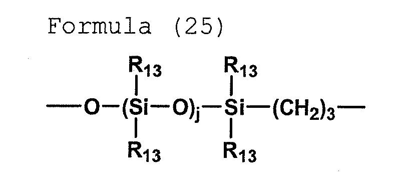

In Formula (12), j represents 0 or an integer of 1 - 100, and R₁₃ represents an alkyl group having 1 - 10 carbon atoms (e.g., a methyl group, an ethyl group, a propyl group, a butyl group, a pentyl group, a hexyl group, a heptyl group, an octyl group, or a nonyl group).

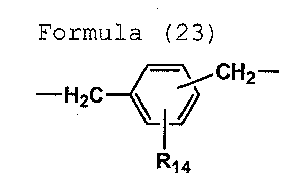

In Formula (23), R₁₄ represents a hydrogen atom, an alkyl group having 1 - 10 carbon atoms (e.g., a methyl group, an ethyl group, a propyl group, a butyl group), an alkoxy group having 1 - 10 carbon atoms (e.g. a methoxy group, an ethoxy group, a propoxy group, a butoxy group, and a pentoxy group), a halogen atom (e.g., a fluorine atom, a chlorine atom, a bromine atom, or an iodine atom), a nitro group, a cyano group, a mercapto group, an alkoxycarbonyl group of lower alkyl number (e.g., a methyloxycarbonyl group, an ethyloxycarbonyl group, or a butyloxycarbonyl group), or a carboxyl group.

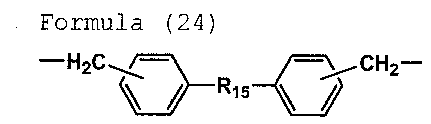

In Formula (24), R₁₅ represents an oxygen atom, a sulfur atom, -NH-, -SO-, -SO₂-, -CH₂-, -C(CH₃)₂-, or -C(CF₃)₂-.

Embodiments of the preferred partial structure of compounds having an oxetane ring employed in the present invention are as follows. For example, in aforesaid Formulas (19) and (20), R₁ is preferably a lower alkyl group (e.g., a methyl group, an ethyl group, or a propyl group), and is more preferably an ethyl group. Further, preferably employed as R₉ is a hexamethylene group or a group in which R₁₄ is a hydrogen atom in aforesaid Formula (23).

In aforesaid Formula (21), it is preferable that R₁₀ is an ethyl group, R₁₂ and R₁₃ each is a methyl group, and Z is a hydrocarbon group which contains neither an oxygen atom nor a sulfur atom.

Further, listed as one example of preferred embodiments of compounds having an oxetane ring according to the present invention is the compound represented by Formula (26) described below. 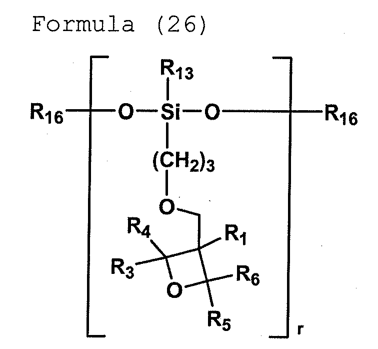 wherein r represents an integer of 25 - 200; R₁₆ represents an alkyl group having 1 - 4 carbon atoms (e.g., a methyl group, an ethyl group, a propyl group, or a butyl group), or a trialkylsilyl group; R₁, R₃, R₅, and R₆ each is the same as a substituent represented by each of R₁ - R₆ in aforesaid Formula (1), however, at least one of R₃ - R₆ is a substituent.

Specific examples of compounds having an oxetane ring, in which position 2 is substituted, are shown as Exemplified Compounds 1 - 13. However, the present invention is not limited thereto.
1: trans-3-tert-butyl-2-phenyloxetane
2: 3,3,4,4-tetramethyl-2,2-diphenyloxetane
3: di[3-ethyl(2-methoxy-3-oxetanyl)]methyl ether
4: 1,4-bis(2,3,4,4-tetramethyl-3-ethyl-oxetanyl)butane
5: 1,4-bis(3-methyl-3-ethyloxetanyl)butane
6: di(3,4,4-trimethyl-3-ethyloxetanyl)methyl ether
7: 3-(2-ethyl-hexyloxymethyl)-2,2,3,4-tetramethyloxetane
8: 2-(2-ethyl-hexyloxy)-2,3,3,4,4-pentamethyl-oxetane
9: 4,4'-bis[(2,4-dimethyl-3-ethyl-3-oxetanyl)methoxy]biphenyl
10: 1,7-bis(2,3,3,4,4-pentamethyl-oxetanyl)heptane
11: oxetanyl silsesquioxane
12: 2-methoxy-3,3-dimethyloxane
13: 2,2,3,3-tetramethyloxetane
14: 2-(4-methoxyphenyl)-3,3-dimethyloxetane
15: di[2-(4- methoxyphenyl)-3-methyloxetane-3-yl]ether

It is possible to synthesize the compounds according to the present invention, which have an oxetane ring in which at least position 2 is substituted, with reference to publications described below.
(1) Hu Xianming, Richard M. Kellogg, Synthesis, 533 - 538, May (1995)
(2) A. O. Fitton, J. Hill, D. Ejane, R. Miller, Synth., 12, 1140 (1987)
(3) Toshiro Imai and Shinya Nishida, Can. J. Chem. Vol. 59, 2503 - 2509 (1981)
(4) Nobujiro Shimizu, Shintaro Yamaoka, and Yuho Tsuno, Bull. Chem. Soc. Jpn., 56, 3853 - 3854 (1983)
(5) Walter Fisher and Cyril A. Grob, Helv. Chim. Acta., 61, 2336 (1987)
(6) Chem. Ber. 101, 1850 (1968)
(7) "Heterocyclic Compounds with Three- and Four-membered Rings", Part Two, Chapter IX, Interscience Publishers, John Wiley & Sons, New York (1964)
(8) Bull. Chem. Soc. Jpn., 61, 1653 (1988)
(9) Pure Appl. Chem., A29 (10), 915 (1992)
(10) Pure Appl. Chem., A30 (2 & amp;3), 189 (1993)
(11) Japanese Patent Application Open to Public Inspection No. 6-16804
(12) DE 10221858

### (Content in Photocurable Ink)

The amount of compounds according to the present invention, which have an oxetane ring in which at least position 2 is substituted, in a photocurable ink is preferably 1 - 97 percent by weight, and is more preferably 30 - 95 percent by weight.

### (Use of oxetane compounds in combination with other monomers)

Further, compounds according to the present invention, which have oxetane ring(s) in which at least position 2 is substituted, may be employed individually or in combinations with two types which have different structures. Further, the aforesaid compound may be employed in combination with photopolymerizable compounds such as photopolymerizable monomers or polymerizable monomers described below. When employed in combinations, it is preferable that a mixture is prepared so that the amount of compounds having oxetane ring(s) in the aforesaid mixture is adjusted to 10 - 98 percent by weight. Still further, it is preferable that the amount of other photopolymerizable compounds such as photopolymerizable monomers and polymerizable monomers is adjusted to 2 - 90 percent by weight.

### (An oxetane compound having a substituent only at the 3-position of the oxetane ring in the molecule)

In the present invention, a known oxetane compound can be used in combination with an oxetane compound having a substituent at the 2-position. Preferable oxetane compound is an oxetane compound having a substituent only at the 3-position of the oxetane ring in the molecule.

Examples of an oxetane compound having a substituent only at the 3-position of the oxetane ring in the molecule are disclosed in JP-A Nos. 2001-220526 and 2001-310937.

An oxetane compound having a substituent only at the 3-position of the oxetane ring in the molecule is represented by Formula (27).

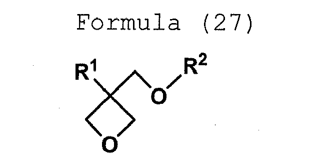

In the Formula (27), R¹ is a hydrogen atom, alkyl group having 1 - 6 carbon atoms such methyl group, ethyl group, propyl group or butyl group, fluoro-alkyl group having 1 to 6 carbon atoms, allyl group, aryl group, furyl group, or thienyl group. R² is an alkyl group having 1 to 6 carbon atoms such as methyl group, ethyl group, propyl group or butyl group; alkenyl group having 2 to 6 carbon atoms such as 1-propenyl group, 2-propenyl group, 2-methyl-1-propenyl group, 2-methyl-2-propenyl group, 1-butenyl group, 2-butenyl group or 3-butenyl group; a group having aromatic ring such as phenyl group, benzyl group, fluoro-benzyl group, methoxybenzyl group or phenoxy-ethyl group; alkyl carbonyl group having 2 to 6 carbon atoms such as ethyl carbonyl group, propyl carbonyl group or butyl carbonyl group; alkoxy carbonyl group having 2 to 6 carbon atoms such as ethoxy carbonyl group, propoxy carbonyl group or butoxy carbonyl group; N-alkyl carbamoyl group having 2 to 6 carbon atoms such as ethyl carbamoyl group, propyl carbamoyl group, butyl carbamoyl group or pentyl carbamoyl group. As the oxetane compound used in the present invention, it is particularly preferable that the compound having one oxetane ring is used, because the obtained composition is excellent in the coking property, and the operability is excellent in the low viscosity.

Next, as the compound having two oxetane rings, the compounds shown by the following Formula (28) are listed.

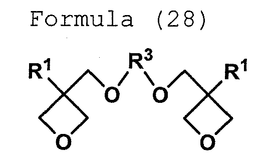

In the Formula (28), R¹ is the same group as the group shown in the above-described Formula (27). R³ is, for example, a linear or branching alkylene group such as ethylene group, propylene group or butylene group; linear or branching poly (alkylene-oxy) group such as poly (ethylene oxy) group or poly (propylene oxy) group; linear or branching un-saturated hydrocarbon group such as propenylene group, methyl propenylene group or butenylene group; carbonyl group; alkylene group including carbonyl group; alkylene group including carboxyl group; alkylene group including carbamoyl group.

Further, R³ may also be a polyvalent group selected from the group shown by the following Formulas (29), (30) and (31).

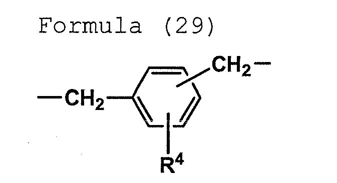

In the Formula (29), R⁴ is a hydrogen atom, an alkyl group having 1 to 4 carbon atoms such as methyl group, ethyl group, propyl group or butyl group, or alkoxy group having 1 to 4 carbon atoms such as methoxy group, ethoxy group, propoxy group or butoxy group, or halogen atom such as chloride atom or bromine atom, nitro group, cyano group, mercapto group, lower alkyl carboxyl group such as the group having 1 to 5 carbon atoms, carboxyl group, or carbamoyl group.

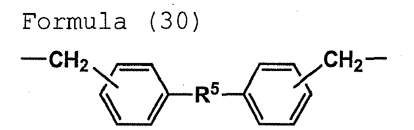

In the Formula (30), R⁵ is oxygen atom, sulfide atom, methylene group, -NH-, -SO-, -SO₂-, -C(CF₃)₂-, or -C(CH₃)₂-.

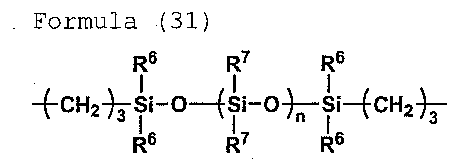

In the Formula (31), R⁶ is an alkyl group having 1 to 4 carbon atoms such as methyl group, ethyl group, propyl group or butyl group, or aryl group. Numeral n is an integer of 0 - 2000. R⁷ is an alkyl group having 1 to 4 carbon atoms such as methyl group, ethyl group, propyl group or butyl group, or aryl group. R⁷ is also a group selected from the group shown by the following Formula (32).

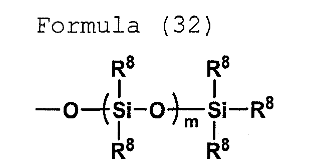

In the Formula (32), R⁸ is an alkyl group having 1 to 4 carbon atoms such as methyl group, ethyl group, propyl group or butyl group, or aryl group. Numeral m is an integer of 0 - 100.

As a specific example of the compound having 2 oxetane rings, the compounds shown by the following structural formulas are listed.

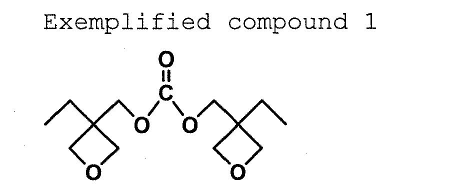

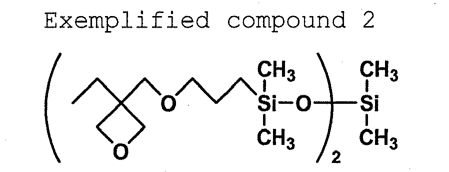

Exemplified compound 1 shown by the above structural formula is a compound represented by Formula (28) in which R¹ is an ethyl group, and R³ is a carboxy group.

Exemplified compound 2 shown by the above structural formula is a compound represented by Formula (28) in which each R¹ is an ethyl group, R³ is represented by Formula (31), R⁶ is R⁷ are a methyl group, and n is 1.

Among the compound having 2 oxetane rings, as a preferable example except for the above-described compounds, there are compounds shown by the following Formula (33). In the Formula (33), R¹ is the same group as in the Formula (27).

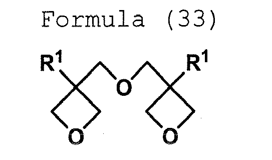

As the compounds having 3 - 4 oxetane rings, the compounds shown in the following Formula (34) are listed.

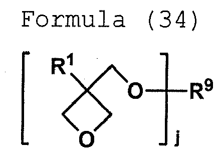

In the Formula (34), R¹ is the same group as in the Formula (27). R⁹ is, for example, a branching alkylene group having 1 to 12 carbon atoms such as groups shown by the following Formulas A-C, or a branching poly(alkylene oxy) group such as group shown by the following Formula D. j is an integer of 3 or 4.

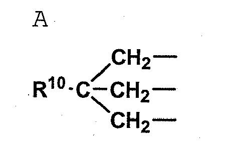

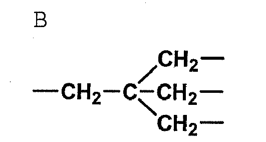

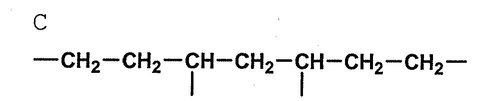

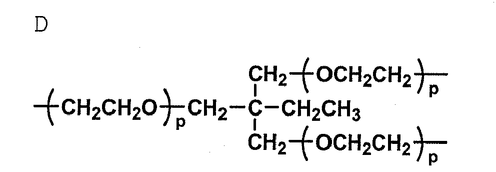

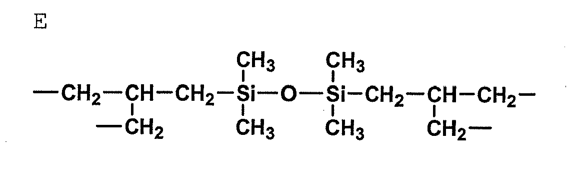

In Formula A, R¹⁰ is a lower alkyl group such as a methyl, ethyl, or propyl group. In Formula D, p is an integer of 1 to 10.

As the specific example of the compound having 3 to 4 oxetane rings, the compound shown in the following Exemplified compound 3 is cited.

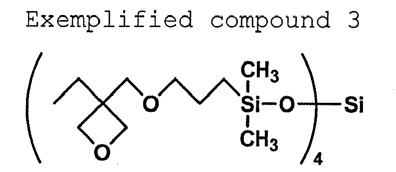

Furthermore, as an example of the compounds having 1 - 4 oxetane rings except the above examples, there are compounds shown in the following Formula (35).

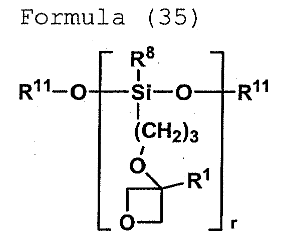

In the Formula (35), R⁸ is the same group as in the Formula (32). R¹¹ is alkyl group having 1 to 4 carbon atoms such as methyl group, ethyl group, propyl group or butyl group, or tri-alkyl silyl group, and numeral r is 1 - 4.

As preferable specific examples of the oxetane compounds used in the present invention, there are compounds 4-6 shown below.

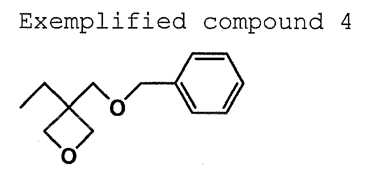

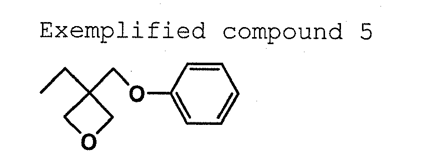

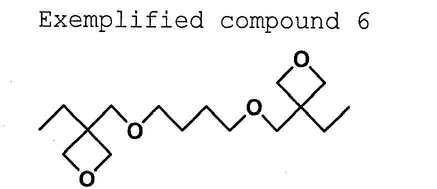

The production method of the compounds having the oxetane ring is not particularly limited, and it may be conducted according to the conventionally known method, and for example, there is a synthetic method of an oxetane ring from diol disclosed by Pattison (D. B. Pattison, J. Am. Chem. Soc., 3455, 79 (1957)).

Further, other than them, compounds having 1 - 4 oxetane rings, which have high molecular weight of molecular weight of about 1000 - 5000, are also listed. As an example of them, for example, the following compounds 7-9 are listed.

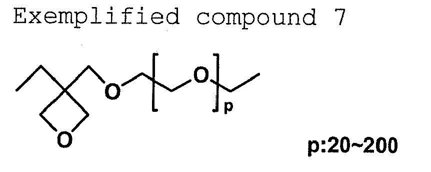

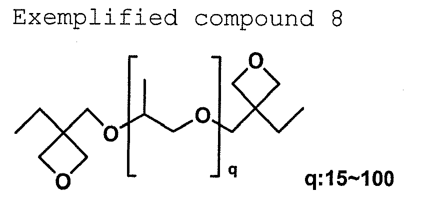

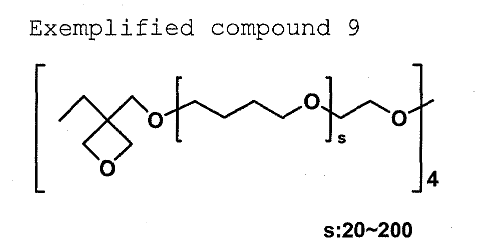

A monomer or an oligomer having an epoxy group in the molecule can be used as an epoxy compound of the present invention. Specific examples are, conventionally known aromatic epoxy compounds, alicyclic epoxy compounds and aliphatic epoxy compounds. Hereinafter, an epoxy compound indicates a monomer or an oligomer. An oligomer in the present invention has preferably a low molecular weight. An oligomer having a molecular weight of less than 1000 is more preferred.

A preferable aromatic epoxy compound is a di- or polyglycidyl ether manufactured by a reaction of polyhydric phenol having at least one aromatic ring or of an alkylene oxide adduct thereof with epichlorohydrin, and includes, for example, such as di- or poly-glycidyl ether of bisphenol A or of an alkylene oxide adduct thereof, di- or poly-glycidyl ether of hydrogenated bisphenol A or of an alkylene oxide adduct thereof and novolac type epoxy resin. Herein, alkylene oxide includes such as ethylene oxide and propylene oxide.

An alicyclic epoxy compound is preferably a compound containing cyclohexene oxide or cyclopentene oxide obtained by epoxydizing a compound having at least one cycloalkane ring such as cyclohexene or cyclopentene by use of a suitable oxidizing agent such as hydrogen peroxide or a peracid.

A preferable aliphatic epoxy compund is such as di- or polyglycidyl ether of aliphatic polyhydric alcohol or of an alkylene oxide adduct thereof; the typical examples include diglycidyl ether of alkylene glycol, such as diglycidyl ether of ethylene glycol, diglycidyl ether of propylene glycol and diglycidyl ether of 1,6-hexane diol; polyglycidyl ether of polyhydric alcohol such as di- or triglycidyl ether of glycerin or of an alkylene oxide adduct thereof; and diglycidyl ether of polyalkylene glycol such as diglycidyl ether of polyethylene glycol or of an alkylene oxide adduct thereof and diglycidyl ether of polypropylene glycol or of an alkylene oxide adduct thereof. Herein, alkylene oxide includes such as ethylene oxide and propylene oxide.

Among these epoxides, aromatic epoxide and alicyclic epoxide are preferable and alicyclic epoxide is specifically preferable, taking a quick curing property in consideration. In the invention, one kind of epoxides described above alone may be utilized, and suitable combinations of two or more kinds thereof may also be utilized.

An epoxy compound represented by Formula (A), Formula (I) or Formula (II) is explained below.

In Formula (A), Formula (I) and Formula (II), R₁₀₀, R₁₀₁ and R₁₀₂ each represents a substituent, examples of which include halogen atoms (for example, a chlorine atom, a bromine atom and a fluorine atom); alkyl groups having 1 to 6 carbon atoms (for example, a methyl group, an ethyl group, a propyl group, an isopropyl group and a butyl group); alkoxy groups having 1-6 carbon atoms (for example, a methoxy group, an ethoxy group, an n-propoxy group, an iso-propoxy group, an n-butoxy group and a tert-butoxy group); acyl groups (for example, an acetyl group, a propionyl group and a trifluoroacetyl group); acyloxy groups (for example, an acetoxy group, a propionyloxy group and a trifluoroacetoxy group); and alkoxycarbonyl groups (a methoxycarbonyl group, an ethoxycarbonyl group and a tert-butoxycarbonyl group). Among these, alkyl groups, alkoxy groups and alkoxycarbonyl groups are preferable as a substituent.
m0, m1 and m2 each represents an integer of 0 to 2 and preferably 0 or 1. m0, m1 and m2 each may the same or different in the same molecule.

L₀ represents a single bond or a linking group having 1 to 15 carbon atoms and a valence of r0+1, which may have an oxygen atom or a sulfur atom in the main chain of the linking group.

L₁ represents a single bond or a linking group having 1 to 15 carbon atoms and a valence of r1+1, which may have an oxygen atom or a sulfur atom in the main chain of the linking group.

L₂ represents a single bond or a linking group having 1 to 15 carbon atoms and a valence of r2+1, which may have an oxygen atom or a sulfur atom in the main chain of the linking group.

Examples of divalent linking groups having 1 to 15 carbon atoms, which may have an oxygen atom or a sulfur atom in the main chain include the groups listed below and combined groups thereof with a plurality of -O-, -S-, -CO- and -CS- groups.
a methylene group: -CH₂-;
an ethylidene group: >CHCH₃;
an isopropylidene group: >C(CH₃)₂;
a 1,2-ethylene group: -CH₂CH₂-;
a 1,2-propylene group: -CH(CH₃)CH₂-;
a 1,3-propanediyl group: -CH₂CH₂CH₂-;
a 2,2-dimethyl-1,3-propanediyl group: -CH₂C(CH₃)₂CH₂-;
a 2,2-dimethoxy-1,3-propanediyl group:-CH₂C(OCH₃)₂CH₂-;
a 2,2-dimethoxymethyl-1,3-propanediyl group: -CH₂C(CH₂OCH₃)₂CH₂-;
a 1-methyl-1,3-propanediyl group: -CH(CH₃)CH₂CH₂-;
a 1,4-butanediyl group: -CH₂CH₂CH₂CH₂-;
a 1,5-pentanediyl group: -CH₂CH₂CH₂CH₂CH₂-;
an oxydiethylene group: -CH₂CH₂OCH₂CH₂-;
a thiodiethylene group: -CH₂CH₂SCH₂CH₂-;
a 3-oxothiodiethylene group: -CH₂CH₂SOCH₂CH₂-;
a 3,3-dioxothiodiethylene group: -CH₂CH₂SO₂CH₂CH₂-;
a 1,4-dimethyl-3-oxa-1,5-pentanediyl group: -CH (CH₃)CH₂OCH(CH₃)CH₂-;
a 3-oxopentanediyl group: - CH₂CH₂COCH₂CH₂-;
a 1,5-dioxo-3-oxapentanediyl group: -COCH₂OCH₂CO-;
a 4-oxa-1,7-heptanediyl group: - CH₂CH₂CH₂OCH₂CH₂CH₂-;
a 3,6-dioxa-1,8-octanediyl group: - CH₂CH₂OCH₂CH₂OCH₂CH₂-; a 1,4,7-trimethyl-3,6-dioxa-1,8-octanediyl group: -CH(CH₃)CH₂OCH(CH₃)CH₂OCH(CH₃)CH₂-;
a 5,5-dimethyl-3,7-dioxa-1,9-nonanediyl group: -CH₂CH₂OCH₂C(CH₃)₂CH₂OCH₂CH₂-;
a 5,5-dimethoxy-3,7-dioxa-1,9-nonanediyl group: -CH₂CH₂OCH₂C(OCH₃)₂CH₂OCH₂CH₂-;
a 5,5-dimethoxymethyl-3,7-dioxa-1,9-nonanediyl group: -CH₂CH₂OCH₂C(CH₂OCH₃)₂CH₂OCH₂CH₂-;
a 4,7-dioxo-3,8-dioxa-1,10-decanediyl group: -CH₂CH₂O-CO CH₂CH₂CO-O CH₂CH₂-;
a 3,8-dioxo-4,7-dioxa-1,10-decanediyl group: -CH₂CH₂CO-O CH₂CH₂O-CO CH₂CH₂-;
a 1,3-cyclopentanediyl group: -1,3-C₅H₈-;
a 1,2-cyclohexanediyl group: -1,2-C₆H₁₀-;
a 1,3-cyclohexanediyl group: -1,3-C₆H₁₀-;
a 1,4-cyclohexanediyl group: -1,4-C₆H₁₀-;
a 2,5-tetrahydrofurandiyl group: 2,5-C₄H₆O-;
a p-phenylene group: -p-C₆H₄-;
a m-phenylene group: -m-C₆H₄-;
an α, α'-o-xylylene group: -o-CH₂-C₆H₄-CH₂-;
an α, α'-m-xylylene group: -m-CH₂-C₆H₄-CH₂-;
an α,α'-p-xylylene group: -p-CH₂-C₆H₄-CH₂-;
a furan-2,5-diyl-bismethylene group: 2,5-CH₂-C₄H₂O-CH₂-;
a thiophene-2,5-diyl-bismethylene group: 2,5-CH₂-C₄H₂S-CH₂-; and
an isopropylidenebis-p-phenylene group: -p-C₆H₄-C(CH₃)₂-p-C₆H₄-.

Linking groups of trivalent or more include: (i) groups prepared by removing required number of hydrogen atoms at any positions of the divalent linking groups listed above; and (ii) combined groups of the groups described in (i) with a plurality of -O-, -S-, -CO- and -CS- groups.

L₀, L₁ and L₂ may have a substituent, example of which include: halogen atoms (for example, a chlorine atom, a bromine atom and a fluorine atom); alkyl groups having 1 to 6 carbon atoms (for example, a methyl group, an ethyl group, a propyl group, an isopropyl group and a butyl group); alkoxy groups having 1-6 carbon atoms (for example, a methoxy group, an ethoxy group, an n-propoxy group, an iso-propoxy group, an n-butoxy group and a tert-butoxy group); acyl groups (for example, an acetyl group, a propionyl group and a trifluoroacetyl group); acyloxy groups (for example, an acetoxy group, a propionyloxy group and a trifluoroacetoxy group); and alkoxycarbonyl groups (a methoxycarbonyl group, an ethoxycarbonyl group and a tert-butoxycarbonyl group). Among these, alkyl groups, alkoxy groups and alkoxycarbonyl groups are preferable as a substituent.

Each of L₀, L₁ and L₂ is preferably a divalent linking group having 1 to 8 carbon atoms, which may have an oxygen atom or a sulfur atom in the main chain of the linking group, and more preferably a divalent linking group having 1 to 5 carbon atoms, of which main chain contains only carbon atoms.

In the present invention, a photopolymerizable compound is contained in the photocurable composition. The photopolymerizable compound preferably contains a compound having an oxetane ring and an alicyclic epoxy compound having at least two ester bonds in the molecule. Preferable compounds are compounds represented by Formula (III) or Formula (IV).

In the above Formulas, R₂₀₀ and R₂₀₁ each represents an aliphatic group. Examples of the aliphatic group include: an alkyl group having 1 to 6 carbon atoms (for example, a methyl group, an ethyl group, a propyl group, an isopropyl group and a butyl group); a cycloalkyl group having 3 to 6 carbon atoms (for example, a cyclopropyl group, a cyclobutyl group, a cyclopentyl group and a cyclohexyl group); an alkenyl group having 1 to 6 carbon atoms (for example, a vinyl group, a 1-propenyl group, a 2-propenyl group and a 2-butenyl group); and an alkynyl group having 1 to 6 carbon atoms (for example, an acetylenyl group, a 1-propynyl group, a 2-propynyl group and a 2-butyny group). Of these, an alkyl group having 1 to 3 carbon atoms is preferably used and a methyl group or an ethyl group is more preferably used.
m3 and m4 each represents an integer of 0 to 2 and preferably 1 or 2.

X₁ represents -(CH₂)ₙ₀- or -(O)ₙ₀-. X₂ represents - (CH₂)ₙ₁- or -(O)ₙ₁-, n0 and n1 each represents 0 or 1. When n1 is 0, it means that X₁ and X₂ do not exist.

It is preferable that m3+n0 and m4+n1 each is one or more.

L₃ represents a single bond or a linking group having a branched structure of 1 to 15 carbon atoms and a valence of r3+1, which may have an oxygen atom or a sulfur atom in the main chain of the linking group.

L₄ represents a single bond or a linking group having a branched structure of 1 to 15 carbon atoms and a valence of r4+1, which may have an oxygen atom or a sulfur atom in the main chain of the linking group.

Examples of linking groups having 1 to 15 carbon atoms, which may have an oxygen atom or a sulfur atom in the main chain, include: the groups listed below and combined groups thereof with a plurality of -O-, -S-, -CO- and -CS- groups.
an ethylidene group: >CHCH₃;
an isopropylidene group: >C(CH₃)₂;
a 2,2-dimethyl-1,3-propanediyl group: -CH₂C(CH₃)₂CH₂-;
a 2,2-dimethoxy-1,3-propanediyl group:-CH₂C(OCH₃)₂CH₂-;
a 2,2-dimethoxymethyl-1,3-propanediyl group: -CH₂C(CH₂OCH₃)₂CH₂-;
a 1-methyl-1,3-propanediyl group: -CH(CH₃) CH₂CH₂-;
a 1,4-dimethyl-3-oxa-1,5-pentanediyl group: -CH(CH₃)CH₂OCH(CH₃)CH₂-;
a 1,4,7-trimethyl-3,6-dioxa-1,8-octanediyl group: -CH(CH₃)CH₂OCH(CH₃)CH₂OCH(CH₃)CH₂-;
a 5,5-dimethyl-3,7-dioxa-1,9-nonanediyl group: -CH₂CH₂OCH₂C(CH₃)₂CH₂OCH₂CH₂-;
a 5,5-dimethoxy-3,7-dioxa-1,9-nonanediyl group: -CH₂CH₂OCH₂C(OCH₃)₂CH₂OCH₂CH₂-;
a 5,5-dimethoxymethyl-3,7-dioxa-1,9-nonanediyl group: -CH₂CH₂OCH₂C(CH₂OCH₃)₂CH₂OCH₂CH₂-; and
an isopropylidenebis-p-phenylene group: -p-C₆H₄-C(CH₃)₂-p-C₆H₄-.
Linking groups of trivalent or more include: (i) groups prepared by removing required number of hydrogen atoms at any positions of the divalent linking groups listed above; and (ii) combined groups of the groups described in (i) with a pluarily of -O-, -S-, -CO- and -CS- groups.

L₃ and L₄ may have a substituent. Examples of the substituent include: halogen atoms (for example, a chlorine atom, a bromine atom and a fluorine atom); alkyl groups having 1 to 6 carbon atoms (for example, a methyl group, an ethyl group, a propyl group, an isopropyl group and a butyl group); alkoxy groups having 1-6 carbon atoms (for example, a methoxy group, an ethoxy group, an n-propoxy group, an iso-propoxy group, an n-butoxy group and a tert-butoxy group); acyl groups (for example, an acetyl group, a propionyl group and a trifluoroacetyl group); acyloxy groups (for example, an acetoxy group, a propionyloxy group and a trifluoroacetoxy group); and alkoxycarbonyl groups (a methoxycarbonyl group, an ethoxycarbonyl group and a tert-butoxycarbonyl group). Among these, halogen atoms, alkyl groups, and alkoxy groups are preferable as a substituent.

Examples of Formulas (A), (I), (II), (III) and (IV) are shown below.

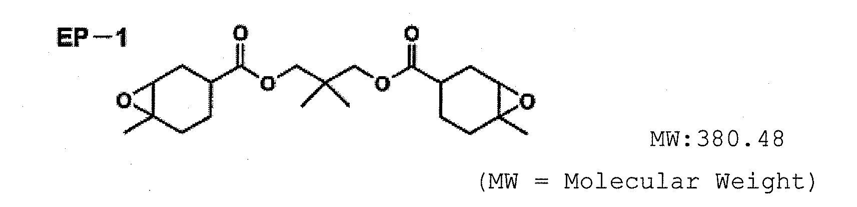

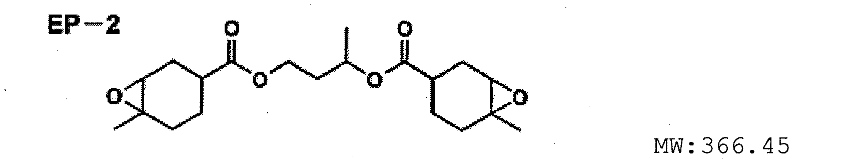

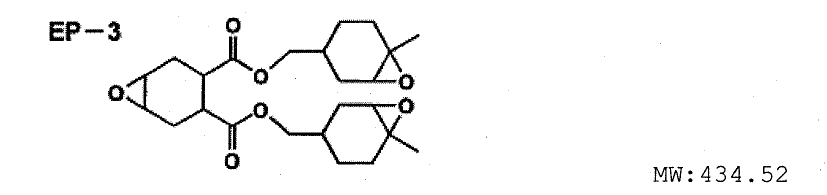

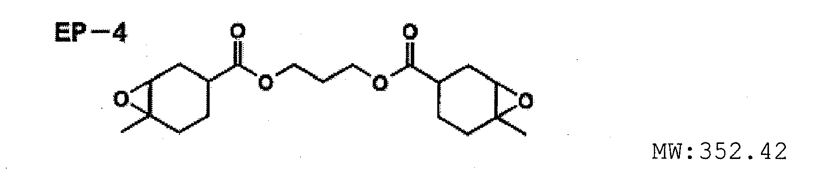

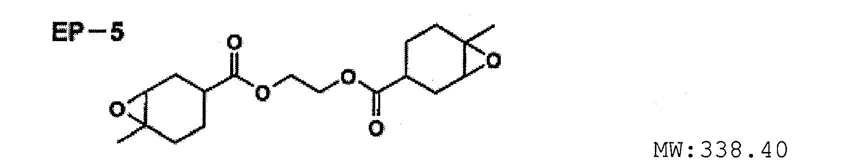

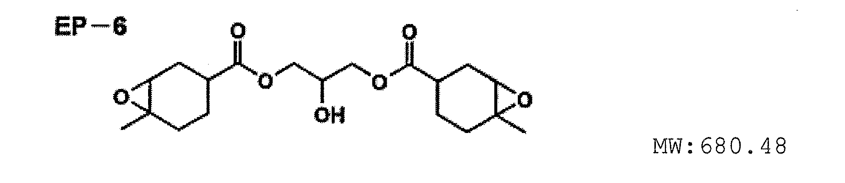

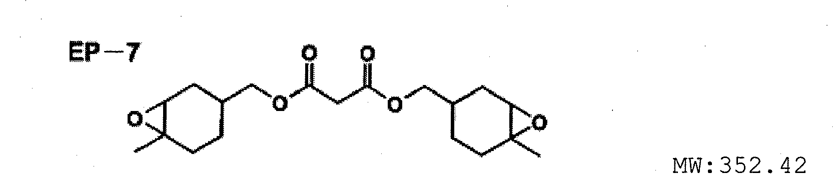

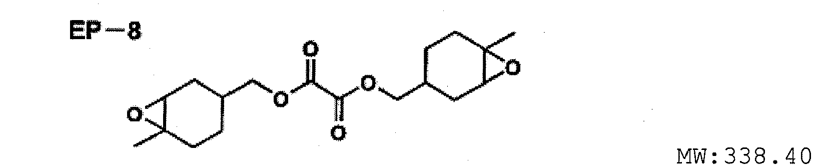

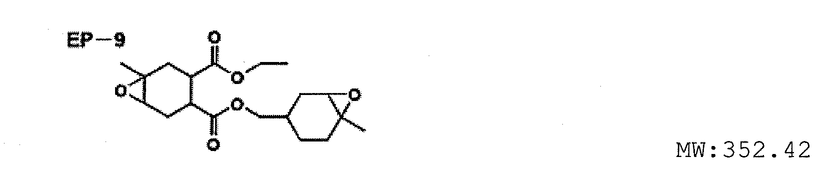

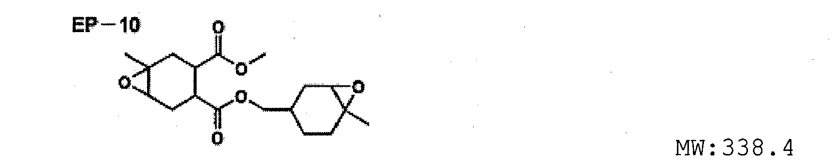

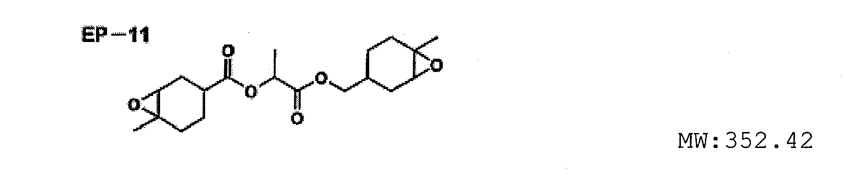

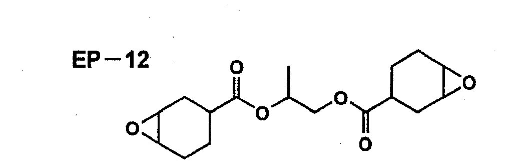

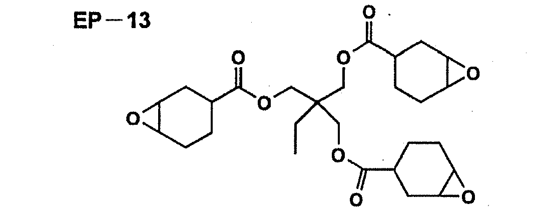

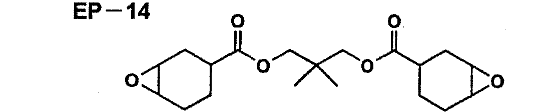

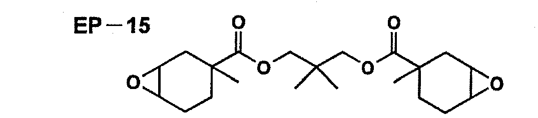

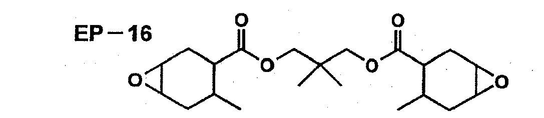

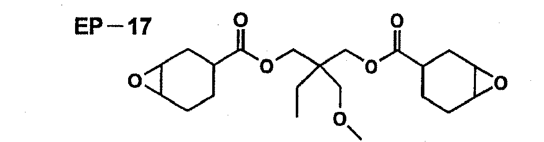

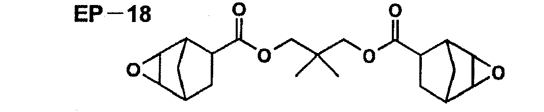

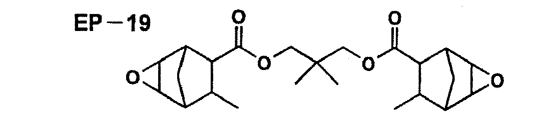

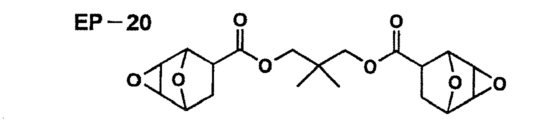

The amount of the compound having an oxirane ring added to the composition of the present invention is preferably 10 to 80 % by weight. When the amount is less than 10 %, the curability becomes largely influenced by environmental conditions (temperature and moisture) and the composition becomes difficult to be used. Contrary, when it exceeds 80%, the physical strength of the cured substance becomes too weak. In the present invention, the compounds containing oxirane rings may be used alone or in combinations of other kinds.

The preparation method of the compound having an oxirane ring is not specifically limited, however, it may be synthesized according to, for example: (i) 4^{th} Edition Shin Jikken-kagaku Koza 20 (Organic synthesys II), Ed by Chemical Society of Japan, Maruzen, Tokyo, 213- (1992); (ii) The chemistry of heterocyclic compounds-Small Ring Heterocycles part 3, Oxiranes, ed. by Alfred Hasfner, John & Wiley and Sons, An Interscience Publication, New York, (1985); (iii) Yoshimura, Settyaku, 29(12), 32 (1985); (iv) Yoshimura, Settyaku, 30(5), 42 (1986); (v) Yoshimura, Settyaku, 30(7), 42 (1986); (vi) JP-A No. 11-100378; (vii) Japanese Pat. No. 2906245; and (viii) Japanese Pat. No. 2926262.

The actinic radiation curable compositions of the present invention incorporate epoxidized fatty acid esters or epoxidized fatty acid glycerides as an epoxy compound.

In view of AMES, and sensitivity, as well as human safety and the environment such as skin irritation or unpleasant odors, simultaneous use of epoxidized fatty acid esters or epoxidized fatty acid glycerides with the system of oxetane compounds/alicyclic epoxy compounds is preferred. Further, it is possible to overcome conventional drawbacks such as wrinkling due to curing contraction depending on curing ambience (temperature and humidity), or insufficient curing or poor ejection.

In the present invention, it is possible to use epoxidized fatty acid esters and epoxidized fatty acid glycerides without any particular limitation, as long as epoxy groups are introduced to them.

Epoxidized fatty acid esters are prepared by epoxidizing oleic acid esters, and methyl epoxystearate, butyl epoxystearate, and octyl epoxystearate are employed. Further, epoxidized glycerides are prepared in the same manner as above by epoxidizing soybean oil, linseed oil, and castor oil, and epoxidized soybean oil, epoxidized linseed oil, and epoxidized castor oil are employed.

The expression, "no benzene is generated via irradiation of actinic radiation", in the present invention means that no substantial amount of benzene is generated, and specifically refers to the following. An ink containing onium salt (being a photolytically acid generating agent) in an amount of 5 percent by weight is employed to print a 15 µm thick image of an area of approximately 100 m². Subsequently, benzene is formed by irradiating the ink layer surface, maintained at 30 °C, employing actinic radiation in a radiation amount which sufficiently decomposes the photolytically acid generating agents. No substantial generation of benzene refers to the amount of generated benzene of 0 - 5 µg. Preferred as the above onium salt are sulfonium salts or iodonium salts and those which have substituents on a benzene ring, which bonds to S⁺ or I⁻, satisfy the above conditions. Preferred as the aforesaid sulfonium salts are sulfonium salt compounds represented by above General Formulas (1) - (4). Those having substituents which bond to S⁺ satisfy the above conditions.

In the above Formulas (1) to (4), R₁ through R₁₇ independently represent a hydrogen atom or a substituent, provided that R₁ through R₃ are not simultaneously hydrogen atoms, R₄ through R₇ are not simultaneously hydrogen atoms, R₈ through R₁₁ are not simultaneously hydrogen atoms, and R₁₂ through R₁₇ are not simultaneously hydrogen atoms.

Examples of the substituents represented by R₁ through R₁₇ include an alkyl group such as a methyl group, an ethyl group, a propyl group, an isopropyl group, a butyl group, an isobutyl group, a t-butyl group, a pentyl group, or a hexyl group; an alkoxy group such as a methoxy group, an ethoxy group, a propoxy group, an isopropyl group, a butoxy group, a hexyloxy group, a decyloxy group or a dodecyloxy group; a carbonyl group such as an acetoxy group, a propionyloxy group, a decylcarbonyloxy group, a dodecylcarbonyloxy group, a methoxycarbonyl group, an ethoxycarbonyl group or a benzoyloxy group; a phenylthio group; a halogen atom such as fluorine, chlorine, bromine or iodine; a cyano group; a nitro group; and a hydroxyl group.

X represents a non-nucleophilic anion residue. Examples thereof include a halogen atom such as F, Cl, Br or I, B(C₆F₅)₄, R₁₈COO, R₁₉SO₃, SbF₆, AsF₆, PF₆, and BF₄ in which R₁₈ and R₁₉ independently represent an alkyl group such as a methyl group, an ethyl group, a propyl group or a butyl group; an alkyl group having, as a substituent, a halogen atom such as fluorine, chlorine, bromine or iodine, a nitro group, a cyano group, a methoxy group or an ethoxy group; or a phenyl group. Among these, B(C₆F₅)₄⁻ and PF₆⁻ are preferred in regard to operation safety.

The above described compounds are easily synthesized using commonly known methods, for example, in the same manner as the method to prepare a photo acid generator described in The Chemical Society of Japan, Vol. 71, No. 11 (1998) or in "Organic Materials for Imaging" edited by The Japanese Research Association for Organic Electronics Materials (1993), Bun-Shin Publishing.

In the present invention, it is specifically preferable that any one of the sulfonium salts represented by Formulas (1) to (4) is one of the sulfonium salts represented by the above-described Formulas (5) to (13). X represents a non-nucleophilic anion residue as described above.

Exemplary compounds of iodonium salts are listed as follows in addition to compounds represented by Formulas (5) to (13) in which X = PF₆.

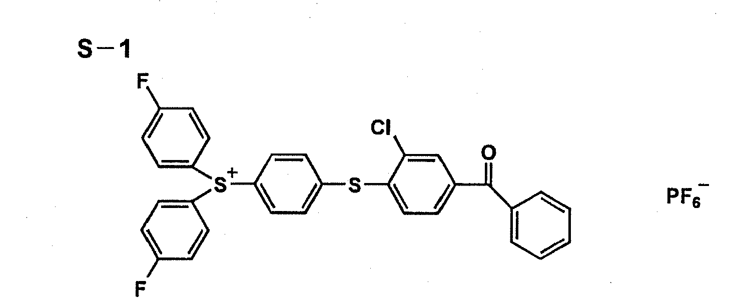

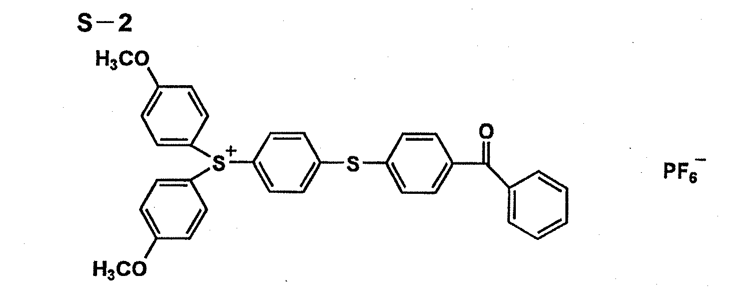

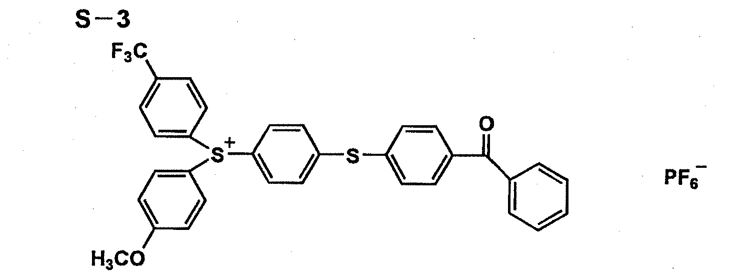

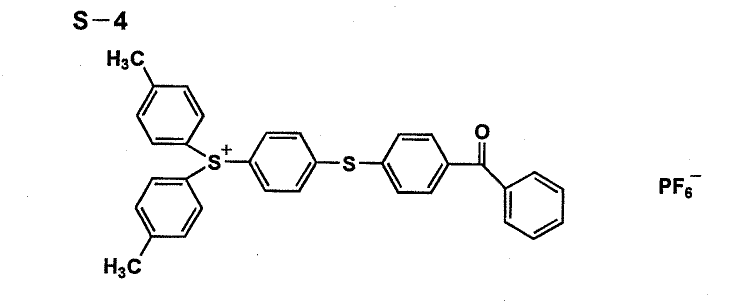

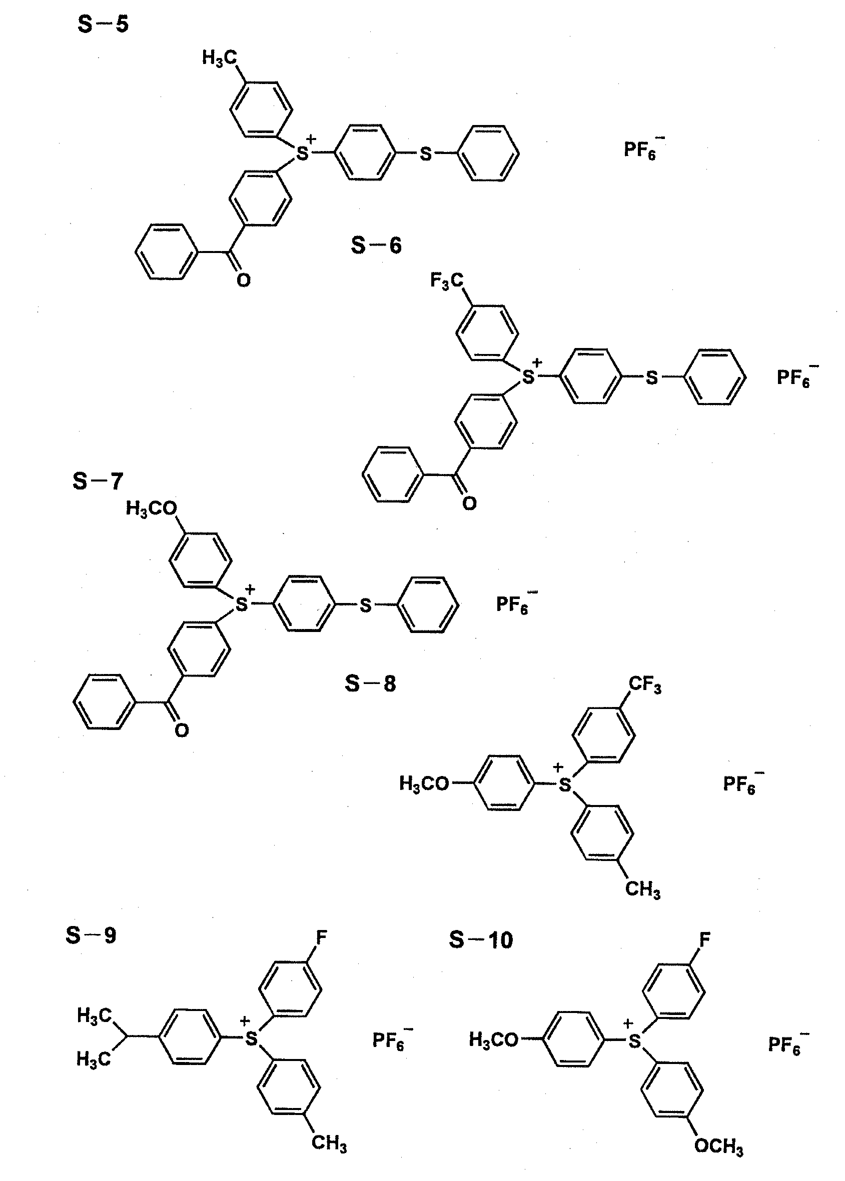

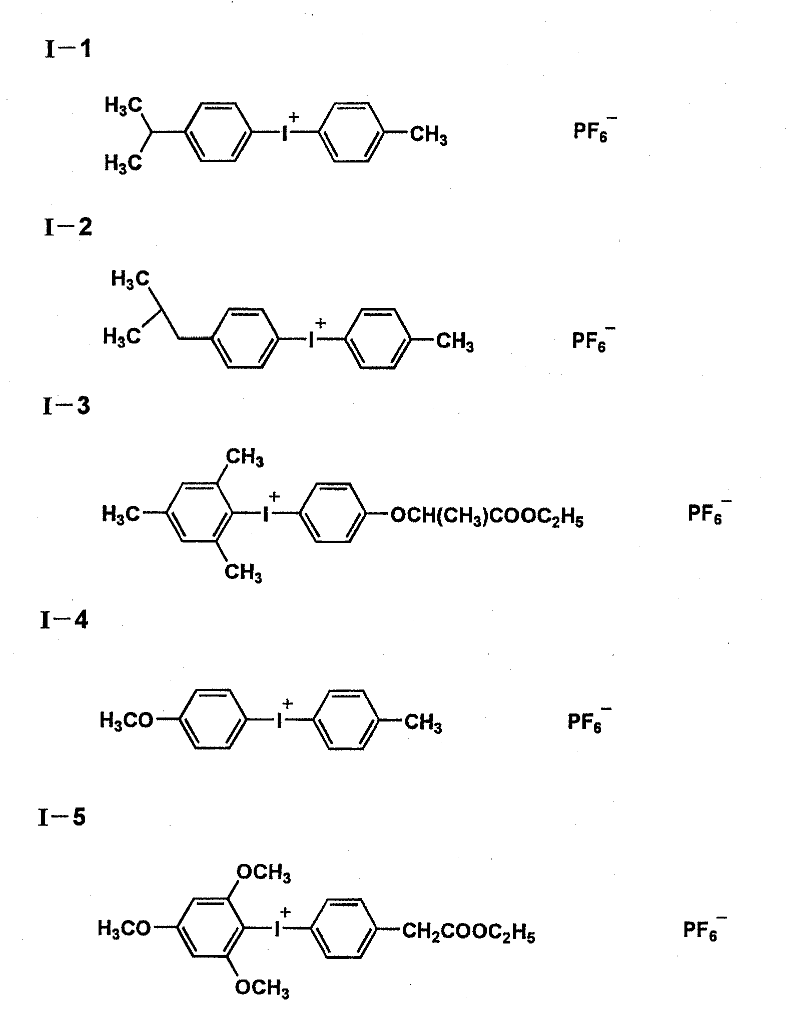

An photocurable ink-jet ink of the present invention contains a pigment as a colorant. Pigments preferably utilized in the invention are listed below.
C.I. Pigment Yellow-1, 3, 12, 13, 14, 17, 42, 74, 81, 83, 87, 93, 95, 109, 120, 128, 138, 139, 151, 166, 180, 185,
C.I. Pigment Orange-16, 36, 38,
C.I. Pigment Red-5, 22, 38, 48:1, 48:2, 48:4, 49:1, 53:1, 57:1, 63:1, 101, 122, 144, 146, 177, 185,
C.I. Pigment Violet-19, 23,
C.I. Pigment Blue-15:1, 15:3, 15:4, 4, 18, 60, 27, 29,
C.I. Pigment Green-7, 36,
C.I. Pigment White-6, 18, 21,
C.I. Pigment Black-7.

To disperse the above-described pigment, for example, a ball mill, a sand mill, an attritor mill, a roll mill, an agitator, a Henshel mixer, a colloidal mixer, a ultrasonic homogenizer, a pearl mill, a wet jet mill, a paint shaker can be utilized. As a dispersion medium, it is preferable to use a photo-polymerizing compound, and especially it is preferable to use a monomer having a low viscosity by considering a dispersing property.

In dispersion of a pigment, selection of a pigment, a dispersant and a dispersion medium, dispersion conditions and filtering conditions are suitably set so as to make a mean particle diameter of a pigment of preferably from 0.08 to 0.5 µm and the maximum particle diameter of from 0.3 to 10 µm and preferably from 0.3 to 3 µm. By this particle diameter control, it is possible to depress clogging of a head nozzle and maintain keeping stability of ink, as well as transparency and curing sensitivity of ink.

In ink according to the invention, colorant concentration is preferably from 1 to 10 weight% based on the total ink.

As pigment dispersing agents, it is preferable to use those having a basic anchor portion, and more preferable to use polymer dispersing agents having a comb structure.

Listed as specific examples of pigment dispersing agents usable in the present invention are SOLSPERSE 9000, 17000, 18000, 19000, 20000, 24000SC, 24000GR, 28000, and 32000, all produced by Avecia Inc.; AJISPER PB821 and PB822 produced by Ajinomoto Finetechno Co., Ltd.; PLAAD ED214 and ED251, and DISPARLON DA325 and DA324, all produced by Kusumoto Chemicals, Ltd.; EFKA-5207, 5244, 6220, and 6225, produced by EFKA Co. Further, it is possible to use pigment derivatives (being synergists) together with pigment dispersing agents. Listed as specific examples of pigment derivatives are SOLSPERSE 5000, 12000, and 22000, produced by Avecia Inc, as well as EFKA-6746 and 6780, produced by EFKA Co.

It is preferable that the actinic radiation curable compositions of the present invention incorporate from 4- to 10-membered alicyclic ester compounds or 5- or higher membered cyclic ether compounds, whereby curability and adhesion to various types of substrates are improved.

Cyclic ester compounds include 4- to 10-membered alicyclic ester compounds. Specific examples of them include s-caprolactone-6-hydroxyhexanic acid-1, 6-lactone, β-propiolactone, β-butyrolactone, α-methyl-β-butyrolactone, γ-butyrolactone, γ-valerolactone, δ-valerolactone, s-caprolactone, γ-caprolactone, γ- heptanolactone, coumarin, tetronic acid, pyrone, phthalide, 3-mtrhyl-1,4-dioxa-2,5-dione, p-dioxanone, morpholinedione, and morpholine. Further, their mixtures may practically be employed.

Preferred cyclic ether compounds include 5-membered or higher membered cyclic ether compounds. Cyclic ether compounds without having a carbonic acid ester structure are more preferred. Specific examples include 1,3-dioxolane, tetrahydrofuran, 1,4-dioxane, 1,3,5-trioxane, crown ethers (such as 12-crown-4), 1,2-dimethyltetrahydrofuran, 2-methyltetrahydrofuran, 2-methyldioxolane, and 4-methyldioxolane.

The content of 4- to 10-membered alicyclic ester compounds as well as at least 5-membered cyclic ether compounds is preferably 1 - 10 percent by weight.

Various kinds of additives other than those above described may be contained in the photocurable composition of the present invention. For example, a surfactant, a leveling additive, a matting agent, a polyester type resin, a polyurethane type resin, a vinyl type resin, an acryl type resin, a rubber type resin and wax series can be added to the composition. In order to improve the storage stability, known various basic compounds may be used. Typical examples thereof include a basic alkali metal compound, a basic alkali earth metal compound, and a basic organic compound such as an amine. A radical polymerizable monomer and an initiator may also be mixed to form a radical-cationic hybrid type polymerizable composition.

Basic compounds may also be added to the photocurable composition of the present invention. Addition of a basic compound may results in excellent ejection stability and prevention of wrinkles due to shrinkage even under a low moisture environment. As the basic compound, the various known basic compounds may be used. Typical examples thereof include basic alkali metal compounds, basic alkali earth metal compounds, and basic organic compounds, such as an amine.

As the basic alkali metal compounds, listed are alkali metal hydroxides (such as lithium hydroxide, sodium hydroxide and potassium hydroxide), alkali metal carbonates (such as lithium carbonate, sodium carbonate and potassium carbonate), and alkali metal alcoholates (such as sodium methoxide, sodium ethoxide, potassium methoxide and potassium ethoxide).

As the basic alkaline earth metal compounds, listed are alkaline earth metal hydroxides (such as magnesium hydroxide and calcium hydroxide), alkaline earth metal carbonates (such as magnesium carbonate and calcium carbonate), and alkaline earth metal alcoholates (such as magnesium methoxide).

As the basic organic compounds, listed are amines and nitrogen containing heterocyclic compounds such as quinoline and quinolizine. Of these, amines are preferable from the viewpoint of compatibility with a photopolymerizable monomer, for example, octylamine, naphthylamine, xylenediamine, dibenzylamine, diphenylamine, dibutylamine, trioctylamine, tetramethylethylenediamine, tetramethyl-1,6-hexamethylenediamine, hexamethylenetetramine, and triethanolamine.

The concentration of the basic compound is 10 to 1,000 ppm by weight, and preferably 20 to 500 ppm by weight, based on the total weight of the photopolymerizable monomer. The basic compound may be used alone or in combinations of a plurality thereof.

The photocurable ink-jet ink of the present invention contains a photocurable composition having a viscosity of preferably 7 to 40 mPa·s at 25 °C to obtain stable ejection from the ink-jet head and excellent curability regardless of the environmental conditions (for example, temperature and moisture).

Recording sheet used in the present invention includes nonabsorbent plastics and those films, which are used for flexible packaging, besides ordinary non-coated and coated paper. Examples of plastic films include: polyethylene terephthalate (PET) film, oriented polystyrene (OPS) film, oriented polypropylen (OPP) film, oriented nylon (ONy) film, polyvinylchloride (PVC) film, polyethylene (PE) film, and triacetyl cellulose (TAC) film. Examples of other plastics include, polycarbonate, an acryl resin, ABS, polyacetal, PVA, and various kinds of rubber. The ink composition of the present invention is also applicable to metal and glass.

In the present invention, a long rolled web of a recording sheet is advantageously utilized with respect to a cost of recording sheet, for example, packaging cost and manufacturing cost, efficiency of print preparation and applicability to a variety of sheet sizes.

An image forming method of the invention will be detailed.

In the image forming method of the present invention, it is preferred that the ink composition of the present invention described above is ejected onto a recording sheet according to an ink jet recording method, and then cured by actinic ray irradiation, for example, UV rays.

### (Thickness of ink layer formed after ink is ejected onto recording sheet)

In the present invention, the thickness of an ink layer, after ink has been ejected onto recording sheet and cured by actinic ray irradiation, is preferably from 2 to 25 µm. In photocurable ink-jet recording in the field of screen printing, the thickness of the ink is at present over 25 µm. Ink ejection of an excessive layer thickness is not preferred in the field of flexible package printing where a thin plastic film is used as a recording sheet, because problems are caused in that stiffness and texture may change by such printing, in addition to the problems of the aforementioned curl and wrinkles of recording sheet.

Herein, the thickness of an ink layer refers to the maximum thickness of the ink layer deposited on the recording sheet. This is common to a single color ink layer, and an overlapped layer of two different color (secondary color) inks, three different color inks or four different color inks (including white ink as a base ink), which are formed on recording sheet according to an ink jet recording process.

### (Conditions of ink ejection)

As conditions of ink ejection, ink ejection is preferably performed while a recording head and ink are heated to 35 to 100 °C with respect to ejection stability. An photocurable ink shows a large viscosity variation depending on temperature, which in turn, significantly influences a liquid droplet size and a liquid droplet ejection rate resulting in deterioration of image quality. Accordingly, it is essential to keep an ink temperature constant after the ink temperature is raised. The control range of ink temperature is ± 5 °C of the set temperature, preferably ± 2 °C of the set temperature and furthermore preferably ± 1 °C of the set temperature.

The droplet volume of the ink ejected from each ink nozzle is preferably 2 to 15 pl.

### (Actinic ray irradiation condition after ink has been ejected onto recording sheet)

In the image recording method of the present invention, it is preferable that actinic rays are irradiated within 0.001 to 2.0 seconds after ink has been deposited on the recording sheet, and it is more preferable that actinic rays are irradiated within 0.001 to 1.0 second after ink has been deposited on recording sheet. Irradiation of actinic rays as early as possible after ejecting the ink is specifically important in order to form high resolution images.

In the image forming method employing the ink of the present invention, after allowing the ink composition to adhere to a recording medium, it is exposed to actinic radiation is exposed. Radiation exposure may be either visible light exposure or ultraviolet radiation exposure. However, ultraviolet radiation exposure is particularly preferred. When ultraviolet radiation is exposed, the exposure amount is at least 100 mJ/cm², is preferably at least 500 mJ/cm² and at most 10,000 mJ/cm², and preferably in the range of at most 5,000 mJ/cm². An ultraviolet exposure amount in the range specified as above is advantageous because it makes it possible to sufficiently proceed with a curing reaction, and it is also possible to minimize discoloration of colorants due to ultraviolet radiation exposure. Listed as ultraviolet radiation sources are metal halide lamps, xenon lamps, carbon arc lamps, chemical lamps, low pressure mercury lamps, and high pressure mercury lamps. For example, it is possible to use commercially available radiation sources such as H lamp, D lamp, or V lamp, manufactured by Fusion System Co.

Metal halide lamps emit continuous spectral radiation compared to high pressure mercury lamps (at a dominant wavelength of 365 nm), exhibit high emission efficiency in a range of 200 - 450 nm, and emit abundant radiation in the long wavelength region. Accordingly, when pigments are employed, as ink compositions of the present invention, the above metal halide lamps are suitable.

An actinic ray irradiation method has been basically disclosed in JP-A No. 60-132767, in which light sources are provided at the both sides of a head unit where a head and a light are scanned in a shuttle system. Irradiation is performed in a certain time interval after ink has been deposited on the recording sheet. Further, curing is completed by another light source which is not driven. In US Patent No. 6145979, the following light irradiation methods have been disclosed: (i) a method utilizing optical fibers; and (ii) a method in which collimated light is reflected by a mirror provided on the side surface of a head unit, and UV light (ultraviolet light) is irradiated on the recording portion. In the image forming method of the present invention, any of these irradiation methods may be utilized.

Further, the following method is also preferable: irradiation of actinic rays is divided into two steps, (i) first actinic ray irradiation is 0.001 to 2.0 seconds after ink has been deposited on recording sheet by the above-described method; and (ii) second actinic ray irradiation is carried out after all the printing has been completed. Shrinkage of recording sheets, occurring while the ink is being cured can be reduced by dividing actinic ray irradiation into those two steps.

So far, in a UV curable ink-jet method, usually a high power light source exceeding 1 kW·hr has been used in order to minimize spreading of dots and bleeding-out after the ink deposition on recording sheet. However, specifically in printing on shrink labels, the shrinkage of the recording sheet due to the UV irradiation has been too much for practical use.

In the present invention, actinic rays having a maximum luminance of 254 nm is preferably used. Because it enables to produce images with high resolution even when a light source with a power less than 1 kW·hr is used, and shrinkage of a recording sheet is in the permissible range.

In the present invention, the power of light source used for irradiating an actinic ray is preferably less than 1 kW·hr. Examples of the light sources having a power of less than 1 kW·hr include a fluorescent lamp, a cold cathode tube and a LED, however, the present invention is not limited thereto.

The ink-jet recording apparatus (hereafter also referred to as "recording apparatus") of the present invention will now be explained.

The recording apparatus of the present invention will be explained suitably in reference to the drawings. Herein, the recording apparatus illustrated in the drawings is only an embodiment of a recording apparatus of the present invention, and the present invention is not limited thereto.

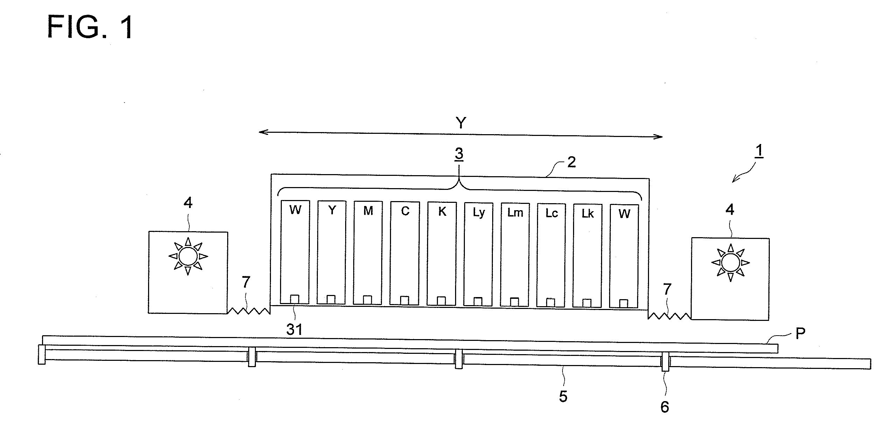

Fig. 1 shows a front view of the main section of the ink-jet recording apparatus of the present invention. Recording apparatus 1 is equipped with head carriage 2, recording head 3, irradiation member 4 and platen 5. In recording apparatus 1, platen 5 is provided under recording sheet P. Platen 5 functions also as a UV ray absorbing means, and absorbs excess UV rays having passed through recording sheet P. As a result, high resolution images are reproduced quite stably.

Recording sheet P is guided by guide member 6 to be moved to the back side from the front side in Fig. 1 by means of a transport member (not illustrated). Scanning of recording heads 3 mounted in the head carriage 2 is achieved by reciprocating head carriage 2 in the Y direction in Fig. 1 by means of a head scanning member (not illustrated).

Head carriage 2 is provided over recording sheet P, and stores a plurality of recording heads 3 described below with the ink ejection orifices oriented downward. Head carriage 2 is provided in the main body of recording apparatus 1 so as to reciprocate in the Y direction, as shown in Fig. 1, driven by a head scanning member.

Herein, Fig. 1 illustrates that head carriage 2 carries recording heads 3 of yellow(Y), magenta(M) and cyan(C), however, in the present invention, the number of recording heads 3 mounted in head carriage 2 is determined considering the number of inks.

Recording heads 3 eject a photocurable ink (for example, a UV curable ink) supplied by an ink supplying member (not illustrated) from the ink ejection orifices onto recording sheet P by action of plural ejecting members (not illustrated) equipped in the recording apparatus. The UV curable ink ejected from recording heads 3 is a composition containing a colorant, a polymerizable polymer and an initiator, and has a property to be cured via a cross-linking and polymerizing reaction initiated by irradiation of UV rays where the initiator works as a catalyst.

Recording heads 3 ejects ink as ink droplets onto a pre-determined region (the region designated to receive the ink) of recording sheet P while the head is scanned from one edge to the other of the recording sheet in the Y direction in Fig. 1 by means of the head scanning member, whereby the ink is deposited on the designated region of the recording sheet.

The above scan is made several times as required to eject ink onto the region designated to receive the ink. After that, recording sheet P is transported from the front side to the back side of the page in Fig. 1 by a transport member and the scan of the recording heads 3 is again made, driven by the head scan member, whereby ink is ejected from the recording heads onto an adjacent region designated to receive the ink.

The above operation is repeatedly carried out, whereby the ink is ejected from recording heads 3 employing the head scan member and the transport member to form an image made of aggregates of ink droplets on recording sheet P.

Irradiation member 4 is equipped with a UV lamp which emits ultraviolet rays of a specific wavelength range at a stable exposure energy and a filter which transmits ultraviolet rays of a specific wavelength. Herein, examples of the UV lamp include a mercury lamp, a metal halide lamp, an excimer laser, a UV laser, a cold cathode tube, a hot cathode tube, a black light, and an LED (light emitting diode). Of these, a metal halide lamp giving a band-shaped light, a cold cathode tube, a mercury lamp and a black light are preferable. Specifically a cold cathode tube and a black light, which emit 254 nm ultraviolet rays are preferable, which can prevent bleeding-out, efficiently control a dot diameter, and reduce wrinkles on curing. Utilizing a black light as a radiation source of irradiation member 4 reduces the manufacturing cost for ink curing.

Irradiation member 4 has the possible largest size which can be installed in recording apparatus 1 (an ink jet printer) or the size which is larger than the region designated to receive the ink by one scan of recording heads 3, driven by the head scanning member.

Irradiation member 4 is equipped nearly in parallel with recording sheet P by fixing at the both sides of head carriage 2.

In order to adjust luminance at the ink ejection outlets, the entire recording heads 3 is light-shielded, however, in addition, it is preferable to make distance h2 between the ink ejection outlet 31 of recording heads 3 and recording sheet P greater than distance h1 between irradiation means 4 and recording sheet P (h1 < h2) or to increase distance d between recording heads 3 and irradiation means 4 long (to make d large). Further, it is more preferable to provide bellows structure 7 between recording heads 3 and irradiation member 4.

Herein, the wavelength of ultraviolet rays, which are irradiated through irradiation member 4, is suitably changed by exchange of a UV lamp or a filter, which is mounted in irradiation member 4.

The ink-jet ink of the present invention has excellent ejection stability, and is specifically suitable for use in a line head type ink-jet recording apparatus.

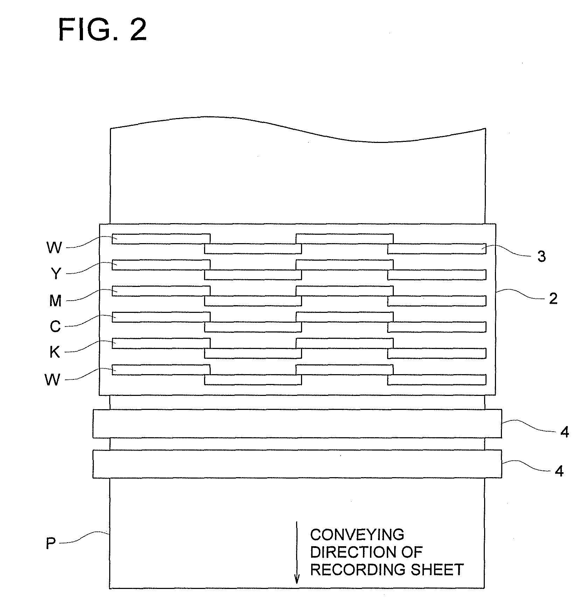

Fig. 2 shows a top view of the main section of the ink-jet recording apparatus explaining another embodiment of the present invention.

The ink-jet recording apparatus illustrated in Fig. 2 is called as a line head type ink-jet recording apparatus. Recording heads 3 are provided in head carriage 2, which covers the entire width of recording sheet P. The recording heads 3 each stores a different color ink.

Irradiation means 4 is provided just downstream of head carriage 2 to cover the entire width of recording sheet P and the entire printing surface. The same ultraviolet lamp as shown in Fig. 1 may be used in the irradiation means 4 in Fig. 2.

In the line head type recording apparatus, head carriage 2 and irradiation means 4 are fixed, and only recording sheet P is transported in the direction as shown in Fig. 2. Ink is ejected onto the recording sheet, which is subsequently transported and then exposed via the irradiation means to form a cured image on the recording sheet.

### EXAMPLES

The present invention will now be explained using examples, however, the present invention is not limited thereto.

### Example 1

### (Preparation of Actinic Radiation Curable Compositions)

Photopolymerizable compounds, photopolymerization initiators, and compounds according to the present invention, as well as other additives were added, as listed in the table below, and dissolved, whereby actinic radiation curable compositions were prepared. Each of the tables lists a block of curable compositions.

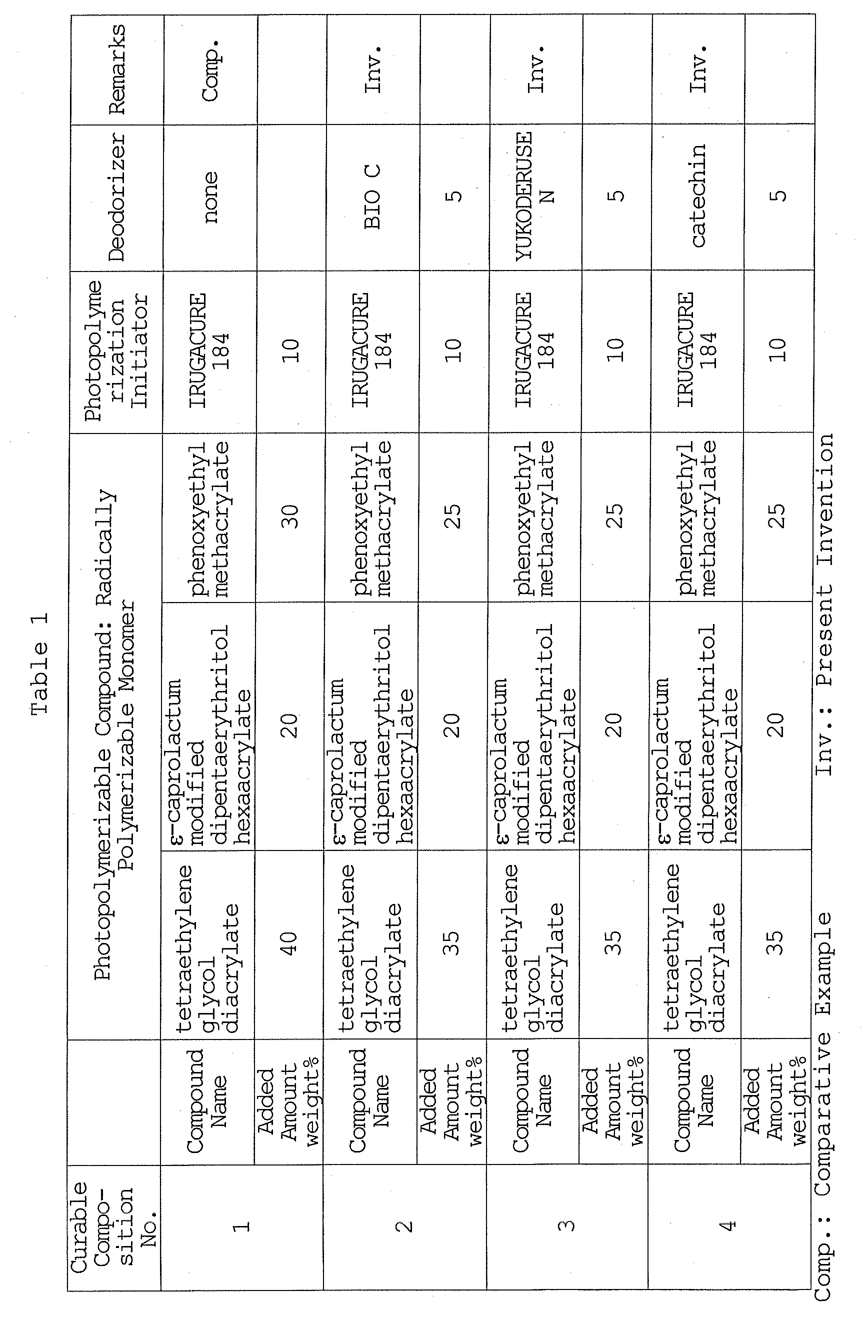

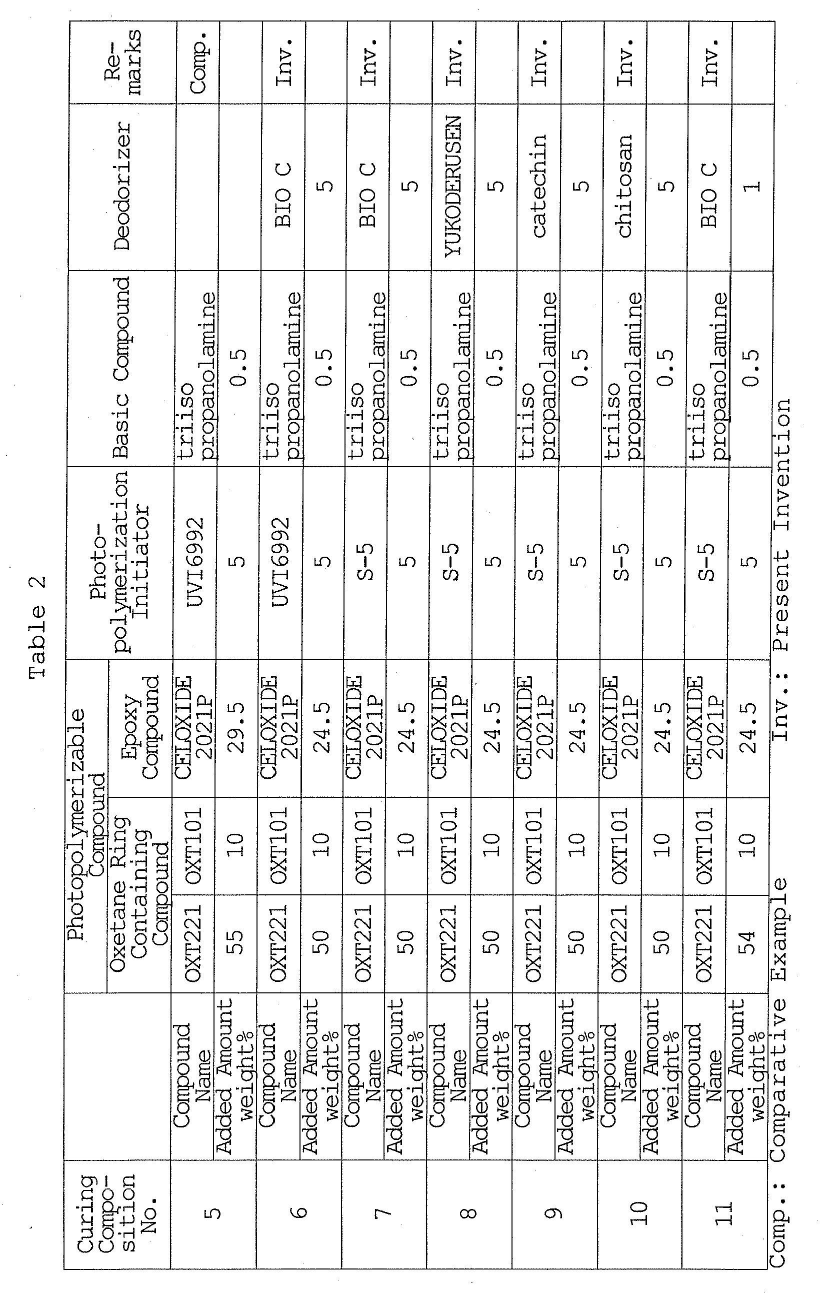

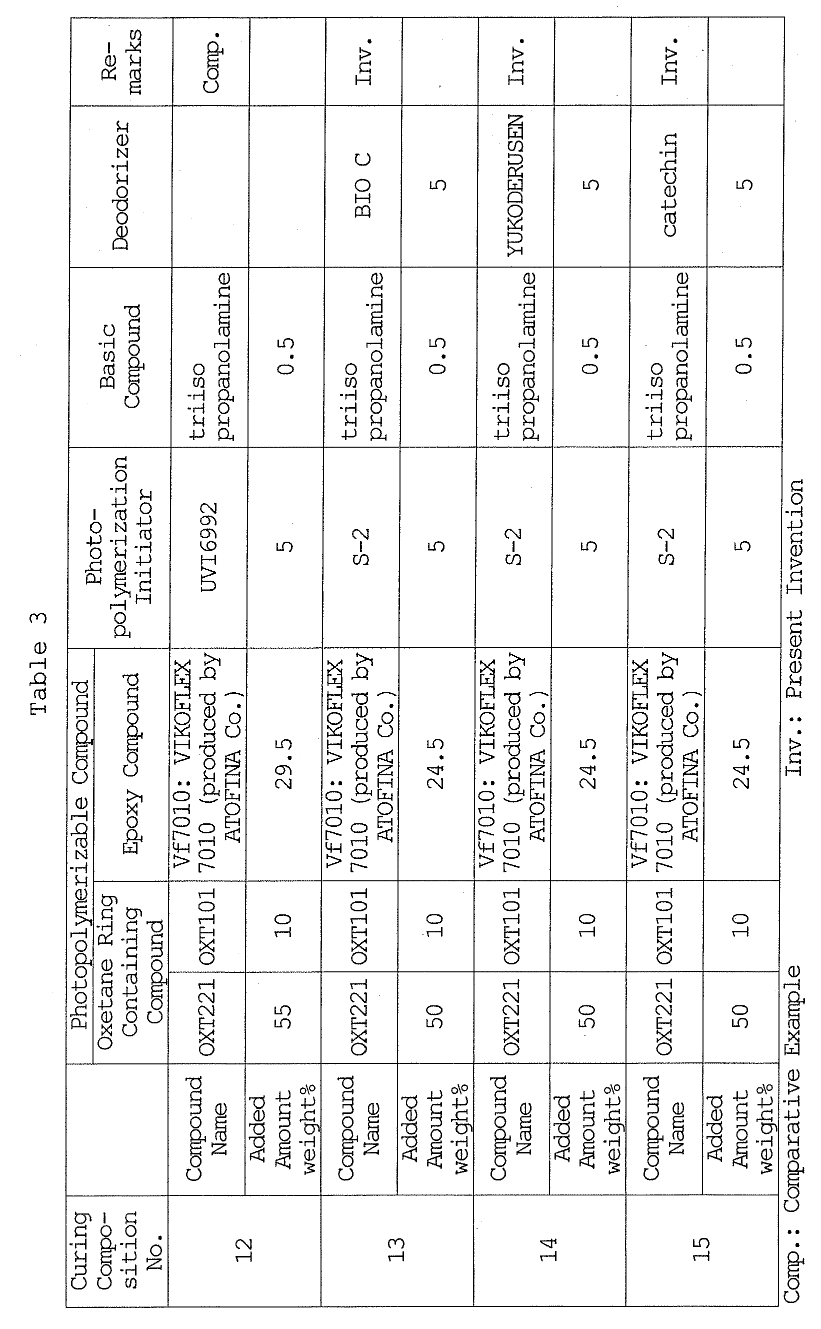

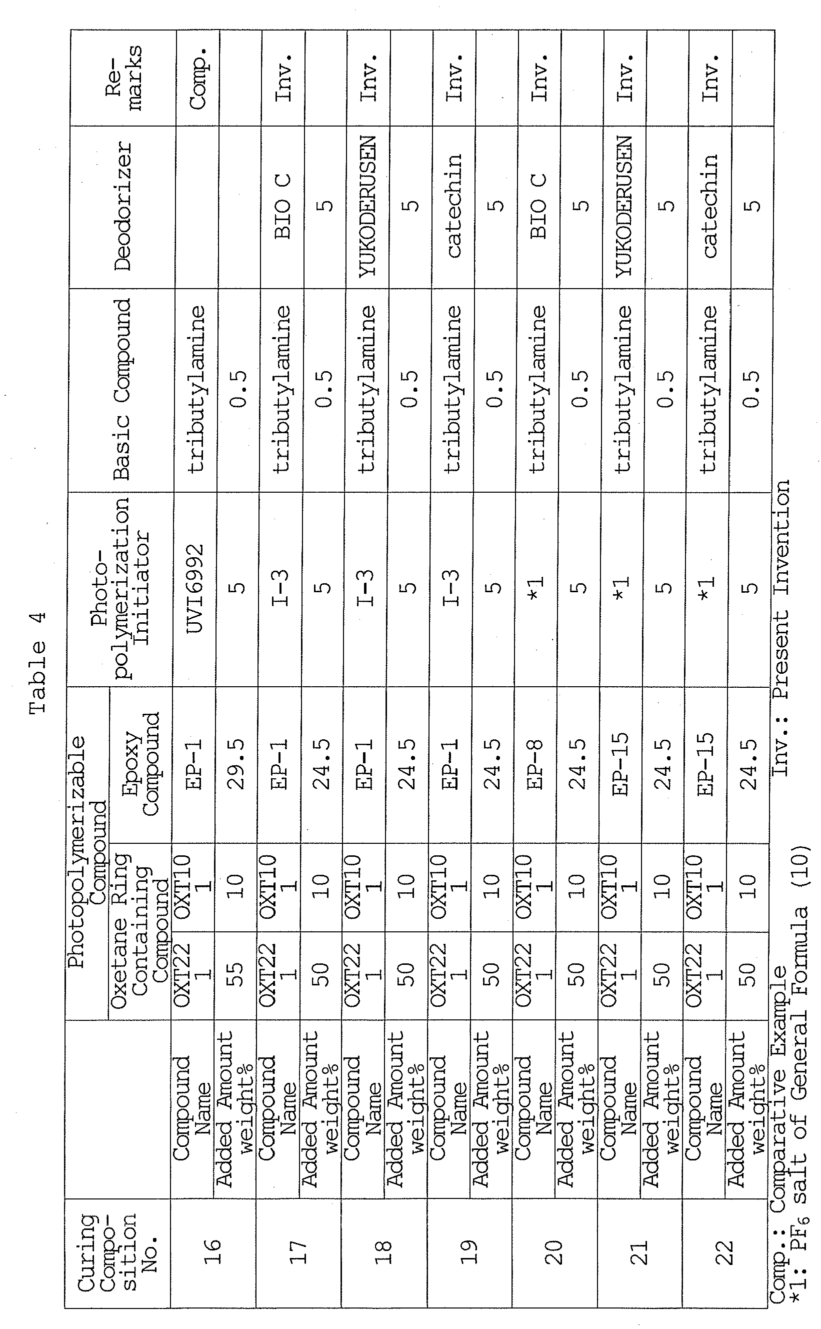

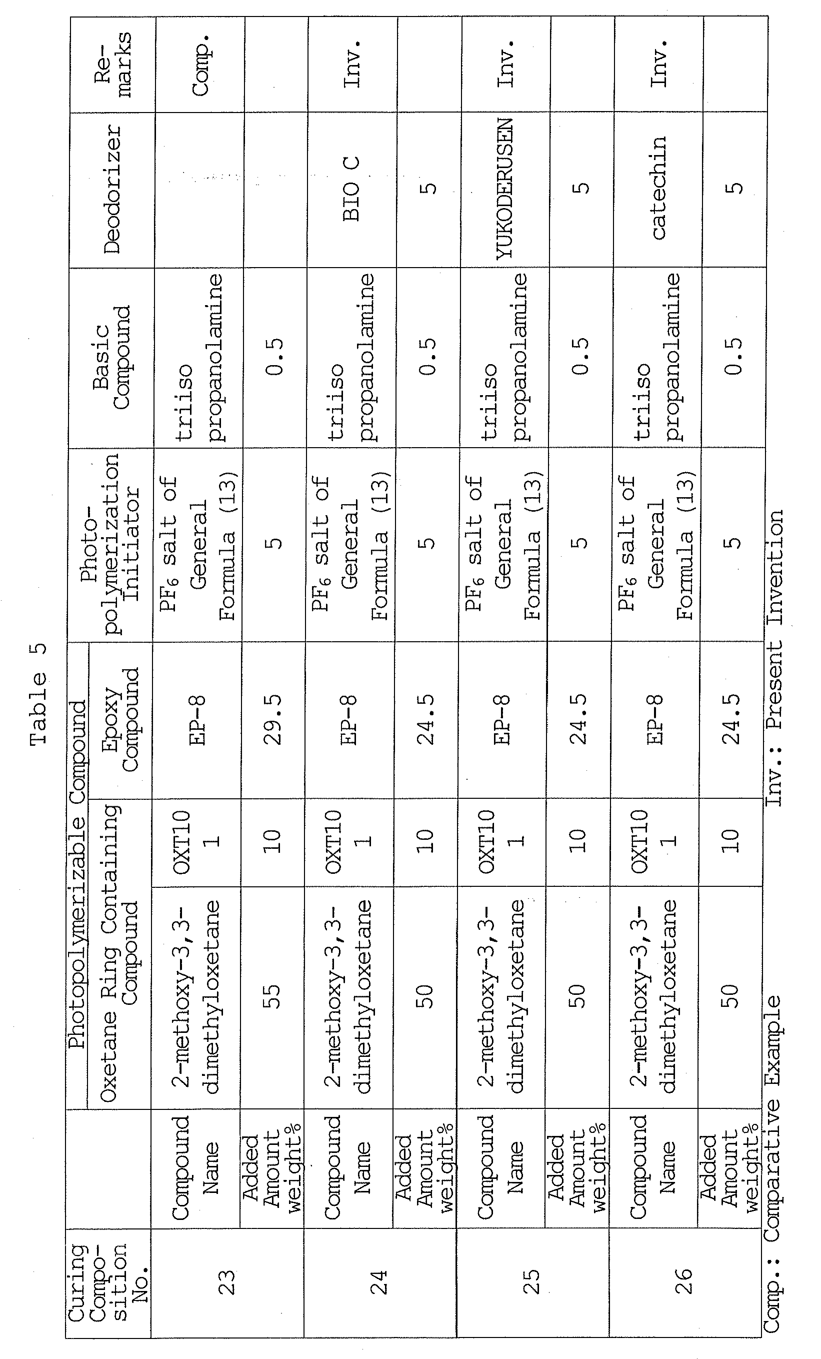

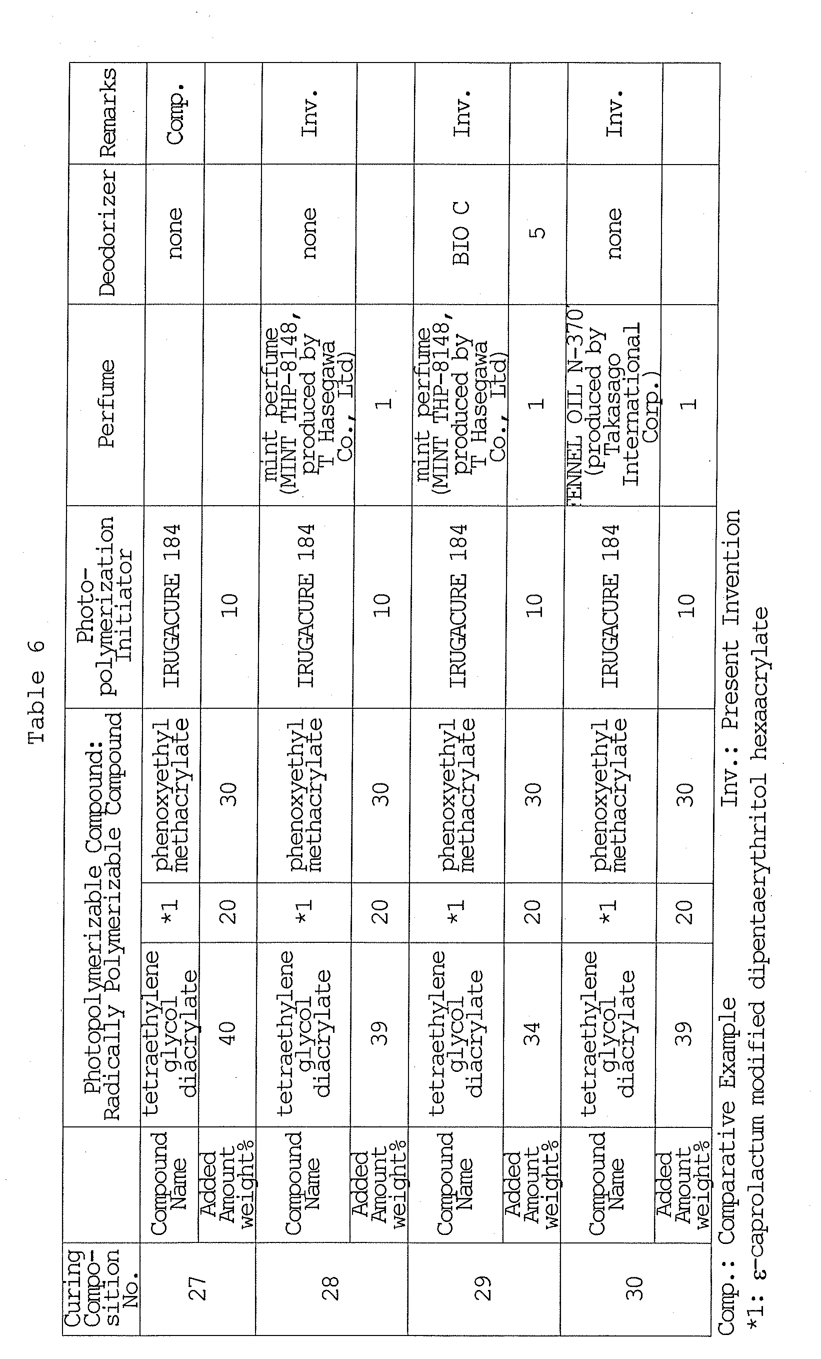

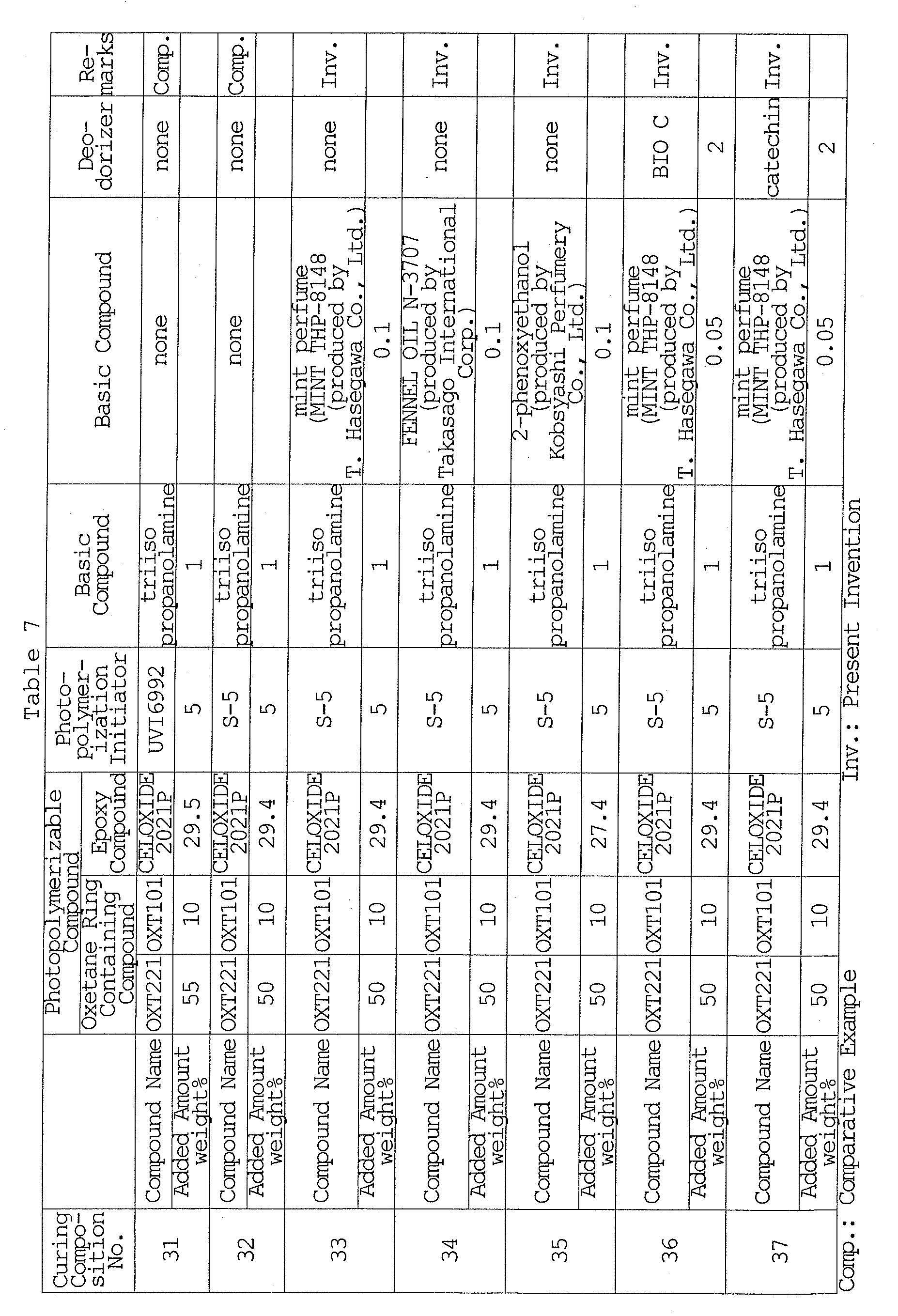

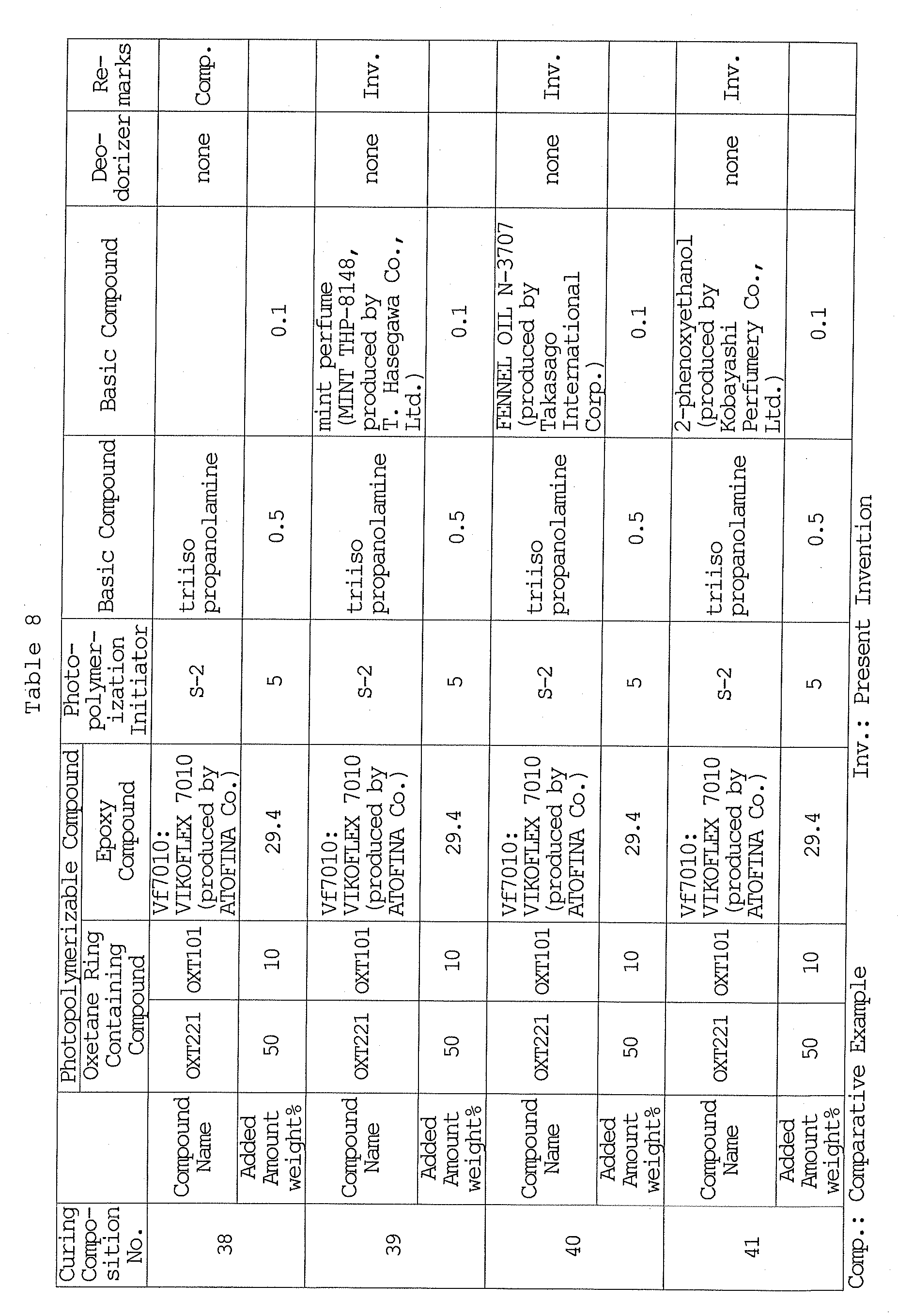

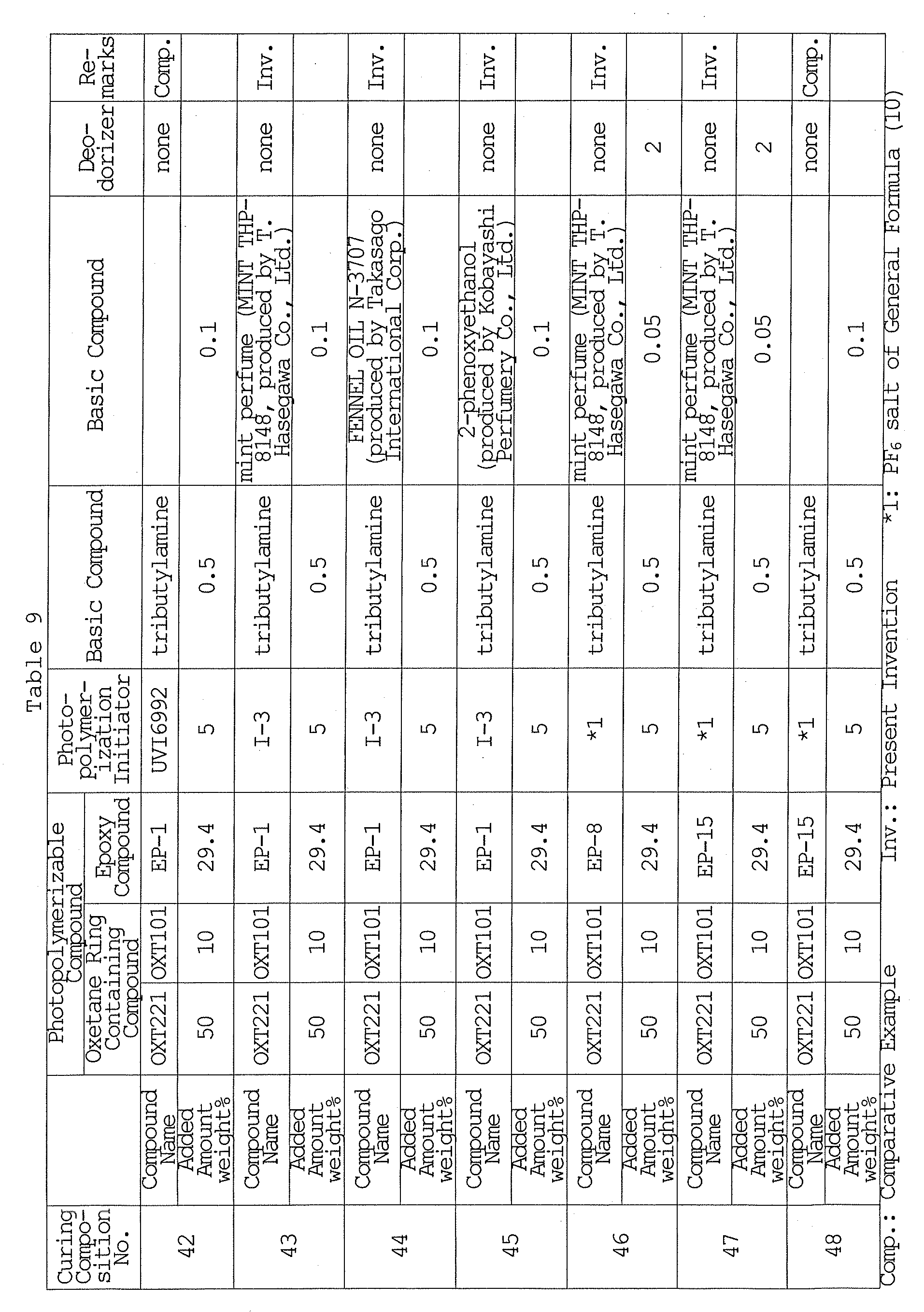

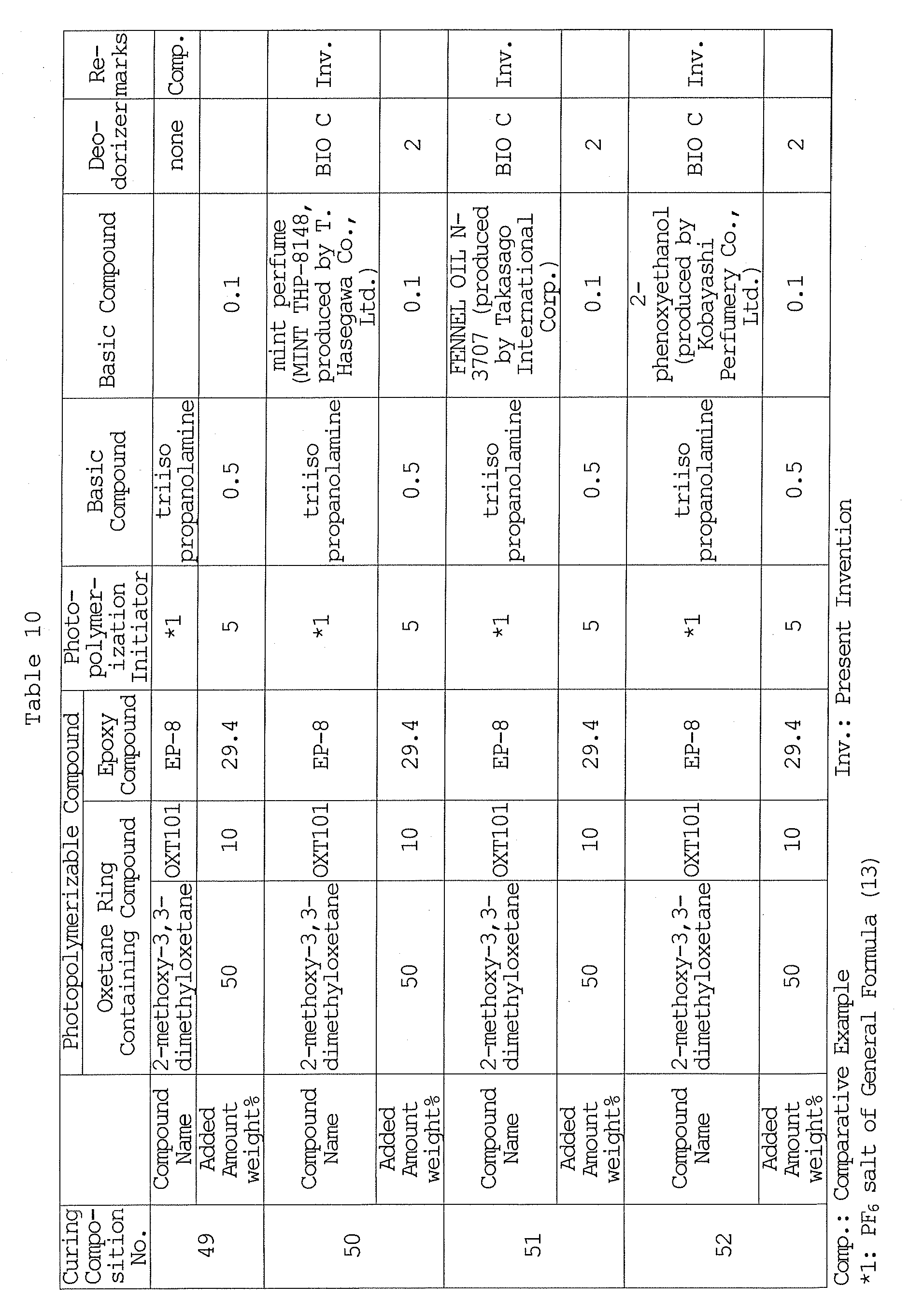

Compounds used in the above tables are as follows.
CELOXIDE 2021P: produced by Dicel Chemical Industries, Co., Ltd.
Vf7010: VIKOFLEX 7010 (produced by ATOFINA Co.)
OXT-221: produced by TOAGOSEI Chemical Industry Co., Ltd.
OXT-101: produced by TOAGOSEI Chemical Industry Co., Ltd. UV16992: 50 percent propione carbonate solution, produced by

Dow-Chemical Corp.
IRUGACURE 184: produced by CIBA Specialty Chemicals Co.

### (Determination of Viscosity)

Viscosity of each of the compositions prior to curing was determined at 25 °C and a shearing rate of 1000 l/s, employing MCR-300 (being a viscosimeter produced by Physica Co.).

### (Evaluation of Curing speed)

After applying each of the curing compositions prepared as above onto a sheet of synthetic paper (being a synthetic paper, YUPO FGS, produced by Yupo Corp.) to result in a layer thickness of 3 µm, ultraviolet radiation was irradiated while varying its amount. After irradiation, a cured coating was rubbed by a finger nail and the radiation energy (mJ/cm²) which resulted in a peeled layer was determined and designated as the curing speed.

### (Evaluation of Folding Resistance)

After applying each of the curing compositions onto a sheet of synthetic paper (being a synthetic paper, YUPO FGS, produced by Yupo Corporation) to result in a layer thickness of 80 µm, radiation in an amount of 180 mW / cm² was irradiated onto ink droplets 0.1 second after deposition on the coating, while employing a hot-cathode tube (being a customerized product, produced by Nippo) and a 200 W power source, whereby a cured product was obtained. The resulting cured membranes were evaluated based on the criteria below.
5: during folding, no change to the ink membrane was noted
4: the folded portion resulted in color change, but no cracking was noted
3: the folded portion exhibited slight cracking, but was commercially viable
2: when folded, the ink membrane peeled from the cracked portion, resulting in problems of commercial viability
1: when folded, cracks and flecks of ink membrane occurred

### (Evaluation of Unpleasant Odors)

Sensory evaluation was performed while employing the criteria below.
5: no unpleasant odors were noted
4: slight unpleasant odors were noted, but the product was commercially viable
3: unpleasant odors were noted, when smelted up close, but the product was commercially viable
2: slight unpleasant odors were noted even at a distance
1: unpleasant odors were obvious even at a distance

In Tables 11 and 12, the results of each of Sample Nos. 1 - 4, 5 - 11, 12 - 15, 16 - 22, 23 - 26, 27 - 30, 31 - 37, 38 - 41, 42 - 48, and 49 - 52 correspond to each of Tables 1, 2, 3, 4, 5, 6, 7, 8, 9, and 10, respectively.

**Table 11**

| Sample No. | Ranking of Unpleasant Odors | Ranking of Folding Resistance | Curing Speed mJ/cm² | Viscosity mPa·s | Remarks |
|---|---|---|---|---|---|
| 1 | 1 | 1 | 300 | 20 | Comp. |
| 2 | 3 | 3 | 280 | 18 | Inv. |
| 3 | 3 | 3 | 280 | 18 | Inv. |
| 4 | 3 | 3 | 280 | 20 | Inv. |
| 5 | 2 | 2 | 100 | 18 | Comp. |
| 6 | 5 | 4 | 97 | 17 | Inv. |
| 7 | 5 | 4 | 97 | 17 | Inv. |
| 8 | 5 | 4 | 97 | 17 | Inv. |
| 9 | 5 | 4 | 97 | 18 | Inv. |
| 10 | 5 | 4 | 97 | 17 | Inv. |
| 11 | 4 | 4 | 100 | 18 | Inv. |
| 12 | 1 | 3 | 200 | 16 | Comp. |
| 13 | 4 | 4 | 180 | 15 | Inv. |
| 14 | 4 | 4 | 180 | 15 | Inv. |
| 15 | 4 | 4 | 180 | 16 | Inv. |
| 16 | 2 | 2 | 70 | 30 | Comp. |
| 17 | 5 | 4 | 70 | 28 | Inv. |
| 18 | 5 | 4 | 70 | 28 | Inv. |
| 19 | 5 | 4 | 70 | 30 | Inv. |
| 20 | 5 | 4 | 65 | 30 | Inv. |
| 21 | 5 | 4 | 60 | 30 | Inv. |
| 22 | 5 | 4 | 60 | 30 | Inv. |
| 23 | 2 | 2 | 70 | 31 | Comp. |
| 24 | 5 | 5 | 70 | 30 | Inv. |
| 25 | 5 | 5 | 70 | 30 | Inv. |
| 26 | 5 | 5 | 70 | 30 | Inv. |

| | | | | | |
|---|---|---|---|---|---|
| Comp.: Comparative Example | | | | | |
| Inv.: Present Invention | | | | | |

**Table 12**

| Sample No. | Ranking of Unpleasant Odors | Ranking of Folding Resistance | Curing Speed mJ/cm² | Viscosity mPa·s | Remarks |
|---|---|---|---|---|---|
| 27 | 1 | 1 | 300 | 20 | Comp. |
| 28 | 3 | 3 | 280 | 18 | Inv. |
| 29 | 3 | 3 | 280 | 18 | Inv. |
| 30 | 3 | 3 | 280 | 20 | Inv. |
| 31 | 2 | 2 | 100 | 18 | Comp. |
| 32 | 2 | 2 | 100 | 18 | Comp. |
| 33 | 4 | 4 | 97 | 17 | Inv. |
| 34 | 4 | 4 | 97 | 17 | Inv. |
| 35 | 4 | 4 | 97 | 18 | Inv. |
| 36 | 5 | 4 | 95 | 17 | Inv. |
| 37 | 5 | 4 | 95 | 18 | Inv. |
| 38 | 1 | 3 | 200 | 16 | Comp. |
| 39 | 4 | 4 | 180 | 15 | Inv. |
| 40 | 4 | 4 | 180 | 15 | Inv. |
| 41 | 4 | 4 | 180 | 16 | Inv. |
| 42 | 2 | 2 | 70 | 30 | Comp. |
| 43 | 4 | 4 | 70 | 28 | Inv. |
| 44 | 4 | 4 | 70 | 28 | Inv. |
| 45 | 4 | 4 | 70 | 30 | Inv. |
| 46 | 5 | 4 | 65 | 30 | Inv. |
| 47 | 5 | 4 | 65 | 30 | Inv. |
| 48 | 2 | 2 | 70 | 31 | Comp. |
| 49 | 2 | 2 | 70 | 31 | Comp. |
| 50 | 5 | 5 | 66 | 30 | Inv. |
| 51 | 5 | 5 | 66 | 30 | Inv. |
| 52 | 5 | 5 | 66 | 30 | Inv. |

| | | | | | |
|---|---|---|---|---|---|
| Comp.: Comparative Example | | | | | |
| Inv.: Present Invention | | | | | |

As can be seen from Tables 11 and 12, the samples of the present invention resulted in no decrease in speed, exhibited excellent folding resistance, and minimized unpleasant odors.

### Example 2

### (Preparation of Actinic Radiation Curable Ink-Jet Ink Set)

A dispersing agent (PB822, produced by Ajinomoto Finetechno Co.) and each of the photopolymerizable compounds listed in Tables 13 and 14 were charged into a stainless steel beaker, mixed while stirring over one hour while heated on a hot plate at 65 °C, and were then subjected to dissolution. Subsequently, various types of pigments (listed in Table 15) were added to the resulting solution. The resulting mixture was placed in a plastic bottle together with 200 g of 1 mm diameter zirconia beads, sealed and dispersed for two hours, employing a paint shaker. Subsequently, the zirconia beads were removed and each photopolymerization initiator and various additives such as a basic compound or a surface active agent were combined as listed in Tables 13 and 14, and added. The resulting mixture was filtered through a 0.8 µm membrane filter to minimize subsequent clogging in a printer, whereby an ink set was prepared. Incidentally, ink viscosity was controlled to be 20 - 30 mPa·s by regulating the added amount of compounds having an oxetane ring and epoxy compounds. Further, the pigment concentration of light colors (Lk, Lc, Lm, and Ly) was controlled to be 1/5.

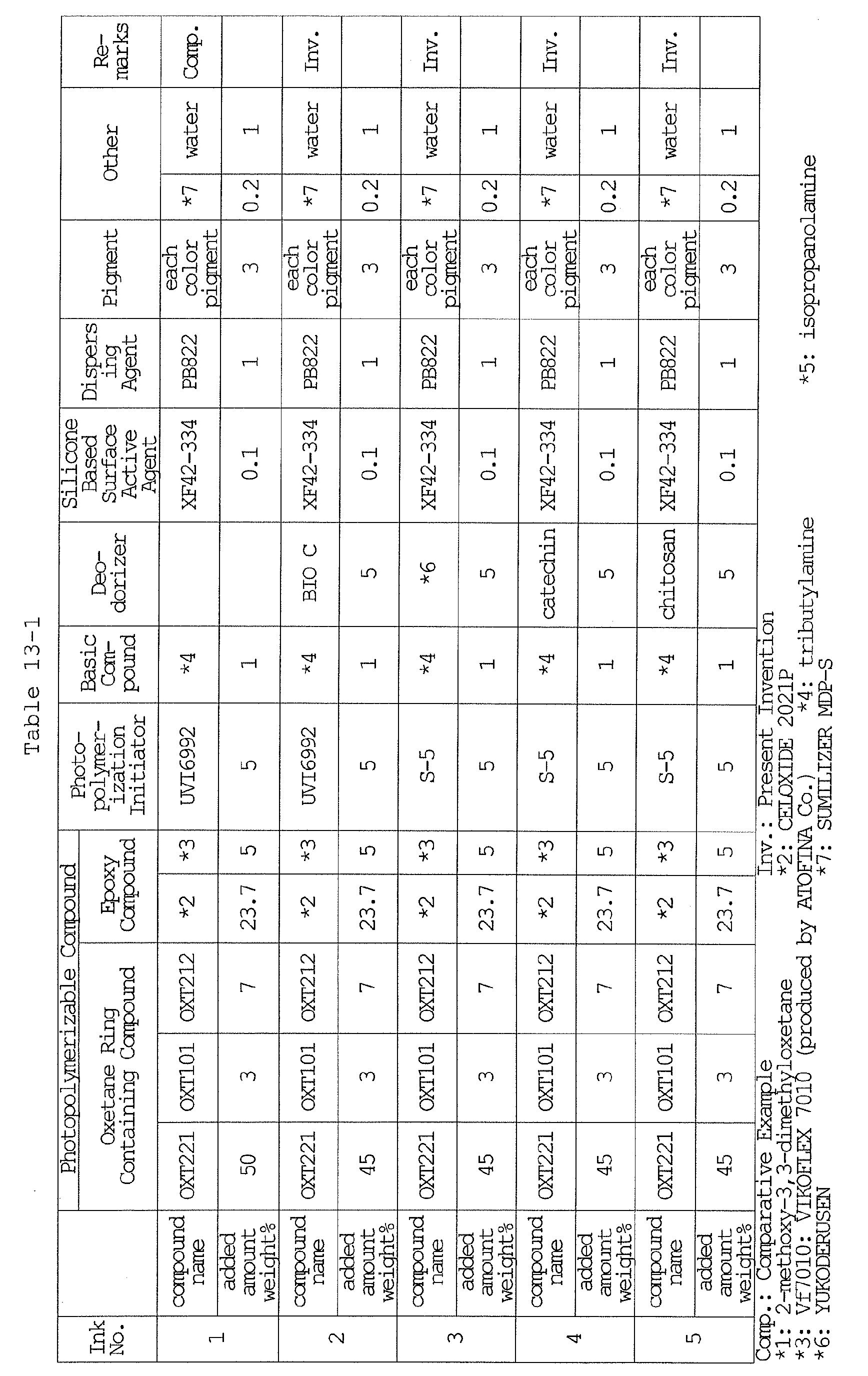

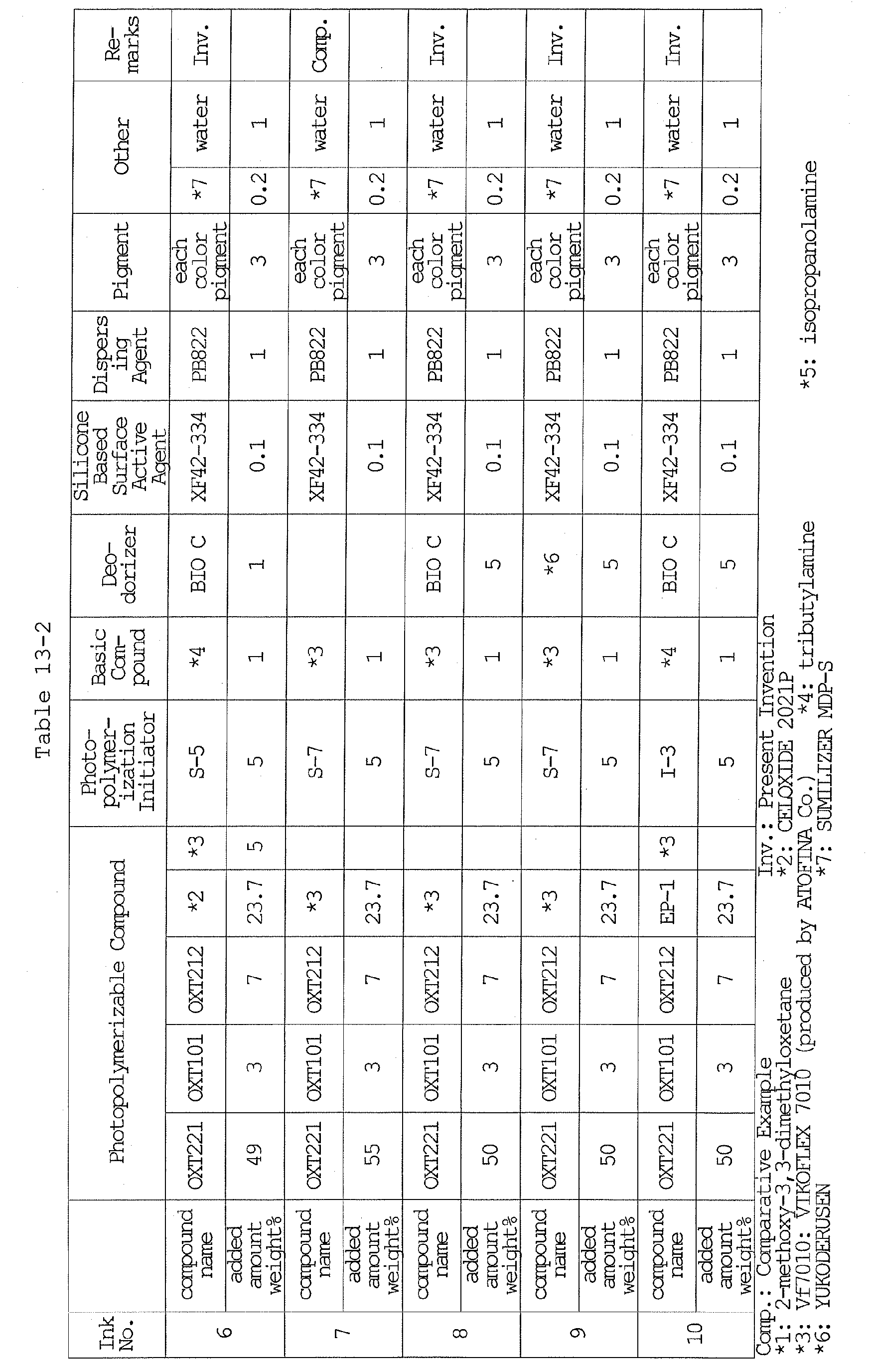

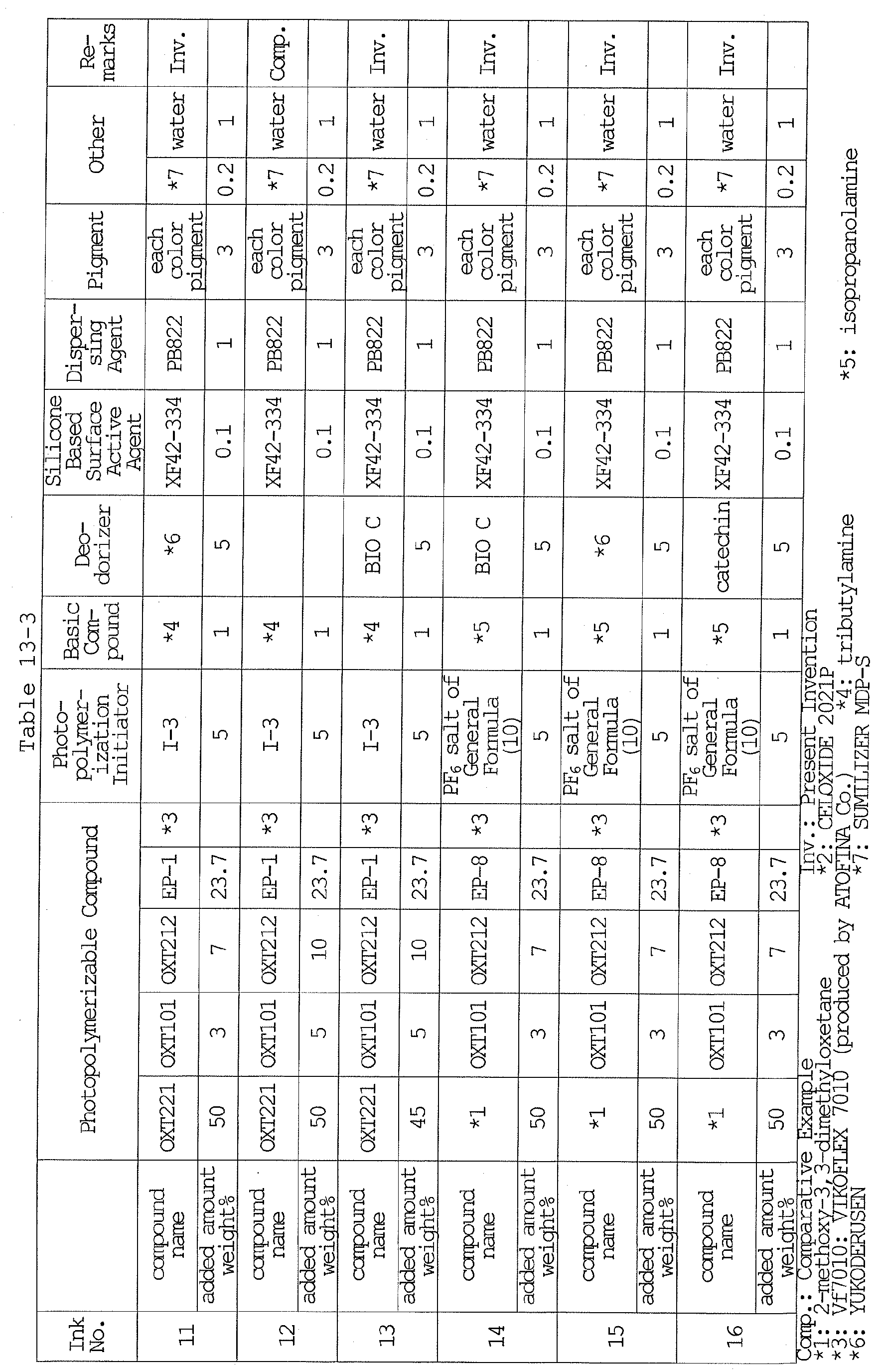

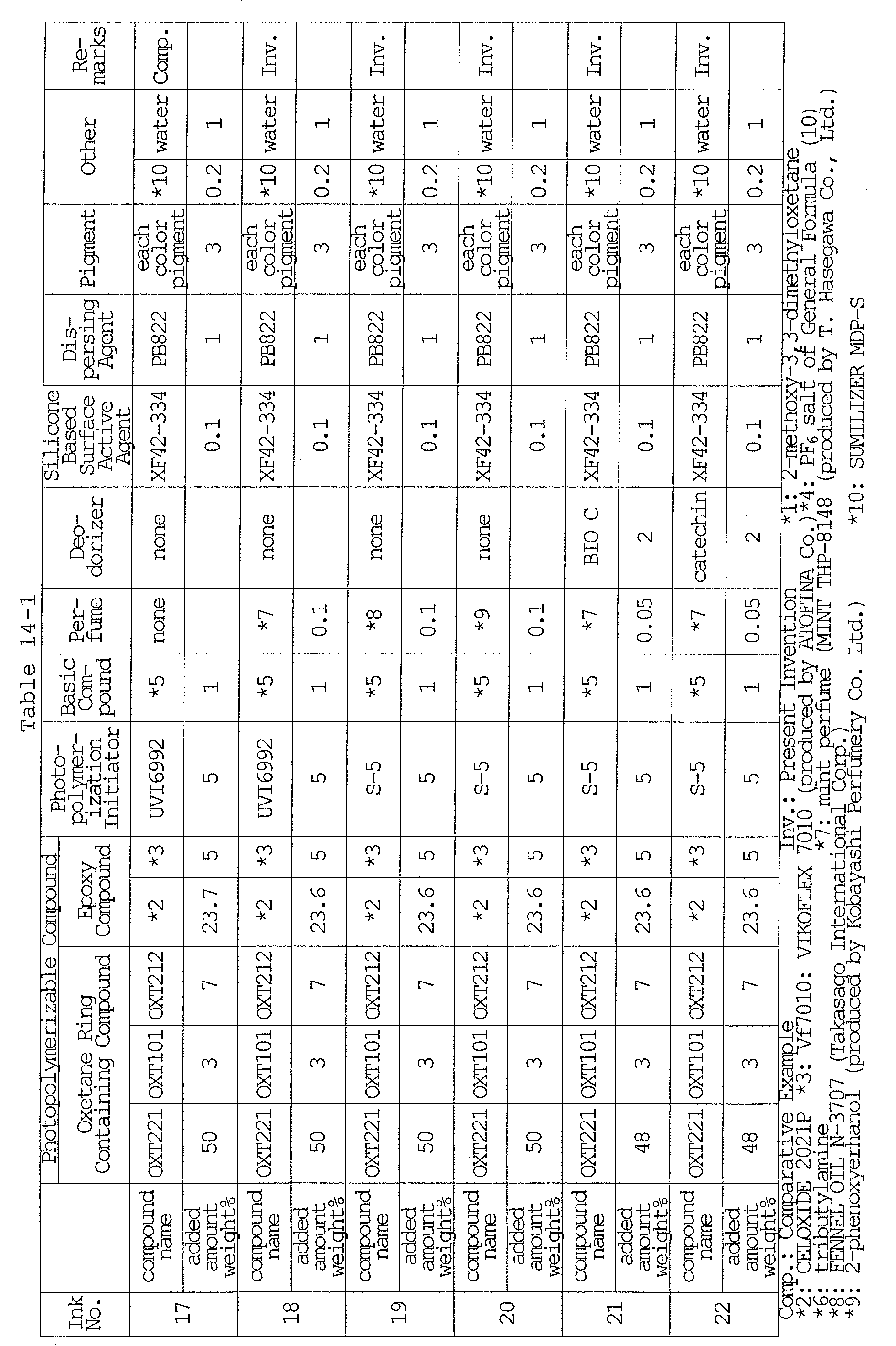

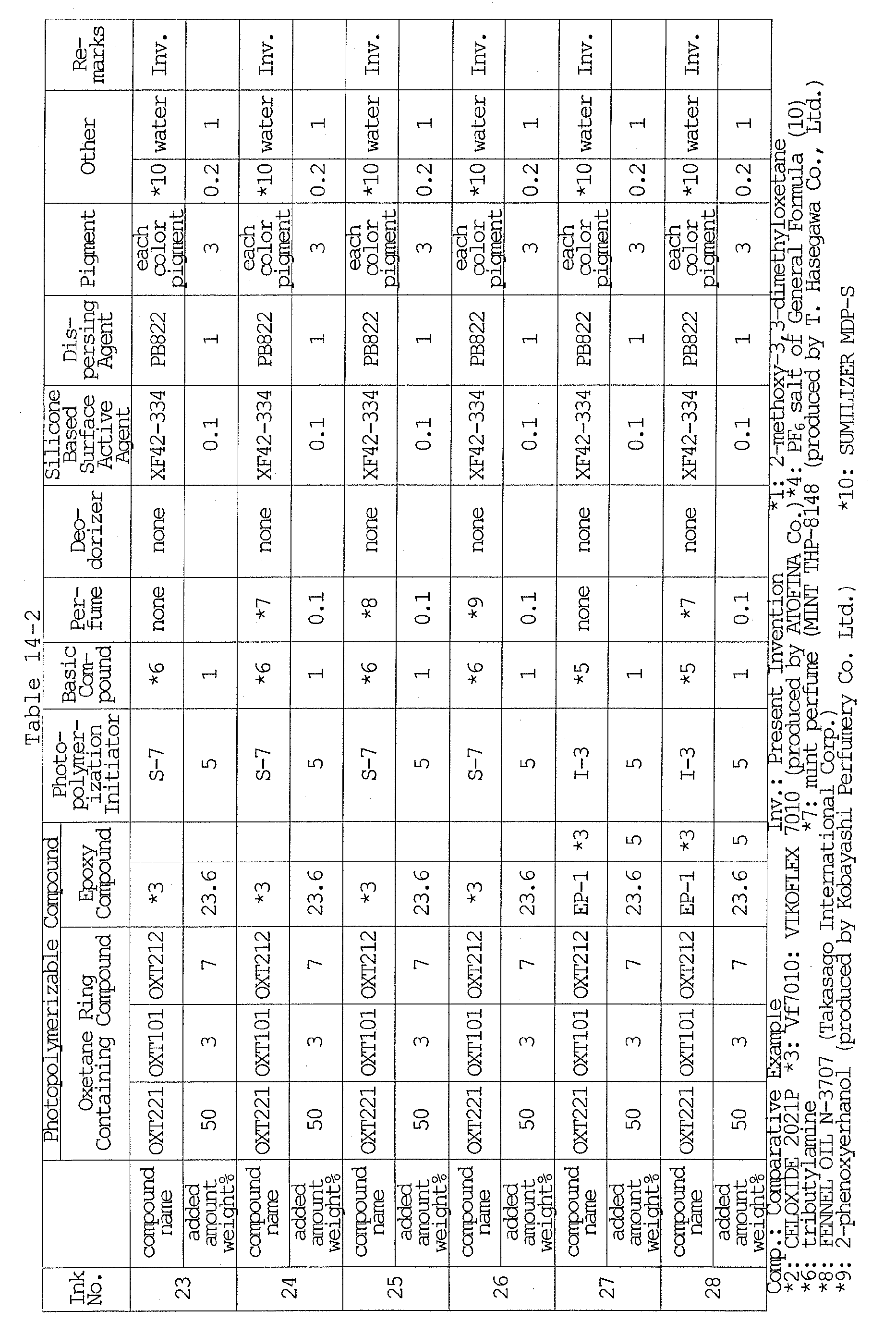

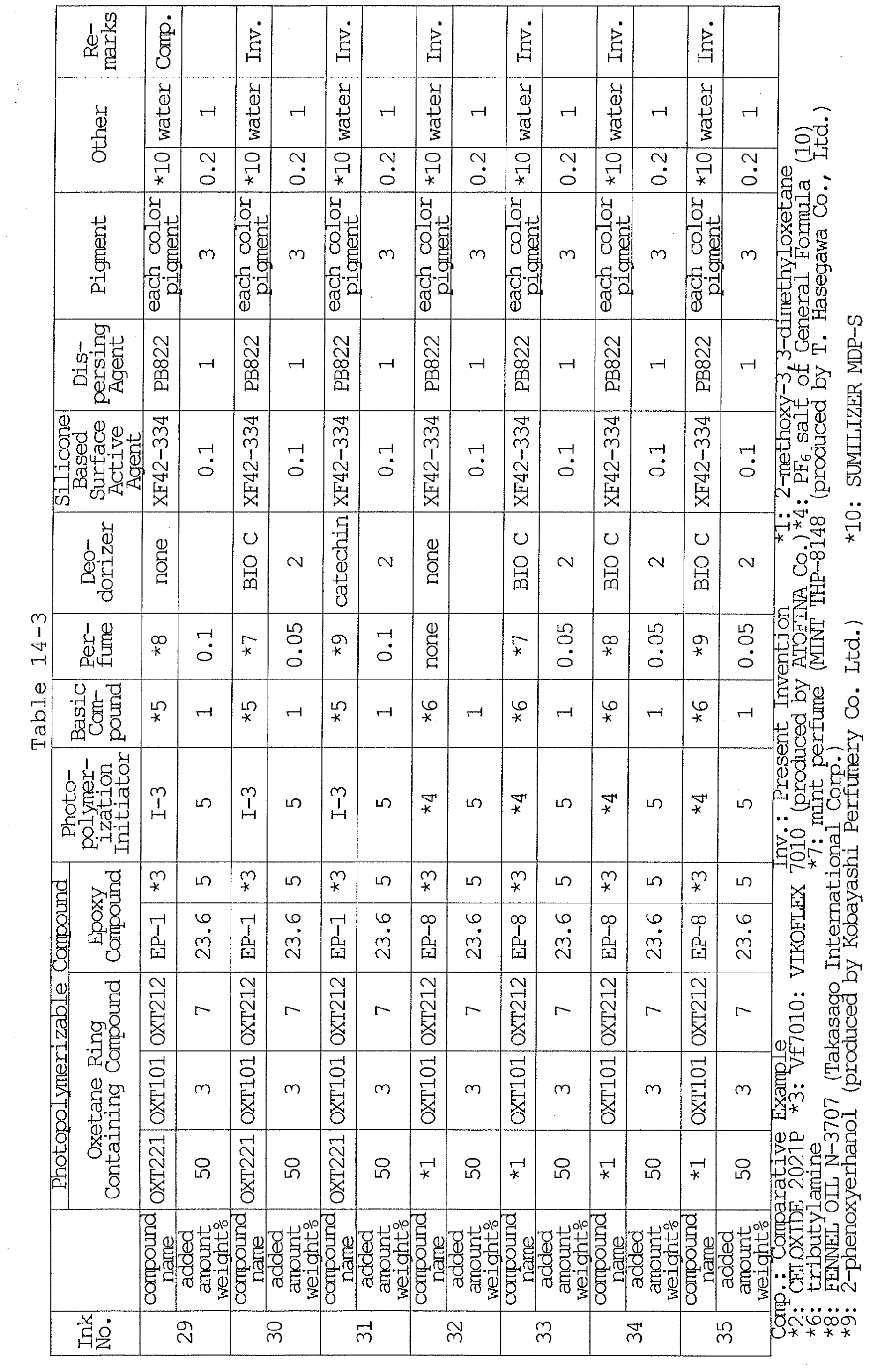

**Table 15**

| K | C | M | Y | W | Lk | Lc | Lm | Ly |
|---|---|---|---|---|---|---|---|---|
| CI pigment Black 7 | CI pigment Blue 15:3 | CI pigment Red 57:1 | CI pigment Yellow 13 | titanium oxide (anatase type: particle diameter of 0.2 µ) | CI pigment Black 7 | CI pigment Blue 15:3 | CI pigment Red 57:1 | CI pigment Yellow 13 |

Compounds used in the above tables are as follows
OXT-212: produced by TOAGOSEI Co., Ltd.
XF42-334: silicone oil, produced by GE Toshiba Silicone Co. SUMILIZER MDP-S: 2,2'-methylenebis(4-methyl-6-t-butylphenol), produced by Sumitomo Chemical Industry Co., Ltd.

### <<Method for Forming Ink-Jet Images>>

Each of the ink sets prepared as above was loaded onto an ink-jet recording apparatus provided with piezo type ink jet nozzles constituted as Fig. 1, and the following image recording was continuously performed on each of the 600 mm wide recording materials of a length of 20 m. The ink feeding system was composed of an ink tank, a feeding pipe, a pre-chamber ink tank just before the head, piping fitted with a filter, and piezo heads. The portion from the pre-chamber to the head was insulated against heat and heated at 50 °C. Incidentally, the above ink-jet recording apparatus was driven so that multi-size dots of a droplet volume of 2 - 15 pl were ejected to result in a resolution of 730 x 730 dpi (dpi refers to the number of dots per inch, namely 2.54 cm), while heating the head portions to reach the specified viscosity of each actinic radiation curable ink-jet ink, whereby the above actinic radiation curable ink-jet ink was continuously ejected. Further, the materials were heated to 40 °C employing a plate heater. After deposition of ink droplets, radiation in an amount of 180 mW / cm² was irradiated onto the ink droplets, employing hot-cathode tubes (being cusomerized products, produced by Nippo) as a radiation source mounted on both sides of the carriage, and curing was instantaneously performed (actually ess than 0.5 second after deposition). After image recording, the thickness of the total ink layer was determioned, resulting in a range of 2 - 60 µm. Incidentally, ink-jet images were formed based on the above method at an ambience of 25 °C and 20 percent relative humidity, as well as 30 °C and 80 percent relative humidity.

In regard to the illuminance of each irradiated radiation source, integral illuminance at 254 nm was determined employing UVPF-A1, produced by Iwasaki Electric Co. Ltd. Further, abbreviation of each of the listed recording materials refers to the following.
- YUPO FGS:: synthetic paper, YUPO FGS, produced by Yupo Corp.
- PVC:: polyvinyl chloride

### (Evaluation of Color Mixing (Bleeding and Wrinkling))

Printing was performed in such a manner that a dot of each of the Y, M, C, and K colors was adjacent to another at 720 dpi. The dot of each color adjacent to another was enlarged employing a hand magnifying lens, and bleeding and wrinkling were visually observed, whereby color mixing was evaluated based on the criteria below.
A: dots adjacent to others remained circular and no bleeding was noted
B: dots adjacent to others remained approximately circular and almost no bleeding was noted
C: dots adjacent to others exhibited slight bleeding to result in deformed dot shapes, resulting in the lowest limit of commercial viability
D: dots adjacent to others exhibited obvious bleeding with mixing and wrinkling generated in the overlapped portions, resulting in an unviable level of commercial value

**Table 16**

| Sample No. ing | 30 °C and 80% | | | | 25 °C and 20% | | | | Remarks |
|---|---|---|---|---|---|---|---|---|---|
| | PVC Bleed- | UPO FGS | | | PVC Bleeding | UPO FGS | | | |
| | | Bleeding | Unpleasant Odors | Folding Resising tance | | Bleeding | Unpleasant Odors | Folding Resistance | |
| 1 | A | A | 1 | 3 | A | A | 2 | 3 | Comp. |
| 2 | A | A | 5 | 5 | A | A | 5 | 4 | Inv. |
| 3 | A | A | 5 | 5 | A | A | 5 | 4 | Inv. |
| 4 | A | A | 4 | 5 | A | A | 5 | 4 | Inv. |
| 5 | A | A | 4 | 5 | A | A | 5 | 4 | Inv. |
| 6 | A | A | 4 | 4 | A | A | 5 | 4 | Inv. |
| 7 | B | B | 1 | 4 | B | B | 1 | 4 | Comp. |
| 8 | B | B | 3 | 5 | B | B | 4 | 5 | Inv. |
| 9 | B | B | 3 | 5 | B | B | 4 | 5 | Inv. |
| 10 | A | A | 5 | 5 | A | A | 5 | 4 | Inv. |
| 11 | A | A | 5 | 5 | A | A | 5 | 4 | Inv. |
| 12 | A | A | 1 | 5 | A | A | 1 | 5 | Comp. |
| 13 | A | A | 5 | 5 | A | A | 5 | 5 | Inv. |
| 14 | A | A | 5 | 5 | A | A | 5 | 5 | Inv. |
| 15 | A | A | 5 | 5 | A | A | 5 | 5 | Inv. |
| 16 | A | A | 5 | 5 | A | A | 5 | 5 | Inv. |

| | | | | | | | | | |
|---|---|---|---|---|---|---|---|---|---|
| Comp.: Comparative Example | | | | | | | | | |
| Inv.: Present Invention | | | | | | | | | |

**Table 17**

| Sample No. | 30 °C and 80% | | | | 25 °C and 20% | | | | Remarks |
|---|---|---|---|---|---|---|---|---|---|
| | PVC Bleeding | UPO FGS | | | PVC Bleeding | UPO FGS | | | |
| | | Bleeding | Unpleasant Odors | Folding Resistance | | Bleeding | Unpleasant Odors | Folding Resistance | |
| 17 | A | A | 1 | 3 | A | A | 2 | 3 | Comp. |
| 18 | A | A | 4 | 5 A | | A | 4 | 4 | Inv. |
| 19 | A | A | 4 | 5 | A | A | 4 | 4 | Inv. |
| 20 | A | A | 4 | 5 | A | A | 4 | 4 | Inv. |
| 21 | A | A | 5 | 5 | A | A | 5 | 5 | Inv. |
| 22 | A | A | 5 | 5 | A | A | 5 | 5 | Inv. |
| 23 | B | B | 1 | 4 | B | B | 1 | 4 | Comp. |
| 24 | B | B | 4 | 5 | B | B | 4 | 5 | Inv. |
| 25 | B | B | 3 | 5 | B | B | 4 | 5 | Inv. |
| 26 | A | A | 5 | 5 | A | A | 5 | 5 | Inv. |
| 27 | A | A | 1 | 5 | A | A | 1 | 5 | Comp. |
| 28 | A | A | 4 | 5 | A | A | 5 | 5 | Inv. |
| 29 | A | A | 4 | 5 | A | A | 5 | 5 | Inv. |
| 30 | A | A | 5 | 5 | A | A | 5 | 5 | Inv. |
| 31 | A | A | 5 | 5 | A | A | 5 | 5 | Inv. |
| 32 | A | A | 2 | 5 | A | A | 2 | 5 | Comp. |
| 33 | A | A | 5 | 5 | A | A | 5 | 5 | Inv. |
| 34 | A | A | 5 | 5 | A | A | 5 | 5 | Inv. |
| 35 | A | A | 5 | 5 | A | A | 5 | 5 | Inv. |

| | | | | | | | | | |
|---|---|---|---|---|---|---|---|---|---|
| Comp.: Comparative Example | | | | | | | | | |
| Inv.: Present Invention | | | | | | | | | |

As can be seen from the results of Tables 16 and 17, the samples of the present invention resulted in no degradation of image quality, minimal unpleasant odors, and improved folding resistance. Further, it can be seen that irrespective of ambience, the samples of the present invention exhibited excellent overall performance.

### Example 3

### (Preparation of Actinic Radiation Curable Ink-Jet Ink)

A dispersing agent (PB822, produced by Ajinomoto Finetechno Co.) and each of the photopolymerizable compounds listed in Table 18 were charged into a stainless steel beaker, mixed via stirring over one hour while heated on a hot plate at 65 °C, and were then subjected to dissolution. Subsequently, a cyan pigment (CI Pigment Blue-15 : 3) was added into the resulting solution. Thereafter, the resulting mixture was placed in a plastic bottle together with 200 g of 1 mm diameter zirconia beads, sealed and dispersed for two hours, employing a paint shaker. Subsequently, the zirconia beads were removed and each photopolymerization initiator and various additives such as the basic compound or a surface active agent were added as listed in Table 18. The resulting mixture was filtered through a 0.8 µm membrane filter to minimize clogging in the printer, whereby a cyan ink was prepared. Incidentally, ink viscosity was controlled to be 20 - 30 mPa·s by regulating the added amount of compounds having an oxetane ring and of epoxy compounds.

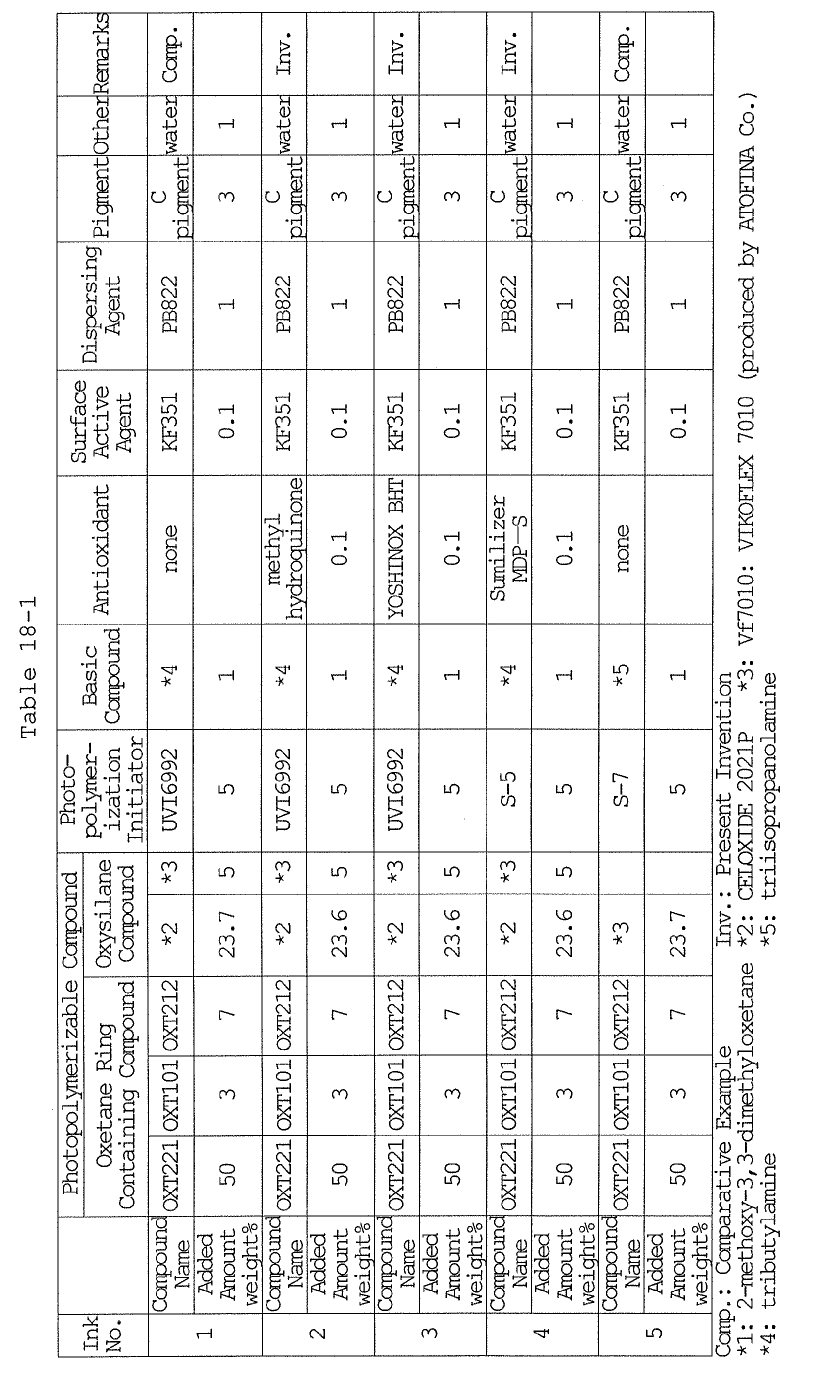

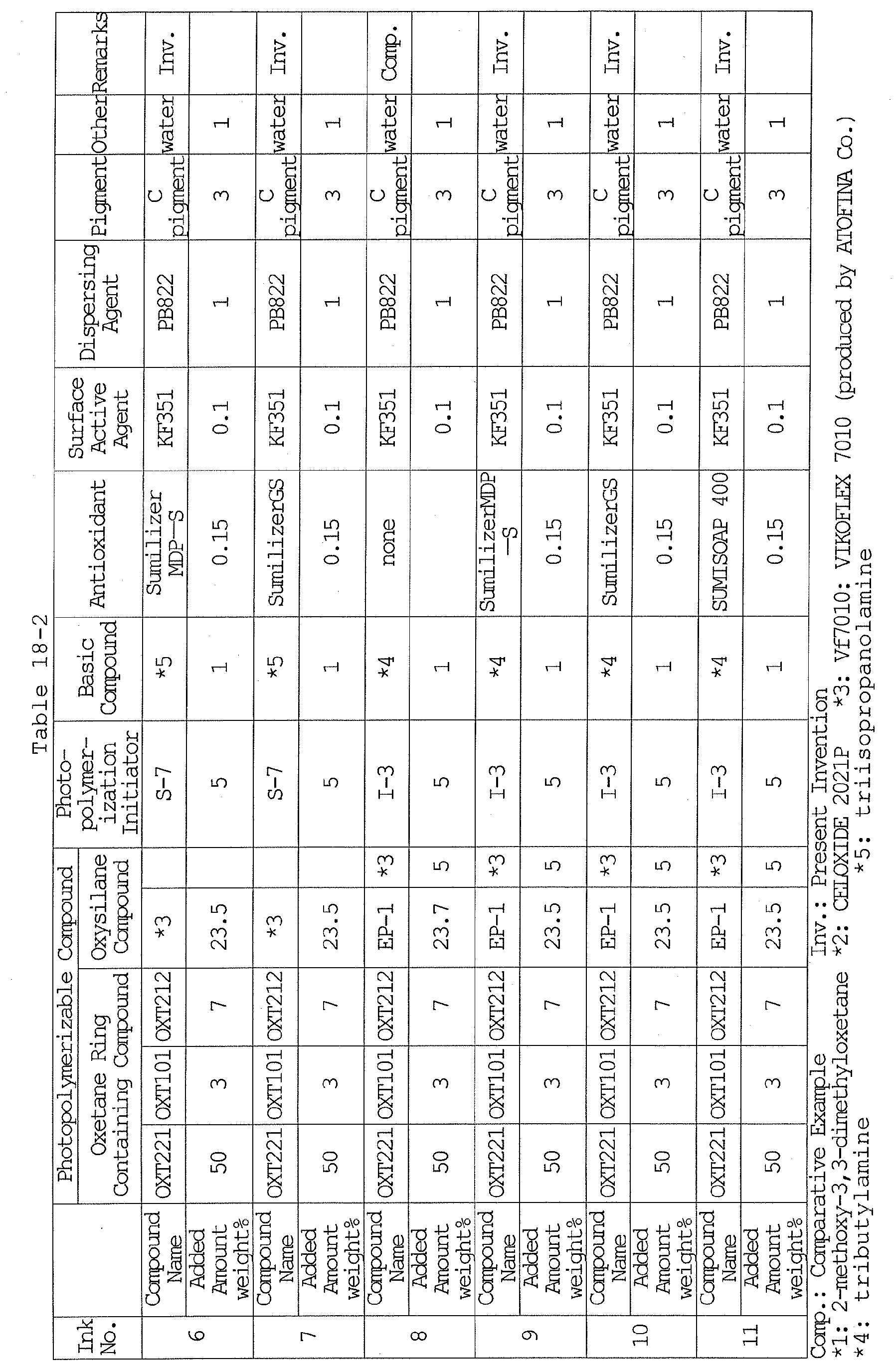

Used compounds listed in the above table are as follows.
YOSHINOX BHT: 2,6-di-t-butyl-p-cresol, produced by API Corp.
HOSTAVIN N-24: amine based antioxidant, produced by Clariant Co.
KF351: silicone oil, produced by Shin-Etsu Chemical Co., Ltd. SUMILIZER GS (produced by Sumitomo Chemical Co., Ltd.) 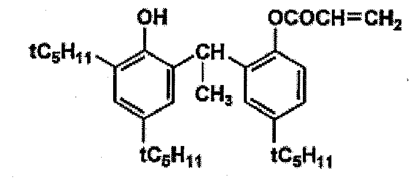 SUMISOAP 400 (produced by Sumitomo Chemical Co., Ltd.)

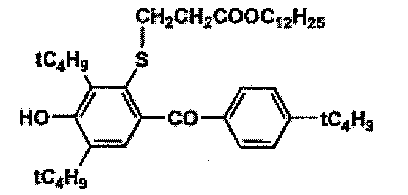

Each of the 16 types of cyan inks listed in Table 18, prepared as above, was placed in a polyethylene bottle (at a capacity of 100 ml) in an amount of 50 ml and stored at 70 °C for 7 days. Subsequently, any increase in viscosity compared to that prior to the storage was determined. Viscosity was determined in the same manner as in Example 1.

**Table 19**

| Sample No. | Increase in Viscosity (mPa·S) | Remarks |
|---|---|---|
| 1 | 50 | Comp. |
| 2 | 6 | Inv. |
| 3 | 5 | Inv. |
| 4 | 3 | Inv. |
| 5 | 30 | Comp. |
| 6 | 2 | Inv. |
| 7 | 2 | Inv. |
| 8 | 60 | Comp. |
| 9 | 4 | Inv. |
| 10 | 3 | Inv. |
| 11 | 3 | Inv. |
| 12 | 3 | Inv. |
| 13 | 65 | Comp. |
| 14 | 4 | Inv. |
| 15 | 3 | Inv. |
| 16 | 3 | Inv. |

| | | |
|---|---|---|
| Comp.: Comparative Example | | |
| Inv.: Present Invention | | |

Based on Table 19, the cyan inks according to the present invention resulted in a much smaller increase in viscosity compared to the comparative examples, whereby desired effects of the antioxidants are evident.

### (Preparation of Actinic Radiation Curable Compositions)

Photopolymerizable compounds, photopolymerization initiators and other additives were added as listed in the following tables and then dissolved, whereby actinic radiation curable compositions were prepared. Each table represents one block of a curable composition.

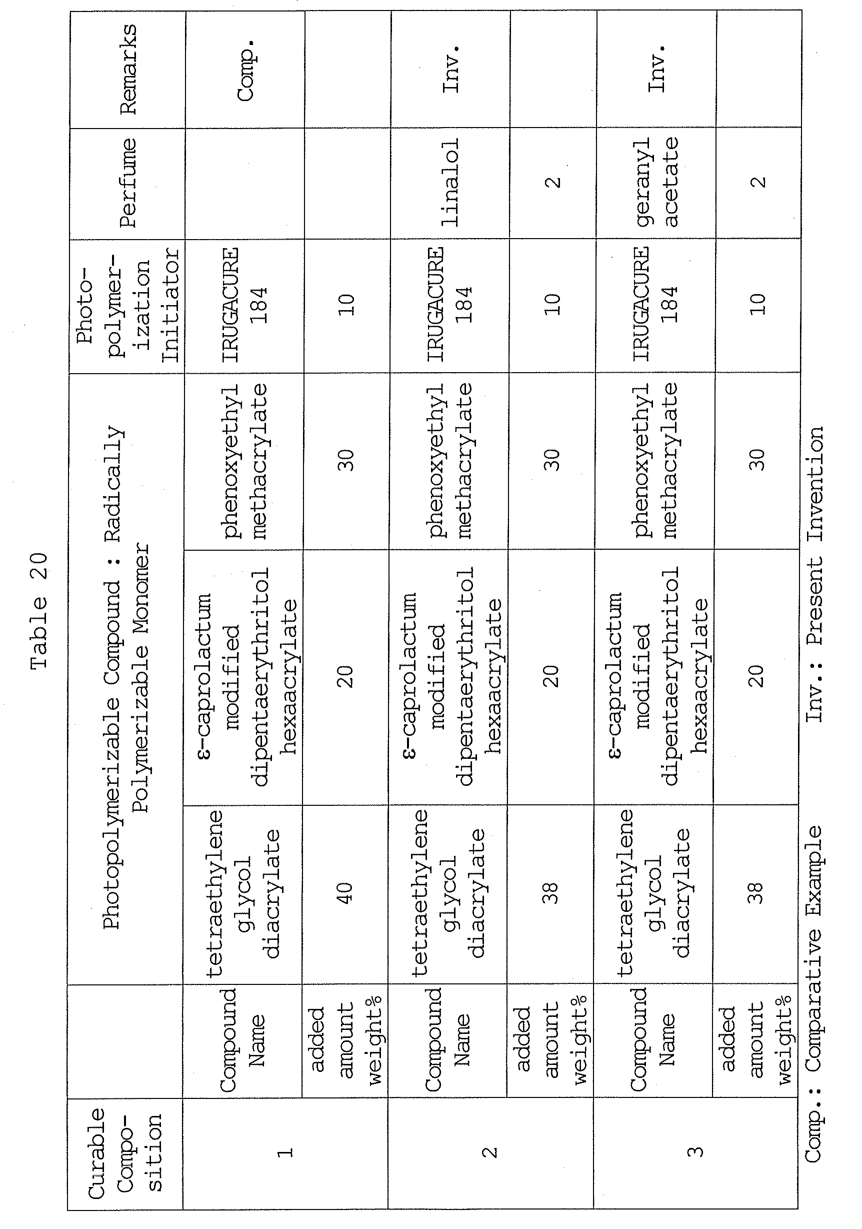

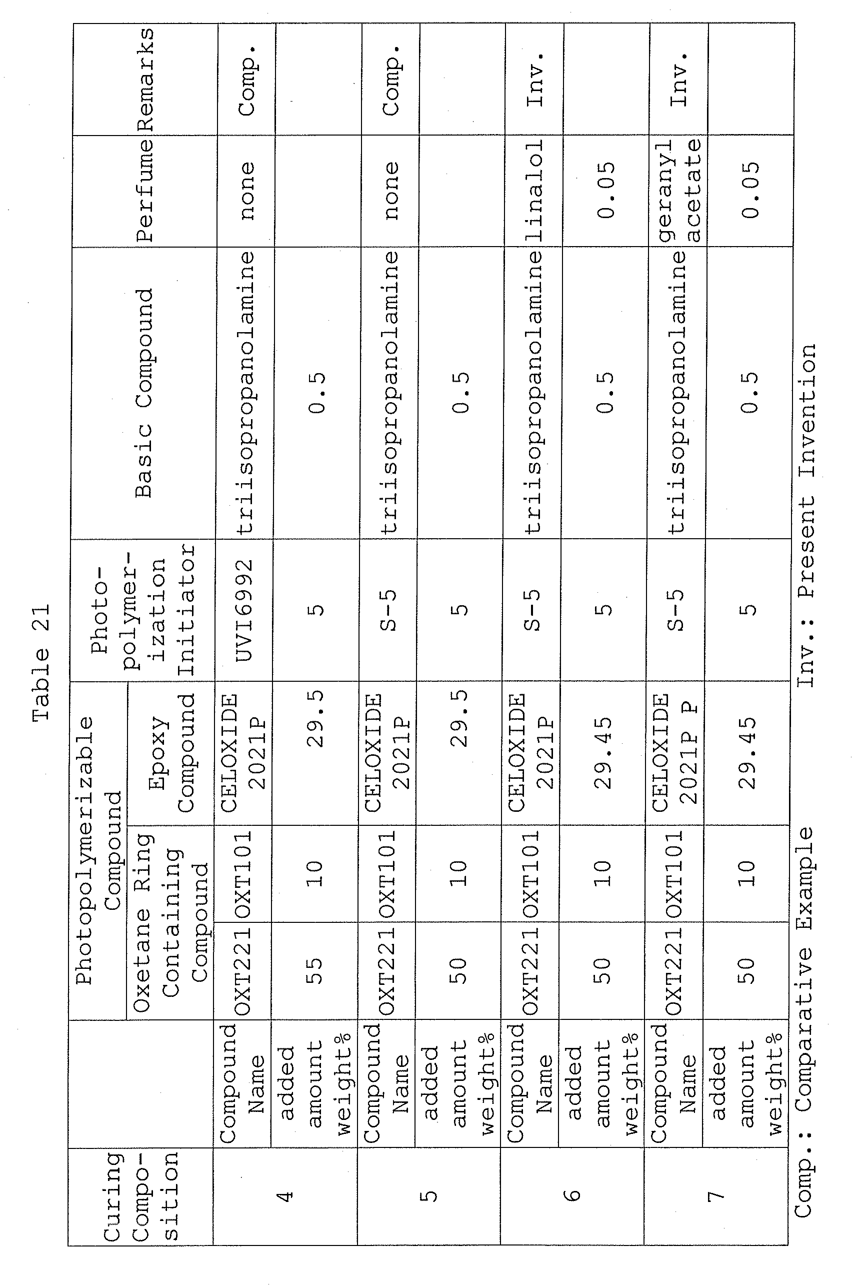

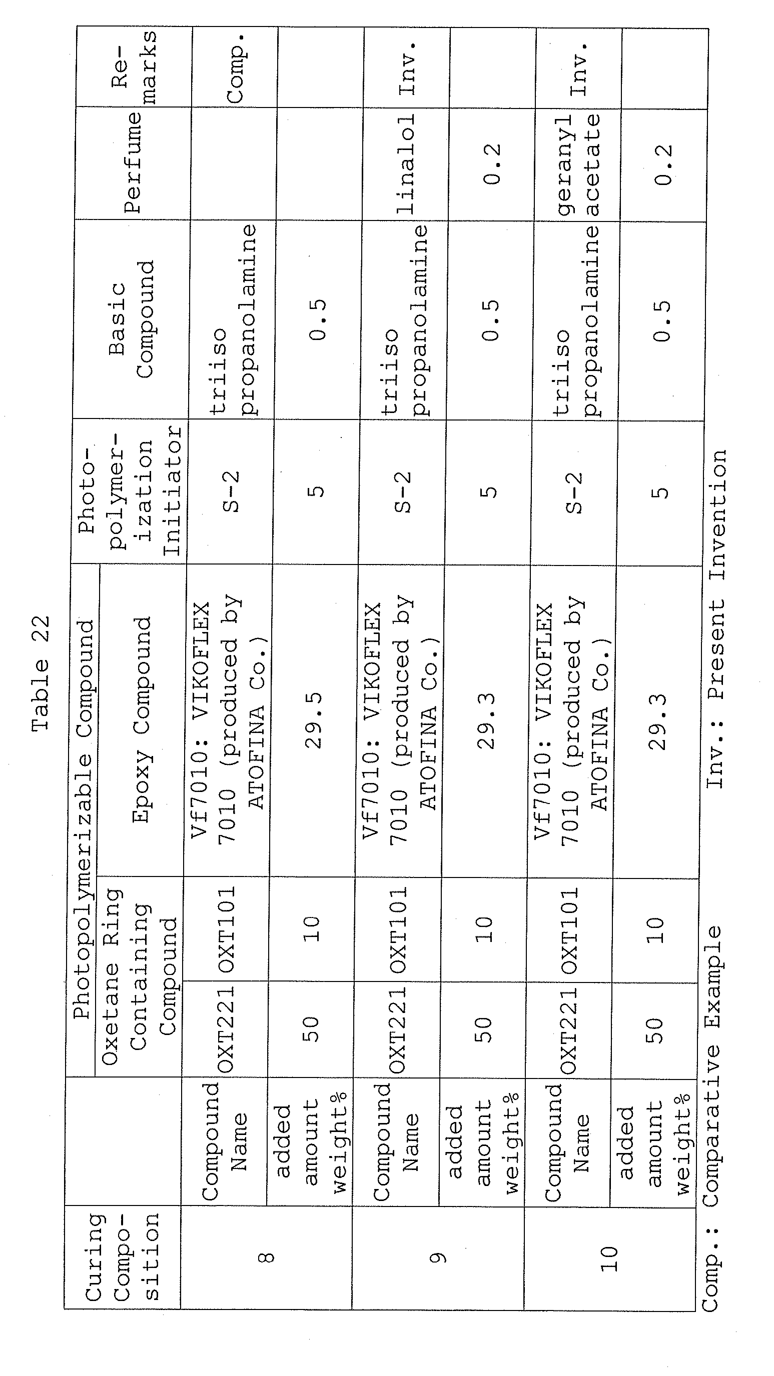

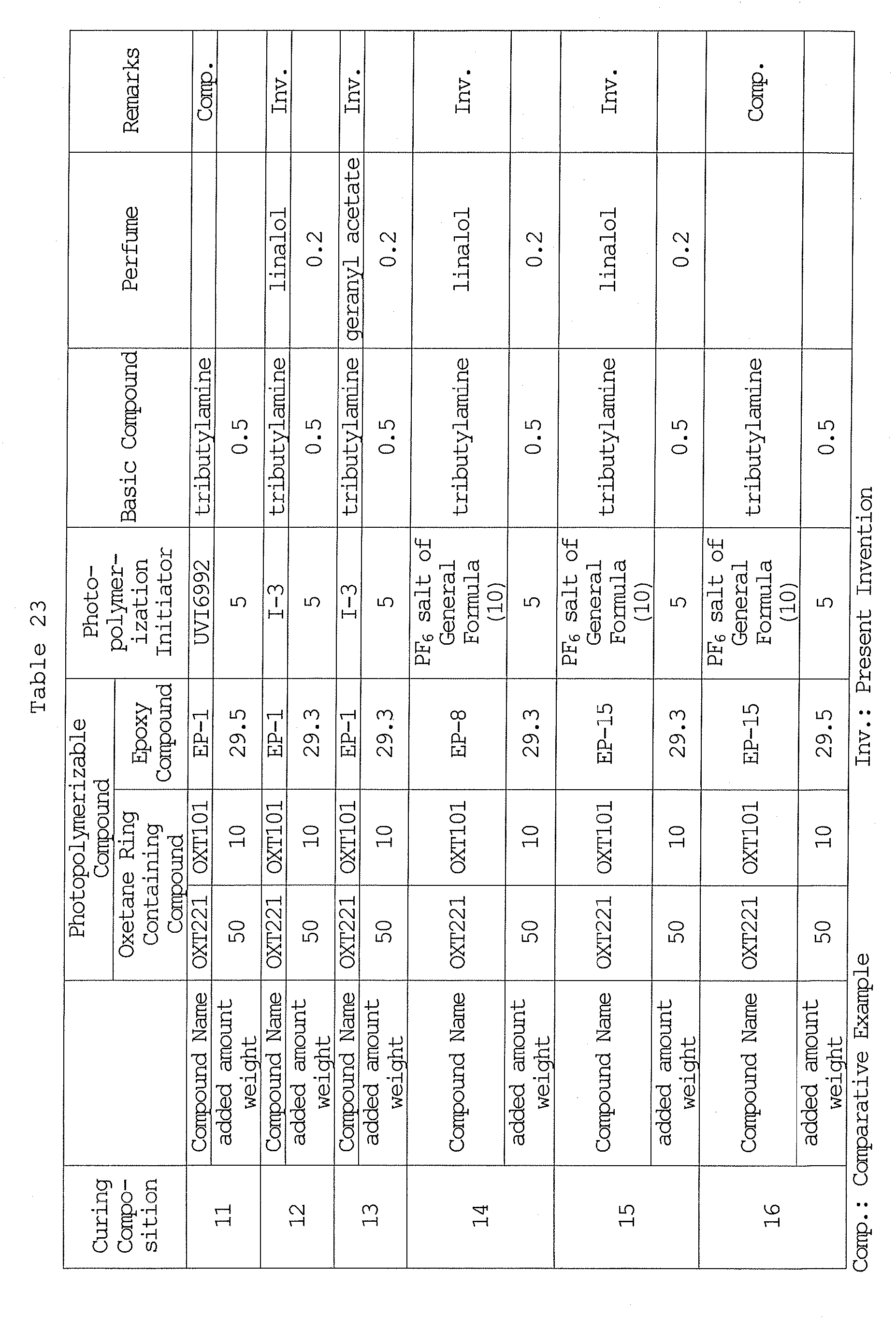

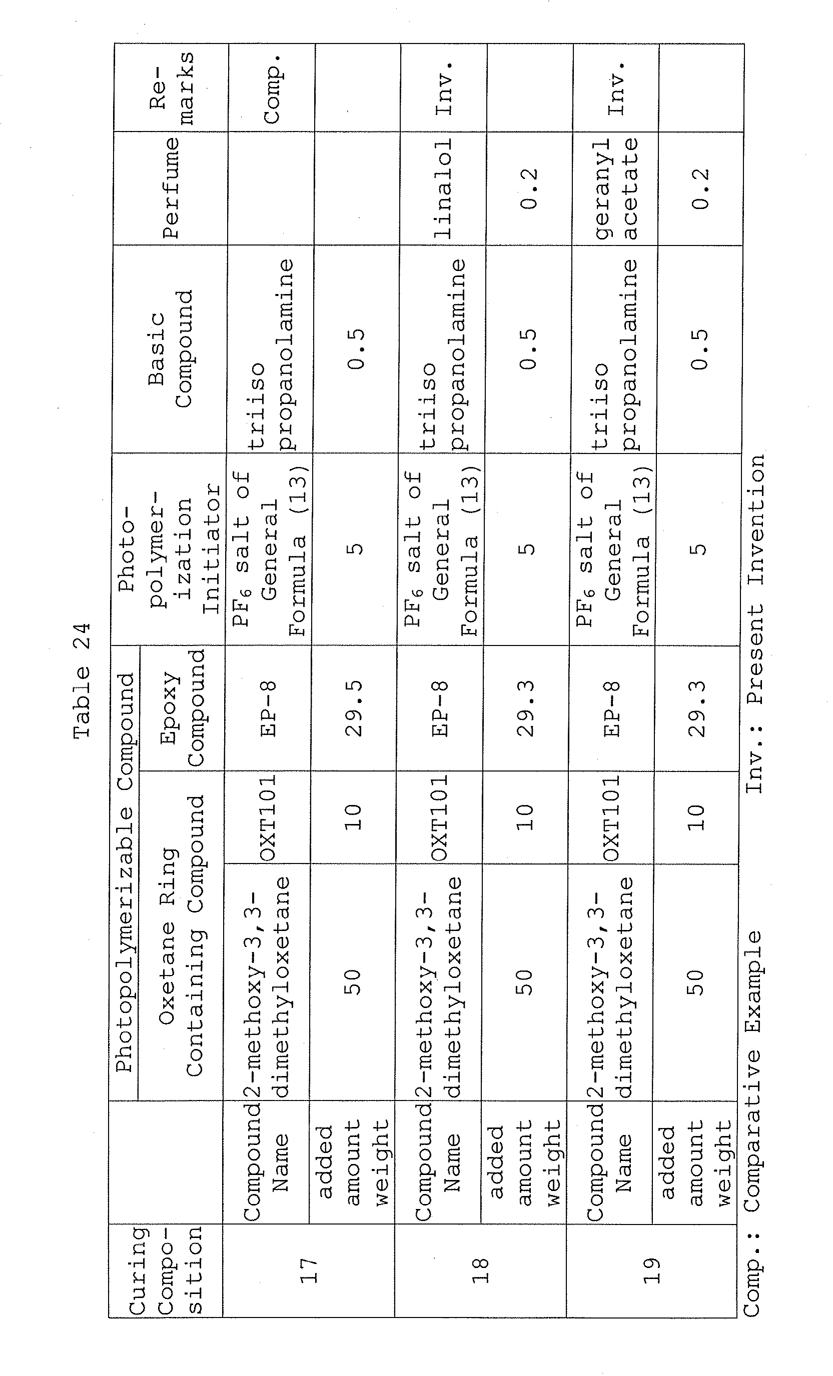

The table below shows the evaluation results in the same manner as in Example 1. Incidentally, the results of each of Sample Nos. 1 - 3, 4 - 7, 8 - 10, 11 - 16, and 17 - 19 correspond to Tables 20, 21, 22, 23, and 24, respectively.

**Table 25**

| Sample No. | Ranking of Unpleasant Odors | Ranking of Folding Resistance | Curing speed mJ/cm² | Viscosity mPa·s | Remarks |
|---|---|---|---|---|---|
| 1 | 1 | 1 | 300 | 20 | Comp. |
| 2 | 3 | 2 | 270 | 18 | Inv. |
| 3 | 3 | 2 | 270 | 18 | Inv. |
| 4 | 2 | 1 | 100 | 18 | Comp. |
| 5 | 2 | 1 | 100 | 18 | Comp. |
| 6 | 4 | 3 | 90 | 17 | Inv. |
| 7 | 4 | 3 | 90 | 17 | Inv. |
| 8 | 1 | 2 | 200 | 16 | Comp. |
| 9 | 4 | 4 | 170 | 15 | Inv. |
| 10 | 4 | 4 | 170 | 15 | Inv. |
| 11 | 2 | 1 | 70 | 30 | Comp. |
| 12 | 5 | 4 | 65 | 28 | Inv. |
| 13 | 5 | 4 | 65 | 28 | Inv. |
| 14 | 5 | 4 | 65 | 30 | Inv. |
| 15 | 5 | 4 | 65 | 30 | Inv. |
| 16 | 2 | 1 | 70 | 31 | Comp. |
| 17 | 2 | 1 | 70 | 31 | Comp. |
| 18 | 5 | 5 | 64 | 30 | Inv. |
| 19 | 5 | 5 | 64 | 30 | Inv. |

| | | | | | |
|---|---|---|---|---|---|
| Comp.: Comparative Example | | | | | |
| Inv.: Present Invention | | | | | |

As can clearly be seen from Table 25, the samples of the present invention resulted in no decrease in speed, exhibited excellent folding resistance, and minimized unpleasant odors.

### Example 5

Actinic radiation curable ink-jet ink sets listed in Table 26 were prepared in the same manner as in Example 1. Incidentally, each of the pigments in Table 26 was the same as the ones listed in Table 15. Further, images were formed based on the ink-jet image forming method used in Example 1 and were similarly evaluated. Table 27 shows the results.

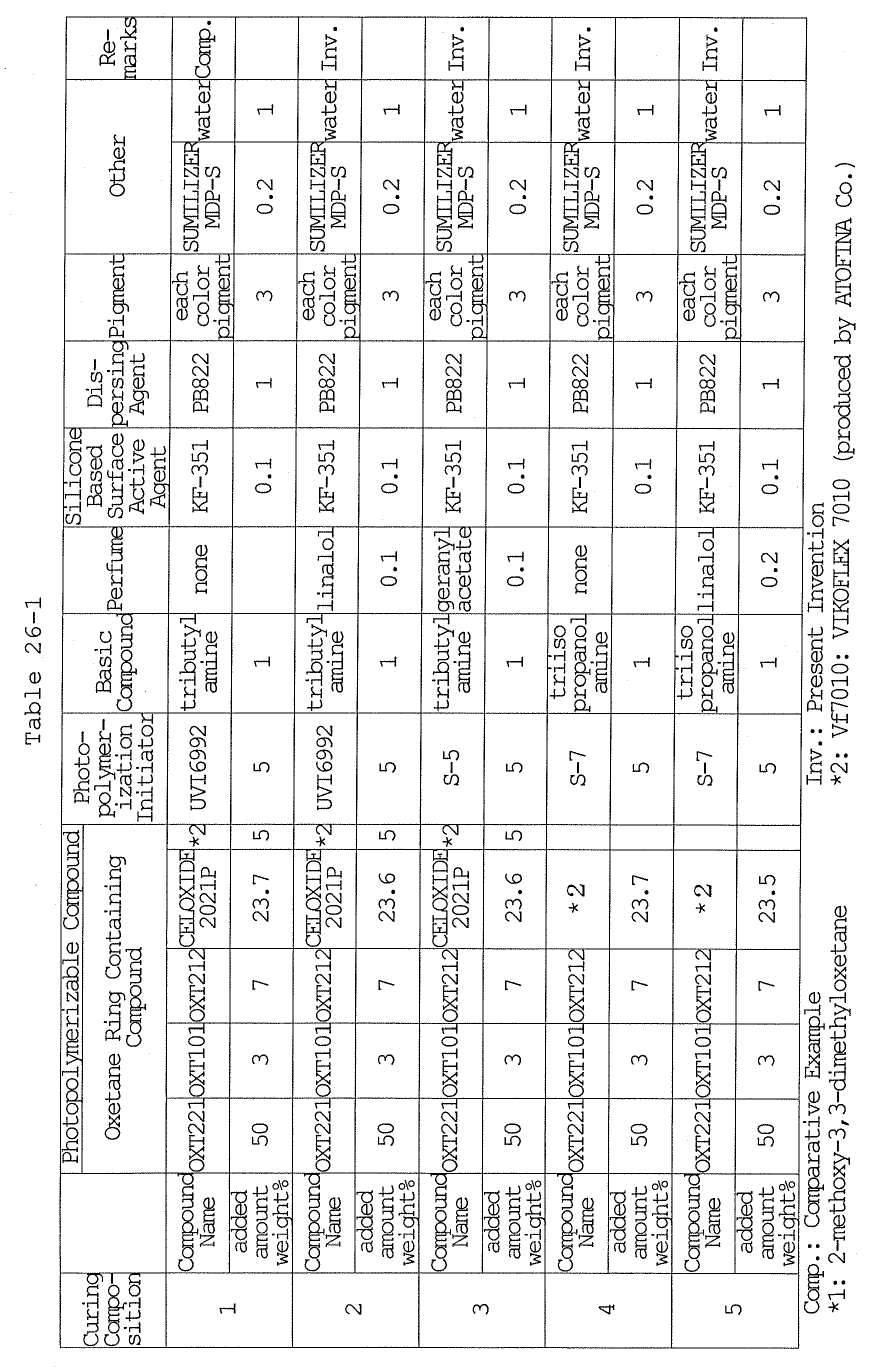

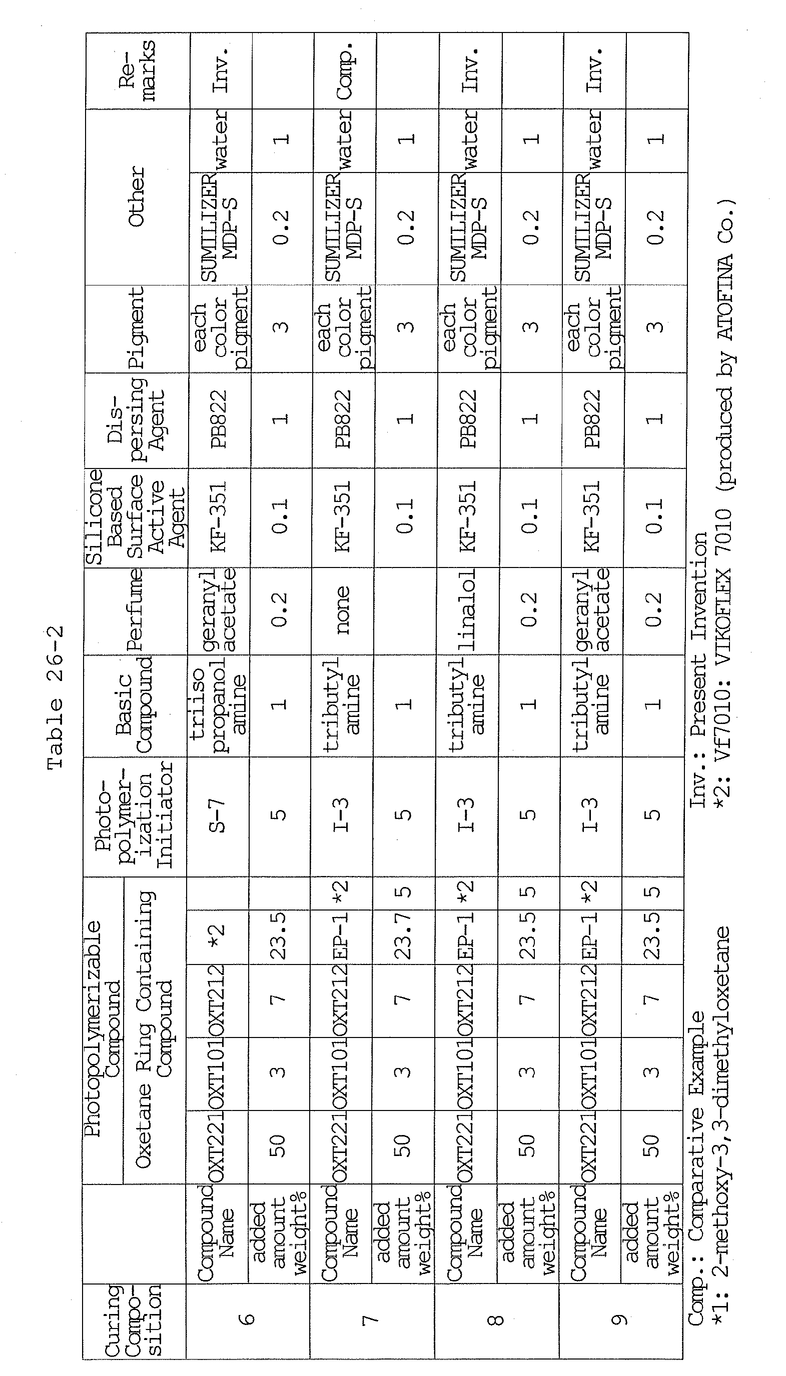

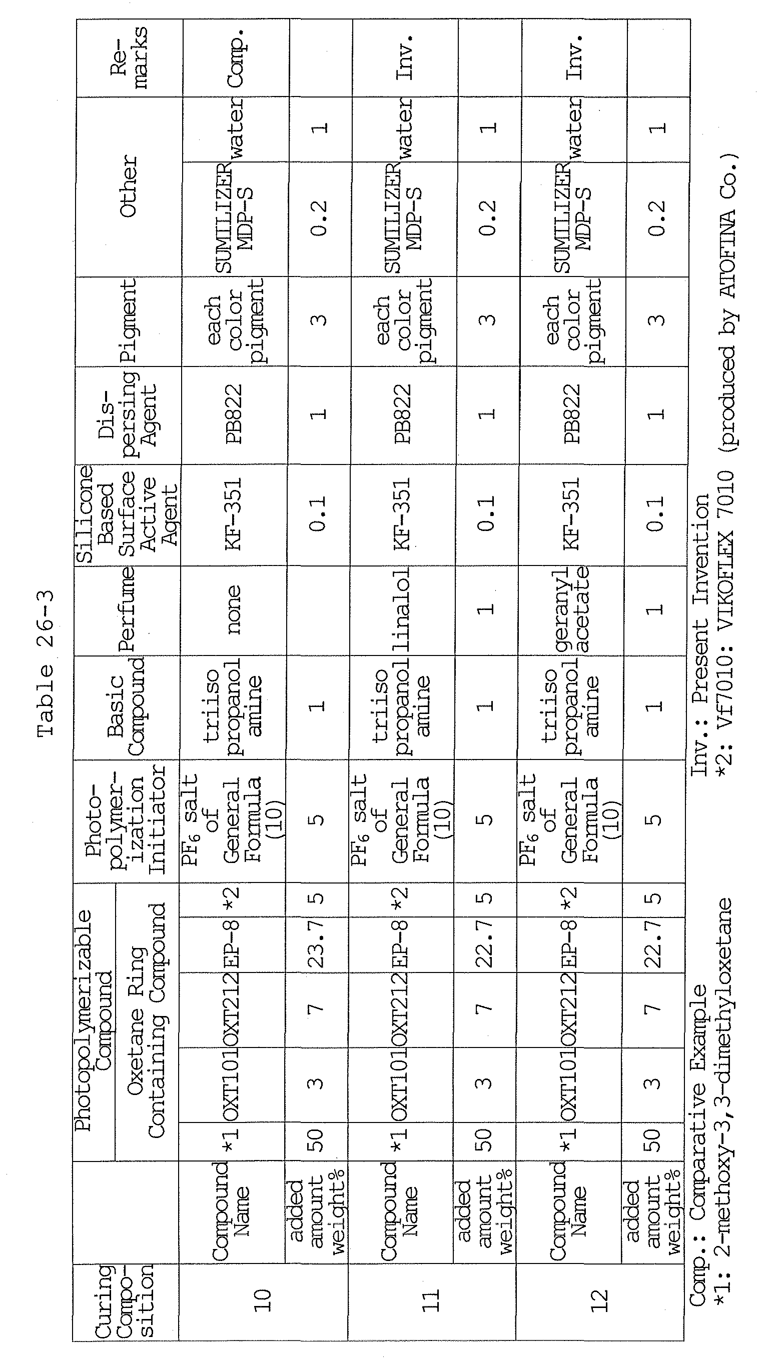

**Table 27**

| Sample | 30 °C and 80% | | | | 25 °C and 20% | | | | Remarks |
|---|---|---|---|---|---|---|---|---|---|
| | PVC | YUPO FGS | | | PVC | YUPO FGS | | | |
| | Bleeding | Bleeding | Unpleasant Odors | Fold Resising tance | Bleeding | Bleeding | Unpleasant Odors | Fold Resistance | |
| 1 | A | A | 1 | 3 | A | A | 2 | 3 | Comp. |
| 2 | A | A | 4 | 5 | A | A | 4 | 4 | Inv. |
| 3 | A | A | 4 | 5 | A | A | 4 | 4 | Inv. |
| 4 | B | B | 1 | 4 | B | B | 1 | 4 | Comp. |
| 5 | B | B | 4 | 5 | B | B | 4 | 5 | Inv. |
| 6 | B | B | 4 | 5 | B | B | 4 | 5 | Inv. |
| 7 | A | A | 1 | 5 | A | A | 1 | 5 | Comp. |
| 8 | A | A | 5 | 5 | A | A | 5 | 5 | Inv. |
| 9 | A | A | 5 | 5 | A | A | 5 | 5 | Inv. |
| 10 | A | A | 2 | 5 | A | A | 2 | 5 | Comp. |
| 11 | A | A | 5 | 5 | A | A | 5 | 5 | Inv. |
| 12 | A | A | 5 | 5 | A | A | 5 | 5 | Inv. |

| | | | | | | | | | |
|---|---|---|---|---|---|---|---|---|---|
| Comp.: Comparative Example | | | | | | | | | |
| Inv.: Present Invention | | | | | | | | | |

Based on the results of Table 27, it can be seen that the samples of the present invention resulted in no degradation of image quality, minimized unpleasant odors, and enhanced folding resistance. Further, it can also be seen that the samples of the present invention exhibited excellent performance, independent of differences in ambience.

### Example 6

### <<Composition of Pigment Dispersion>>

A composition having the composition below was dispersed over four hours, employing φ0.5 mm zirconia beads and thereafter filtered through a 10 µm filter, whereby a pigment dispersion was prepared.

### (Composition of Pigment Dispersion)

| | |
|---|---|
| CYANINE BLUE 4044 (being a pigment,C.I. Pigment Blue 15:3, produced by Syano Color Works, Ltd) | 10 weight parts |
| OXT-221 (being an oxetane compound, produced by TOAGOSE Co., Ltd.) | 86 weight parts |
| AJISTER PB822 (being a pigment dispersing agent, produced by Ajinomoto Finetechno Co.) | 4 weight parts |

### (Preparation of Actinic Radiation Curable Ink-Jet Ink)

By employing the pigment dispersion prepared as above, inks were prepared according to the formulations described in Table 26. The added amounts were expressed in percent by weight. Incidentally, all the additives except for the pigment dispersion, were blended, and complete dissolution was confirmed. Thereafter, the resulting solution was added little by little to the above pigment dispersion and the resulting mixture was vigorously stirred, and then filtered through a 0.8 µm filter. Incidentally, pre-filtration was performed employing a 10 µm filter as a pre-treatment. During the above filtration process, no pressure loss was generated and a sufficient filtration rate was assured.

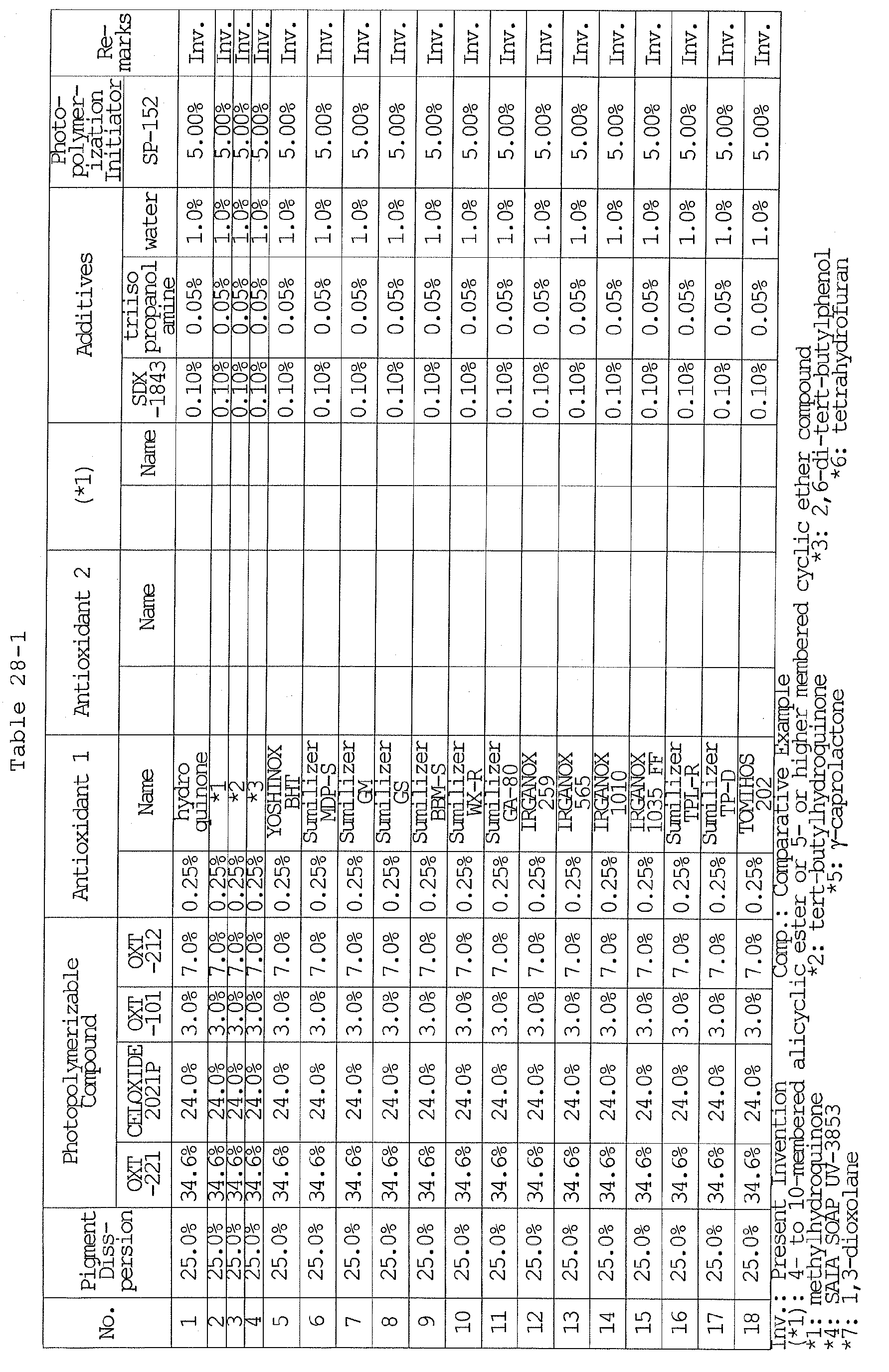

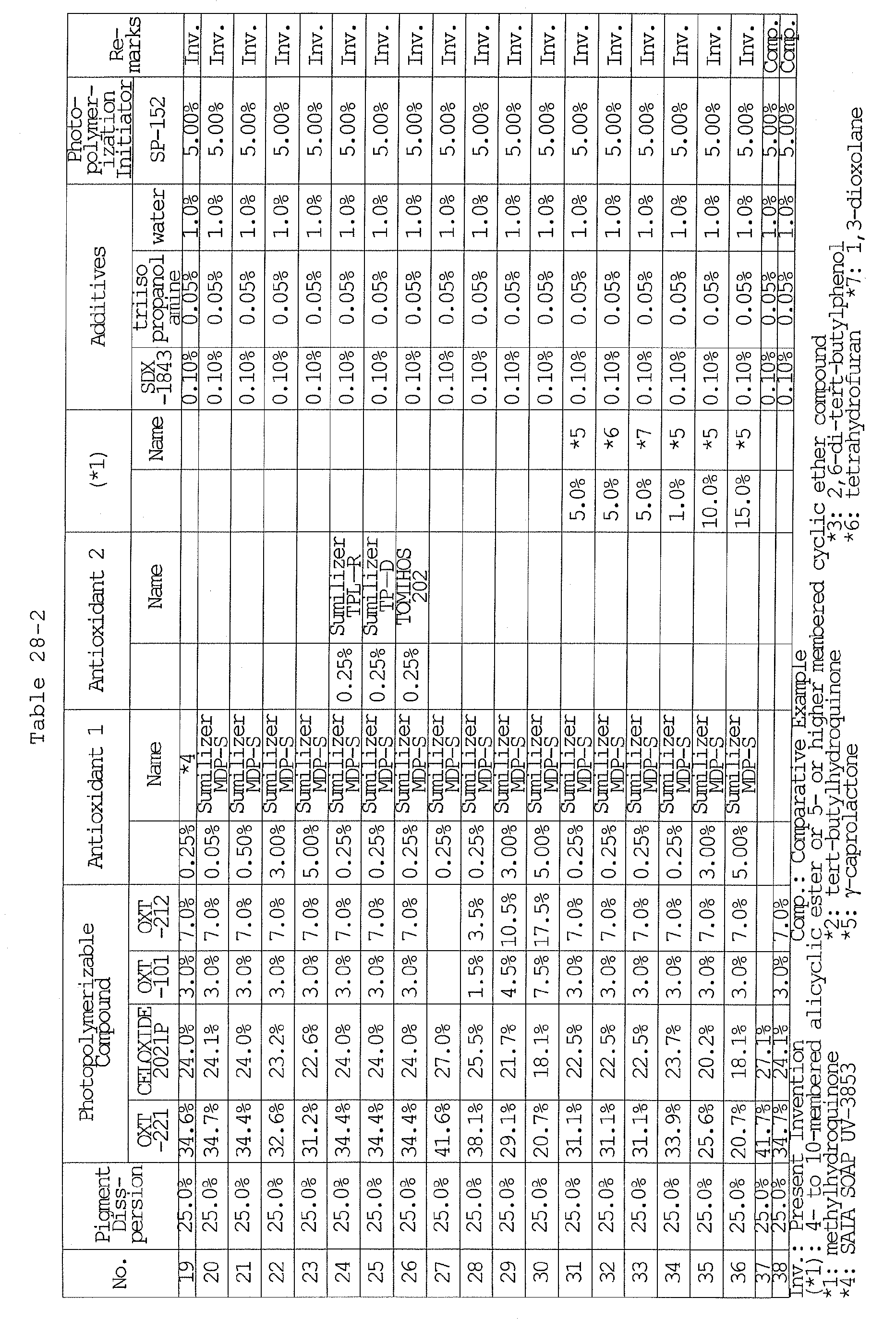

The used compounds listed in the above table are as follows.
SP152: ADEKA OPTOMART 152, a sulfonium salt, produced by Asahi Denka Kogyo K.K.
SDX-1843: produced by Asahi Denka Kogyo K.K.
YOSHINOX BHT: 2,6-di-t-butyl-p-cresol
SUMILIZER GM: 2-t-butyl-6-(3-t-butyl-2-hydroxy-5-methylbenzyl)-4-methylphenyl acrylate, produced by Sumitomo Chemical Co., Ltd.
SUMILIZER GS: 2-[1-(2-hydroxy-3,5-di-t-pentylphenyl)ethyl]-4,6-di-t-pentylphenyl acrylate, produced by Sumitomo Chemical Co., Ltd.
SUMILIZER BBM-S: 4,4'-butylidene-bis(6-t-butyl-3-methylphenol), produced by Sumitomo Chemical Co., Ltd.
SUMILIZER WX-R: 4,4'-thiobis(6-t-butyl-3-methylphenol), produced by Sumitomo Chemical Co., Ltd.
SUMILIZER GA-80: 3,9-bis[2-[3-(3-t-butyl-4-hydroxy-5-methylphenyl)propinyloxy]-1,1-dimethylethyl]-2,4,8,10-tetraoxaspiro[5.5]undecane, produced by Sumitomo Chemical Co./, Ltd.
IRGANOX 259: 1,6-hexanediol-bis[3-(3,5-di-t-butyl-4-hydroxyphenyl)propionate], produced by Ciba Specialty Chemicals Co.
IRGANOX 565: 2,4-bis-n-octylthio)-6-(4-hydroxy-3,5-di-t-butylanilino)-1,3,5-triazine, produced by Ciba Specialty Chemicals Co.
IRGANOX 1010: pentaerythrityl·tetrakis[3-(3,5-di-t-butyl-4-hydroxyphenyl)propionate], produced by Ciba Specialty Chemicals Co.
IRGANOX 1035FF: 2,2-thio-diethylenebis[3-(3,5-di-t-butyl-4-hydroxyphenyl)propionate], produced by Ciba Specialty Chemicals Co.
SUMILIZER TPL-R: dilauryl-3,3'-t-hiodiprppionate, produced by Sumitomo Chemical Co., Ltd.
SUMILIZER TPL-R: pentaerythrityltetrakis(3-laurylpropionate), produced by Sumitomo Chemical Co., Ltd.
TOMIPHOS 202: tris(2,4-di-t-butylphenyl)phosphite, produced by
   API Corp.
SAIA SOAP UV-3853: 2,2,6,6-tetramethyl-4-piperydyl unsaturated fatty acid ester having 12 - 21 and 18 carbon atoms produced by Sun Chemical Co.

### (Evaluation of Abrasion Resistance and Folding Resistance)

Each of the inks prepared as above was loaded into the ink-jet recording apparatus provided with piezo type ink jet nozzles constituted as in Fig. 1, and solid images were recorded onto a PET base according to the method below. The ink feeding system was composed of an ink tank, a pre-chamber ink tank just prior to the head, piping fitted with a filter, and piezo heads. The portion from the pre-chamber tank to the head was insulated against heat and heated to 50 °C. The piezo heads were driven so that multi-size dots of a droplet volume of 2 - 15 pl were ejected to result in a resolution of 730 x 730 dpi, and the above actinic radiation curable ink-jet ink was continuously ejected. Further, recording materials were heated to 50 °C employing a plate heater. After deposition of ink droplets, curing was instantaneously performed (less than 0.5 second after deposition), employing radiation sources, namely high pressure mercury lamps VZero 085 (produced by INTEGRATION TECHNOLOGY Co.). After image recording, the thickness of the total ink layer was determined, being approximately 14 µm. Incidentally, ink-jet images were formed based on the above method at an ambience of 23 °C and 60 percent relative humidity.

Unpleasant odors, abrasion resistance, and folding resistance of the resulting solid images were evaluated. Table 29 shows the results.

### (Abrasion Resistance)

3: even though strongly rubbed with a finger nail, no abrasion was resulted
2: when rubbed with a finger nail, slight abrasion was resulted, but was still at a commercially viable level
1: when lightly rubbed with a finger nail, abrasion was resulted

| No. after | Unpleasant Odors | | Abrasion Resistance | Folding Resistance | | Remarks |
|---|---|---|---|---|---|---|
| | Immediately afterImage Formation | One Hour after Image Formation | | Immediately after Image Formation | One Hour after Image Formation | |
| 1 | 4 | 5 | 2 | 5 | 4 | Inv. |
| 2 | 4 | 5 | 2 | 5 | 4 | Inv. |
| 3 | 4 | 5 | 2 | 5 | 4 | Inv. |
| 4 | 4 | 5 | 2 | 5 | 4 | Inv. |
| 5 | 4 | 5 | 2 | 5 | 4 | Inv. |
| 6 | 4 | 5 | 2 | 5 | 4 | Inv. |
| 7 | 4 | 5 | 2 | 5 | 4 | Inv. |
| 8 | 4 | 5 | 2 | 5 | 4 | Inv. |
| 9 | 4 | 5 | 2 | 5 | 4 | Inv. |
| 10 | 4 | 5 | 2 | 5 | 4 | Inv. |
| 11 | 4 | 5 | 2 | 5 | 4 | Inv. |
| 12 | 4 | 5 | 2 | 5 | 4 | Inv. |
| 13 | 4 | 5 | 2 | 5 | 4 | Inv. |
| 14 | 4 | 5 | 2 | 5 | 4 | Inv. |
| 15 | 4 | 5 | 2 | 5 | 4 | Inv. |
| 16 | 4 | 4 | 2 | 5 | 4 | Inv. |
| 17 | 4 | 4 | 2 | 5 | 4 | Inv. |
| 18 | 4 | 4 | 2 | 5 | 4 | Inv. |
| 19 | 4 | 4 | 2 | 5 | 4 | Inv. |
| 20 | 4 | 4 | 2 | 5 | 4 | Inv. |
| 21 | 4 | 5 | 2 | 5 | 4 | Inv. |
| 22 | 5 | 5 | 2 | 5 | 4 | Inv. |
| 23 | 5 | 5 | 2 | 5 | 4 | Inv. |
| 24 | 5 | 5 | 2 | 5 | 4 | Inv. |
| 25 | 5 | 5 | 2 | 5 | 4 | Inv. |
| 26 | 5 | 5 | 2 | 5 | 4 | Inv. |
| 27 | 4 | 5 | 2 | 2 | 2 | Inv. |
| 28 | 4 | 5 | 2 | 4 | 4 | Inv. |
| 29 | 4 | 4 | 2 | 5 | 5 | Inv. |
| 30 | 3 | 3 | 2 | 5 | 5 | Inv. |
| 31 | 4 | 5 | 3 | 5 | 5 | Inv. |
| 32 | 4 | 5 | 3 | 5 | 5 | Inv. |
| 33 | 4 | 5 | 3 | 5 | 5 | Inv. |
| 34 | 4 | 5 | 3 | 5 | 5 | Inv. |
| 35 | 4 | 4 | 3 | 5 | 5 | Inv. |
| 36 | 3 | 3 | 3 | 5 | 5 | Inv. |
| 37 | 2 | 3 | 2 | 2 | 2 | Comp. |
| 38 | 1 | 2 | 2 | 5 | 4 | Comp. |

| | | | | | | |
|---|---|---|---|---|---|---|
| Inv.: Present Invention | | | | | | |
| Comp.: Comparative Example | | | | | | |

As can be seen from Table 29, the samples of the present invention minimized unpleasant odors and exhibited excellent abrasion resistance as well as folding resistance.

## Claims

1. A photocurable composition comprising a photopolymerizable compound, a photoinitiator, a compound selected from the group consisting of a deodorizer, a perfume and an antioxidant.

2. The photocurable composition of claim 1, wherein the photopolymerizable compound is a radical photopolymerizable monomer.

3. The photocurable composition of claim 1, wherein the photopolymerizable compound is an epoxy compound or a compound having an oxetane ring in the molecule.

4. The photocurable composition of claim 1 or 3, comprising the antioxidant, wherein the photopolymerizable compound is an epoxy compound or a compound having an oxetane ring in the molecule.

5. The photocurable composition according to any of claims 1 to 4, wherein a content of the antioxidant is 0.01 to 1 weight % based on the total weight of the photocurable composition.

6. The photocurable composition according to any of claims 1 to 5, wherein the perfume is linalool or geranyl acetate.

7. The photocurable composition of claim 6, wherein a content of linalool or geranyl acetate is 0.01 to 10 weight% based on the total weight of the photocurable composition.

8. The photocurable composition of claim 3 or 4, wherein the oxetane ring has a substituent in the 2-position of the oxetane ring.

9. The photocurable composition of claim 3 or 4, wherein the epoxy compound is an epoxidized fatty acid ester or an epoxidized fatty acid glyceride.

10. The photocurable composition of claim 3 or 4, wherein the epoxy compound is an epoxidized fatty acid ester.

11. The photocurable composition of claim 10, wherein the epoxidized fatty acid ester is represented by Formula (A): 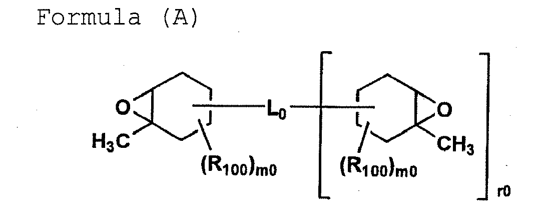 wherein R₁₀₀ is a substituent; m0 is an integer of 0 to 2; r0 is an integer of 1 to 3; and L₀ is a single bond or a linking group of 1 to 15 carbon atoms having a valence of (r0 + 1), provided that the linking group may contain an oxygen atom or a sulfur atom in a main chain of the linking group.

12. The photocurable composition of claim 11, wherein the epoxidized fatty acid ester represented by Formula (A) is further represented by Formulas (I), (II), (III) or (III): 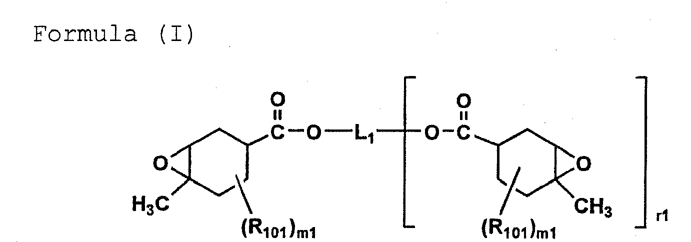 wherein R₁₀₁ is a substituent; m1 is an integer of 0 to 2; r1 is an integer of 1 to 3; and L₁ is a single bond or a linking group of 1 to 15 carbon atoms having a valence of (r1 + 1), provided that the linking group may contain an oxygen atom or a sulfur atom in a main chain of the linking group, 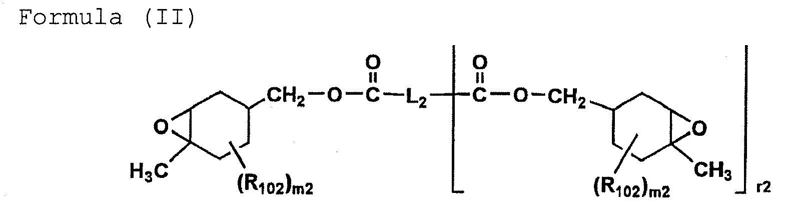 wherein R₁₀₂ is a substituent; m2 is an integer of 0 to 2; r2 is an integer of 1 to 3; and L₂ is a single bond or a linking group of 1 to 15 carbon atoms having a valence of (r2 + 1), provided that the linking group may contain an oxygen atom or a sulfur atom in a main chain of the linking group, 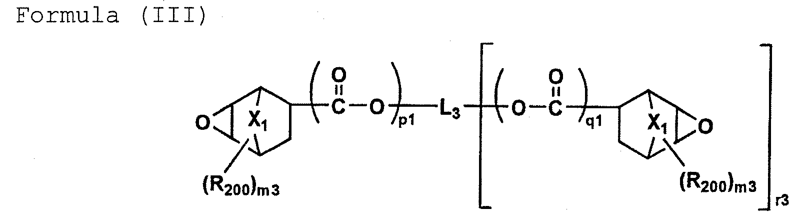 wherein R₂₀₀ is a substituent which is substituted at a position of other than α or β position of an oxirane ring of Formula (III); m3 is an integer of 0 to 2; X₁ is - (CH₂)ₙ₀ -, or ― (O)ₙ₀ ―, n0 is an integer of 0 or 1; p1 and q1 each is an integer of 0 or 1, with the proviso that both p1 and q1 are not 0 at the same time; r3 is an integer of 1 to 3; and L₃ is a single bond or a linking group of 1 to 15 carbon atoms having a valence of (r3 + 1), provided that the linking group may contain an oxygen atom or a sulfur atom in a main chain of the linking group, 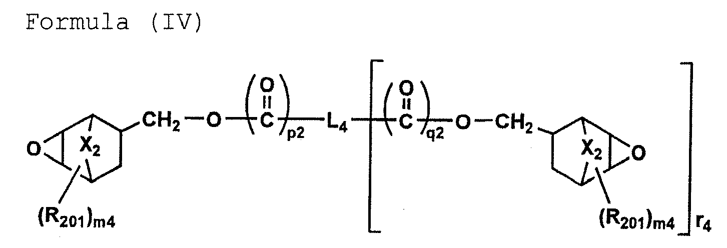 wherein R₂₀₁ is a substituent which is substituted at a position of other than α or β position of an oxirane ring of Formula (IV); m4 is an integer of 0 to 2; X₂ is - (CH₂)ₙ₁ -, or - (O)ₙ₁ -, n1 is an integer of 0 or 1; p2 and q2 each is an integer of 0 or 1, with the proviso that both p2 and q2 are not 0 at the same time; r4 is an integer of 1 to 3; and L₄ is a single bond or a linking group of 1 to 15 carbon atoms having a valence of (r4 + 1), provided that the linking group may contain an oxygen atom or a sulfur atom in a main chain of the linking group.

13. The photocurable composition according to any of claims 1 to 12, further comprising an alicyclic ester compound having a 4 to 10 membered ring or a cyclic ether compound having a 5 or more membered ring.

14. The photocurable composition according to any of claims 1 to 13, wherein the antioxidant is a phenol compound.

15. The photocurable composition according to any of claims 1 to 14, wherein the photoinitiator is a photo-acid generating agent having an onium salt structure, and the photo-acid generating agent does not produce benzene by irradiation with active rays.

16. The photocurable composition of claim 15, wherein the photoinitiator is a photo-acid generating agent is a sulfonium salt.

17. The photocurable composition of claim 16, wherein the sulfonium salt is represented by Formulas (1), (2), (3) or (4) : 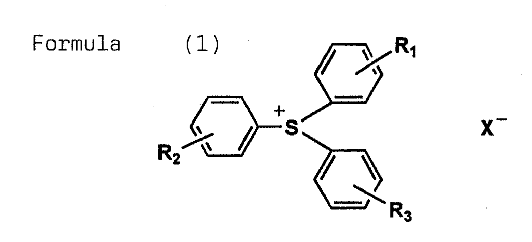 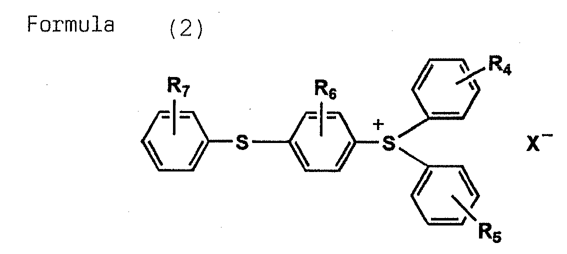 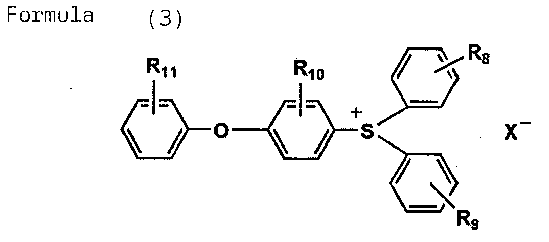 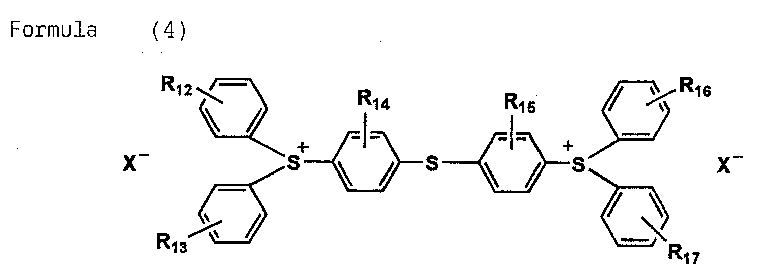 wherein R₁ to R₁₇ each is a hydrogen atom or a substituent, with the proviso that a set of R₁ to R₃, a set of R₄ to R₇, a set of R₈ to R₁₁ and a set of R₁₂ to R₁₇ each is not a hydrogen atom at the same time; and X⁻ is not a nucleophilic anion group.

18. The photocurable composition of claim 16, wherein the sulfonium salt is selected form the group consisting of Formulas (5) to (13): 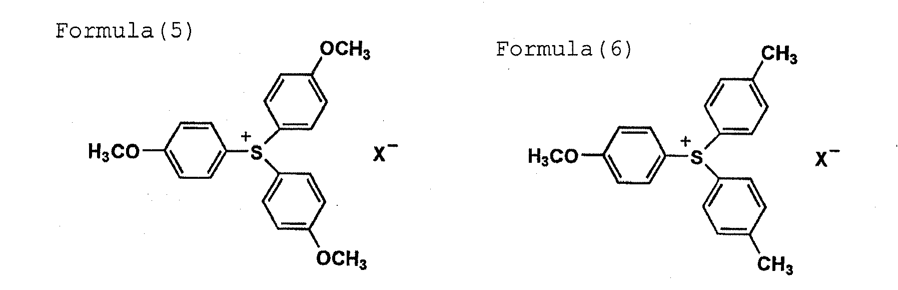 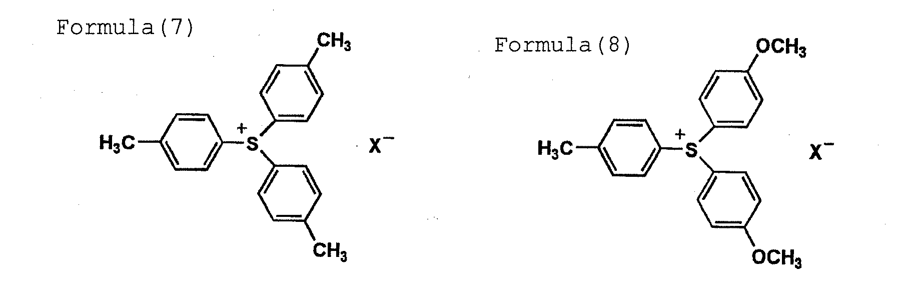 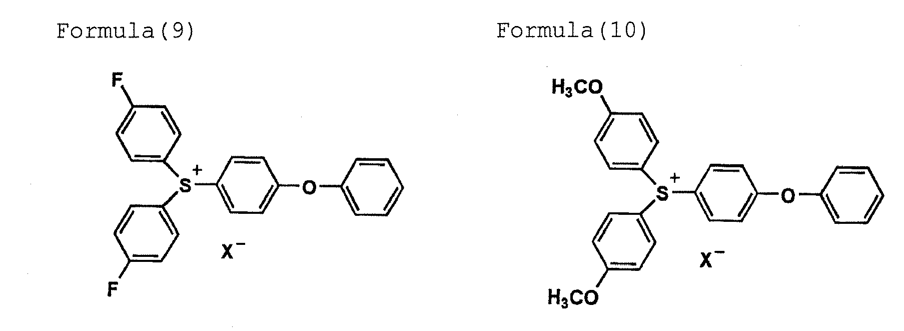 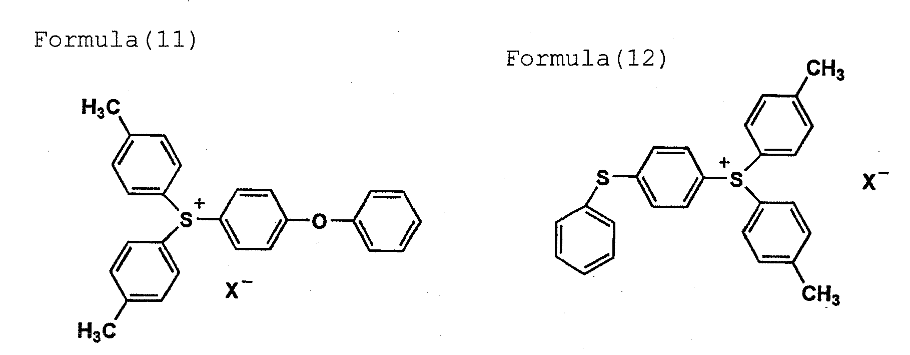 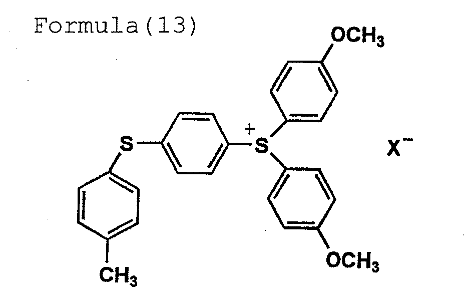 wherein X⁻ is not a nucleophilic anion group.

19. The photocurable composition according to any of claims 1 to 18, wherein a viscosity of the photocurable composition at 25 °C is 7 to 40 mPa.s.

20. An ink-jet ink comprising the photocurable composition according to any of claims 1 to 19 and a pigment.

21. A method of forming an image comprising the steps of:
ejecting droplets of the photocurable composition according to any of claims 1 to 19 from a plurality of nozzles of an ink-jet recording head onto a recording sheet to form an image; and
irradiating the formed image with actinic rays to cure the image,
wherein the irradiating step is carried out between 0.001 and 1.0 second after the ejected droplets reach the recording sheet.

22. The method of forming an image of claim 21,
wherein the droplets of the photocurable composition ejected from each nozzle of the ink-jet recording head have a volume of 2 to 20 pl.

23. An ink-jet recording apparatus for carrying out the image forming method of claim 21 or 22.
wherein the photocurable composition and the ink-jet recording head are heated at 35 to 100 °C prior to ejecting the photocurable composition from a plurality of nozzles of the ink-jet recording head.

24. An ink-jet recording apparatus for carrying out the image forming method according to any of claims 21 to 23.
wherein the photocurable composition and the ink-jet recording head are heated at 35 to 60 °C prior to ejecting the photocurable composition from a plurality of nozzles of the ink-jet recording head.
